# EUROPEAN PATENT APPLICATION

(11) **EP 4 852 174 A1**
(43) Date of publication of application: **09.12.2026**
(21) Application number: 24923122.6
(22) Date of filing: 15.04.2024
(51) Int. Cl.: H01M 50/244, H01M 50/249, H01M 50/289, H01M 50/233, H01M 10/625, H01M 10/6556, H01M 10/6568, H01M 10/613, H01M 10/615

(54) **BATTERY AND ELECTRICAL DEVICE**

(30) Priority: 06.02.2024 CN 202410172517
(71) Applicant: Contemporary Amperex Technology Co., Limited, Ningde, Fujian 352100 (CN)
(72) Inventor: ZHANG, Wei, Ningde, Fujian 352100 (CN); ZHAO, Pengbo, Ningde, Fujian 352100 (CN); HUANG, Le, Ningde, Fujian 352100 (CN); YU, Qian, Ningde, Fujian 352100 (CN)
(74) Representative: Gong, Jinping
(86) International application number: PCT/CN2024/087806
(87) International publication number: WO 2025/166897

(57) **Abstract**

Disclosed are a battery (1000) and an electrical device. The battery (1000) comprises a box (300), a battery cell (201), and a heat exchange member (100). The box (300) comprises a box body (301), the box body (301) having an accommodating cavity (3011), and a groove (3014) being formed in a wall body of the box body (301). The battery cell (201) is disposed in the accommodating cavity (3011). The heat exchange member (100) is at least partially embedded in the groove (3014) and attached to the wall body, and is used for heat exchange with the battery cell (201).

## Description

### CROSS-REFERENCE TO RELATED APPLICATIONS

The present application is filed based on and claims priority to Chinese Patent Application No. 202410172517.2, filed on February 6, 2024, the entire content of which is incorporated herein by reference.

### TECHNICAL FIELD

The present application relates to the technical field of batteries, and in particular, to a battery and an electrical device.

### BACKGROUND

In recent years, new energy vehicles have made a leap forward in development. In the field of electric vehicles, batteries, as power sources of electric vehicles, play an irreplaceable and important role. Currently, in order to reduce costs and increase efficiency, the strength of the box is often reduced, which means that the overall reliability of the battery needs to be further improved.

### SUMMARY

Embodiments of the present application provide a battery and an electrical device, facilitating improving the reliability of the battery.

In a first aspect, embodiments of the present application provide a battery, including a box, a battery cell, and a heat exchange member, where the box includes a box body, the box body is provided with an accommodating cavity, and a groove is formed in a wall body of the box body; the battery cell is disposed in the accommodating cavity; and at least part of the heat exchange member is embedded in the groove and attached to the wall body for heat exchange with the battery cell.

In the above technical solution, on the one hand, after the box of the battery is provided with the groove, the concave-convex structure of the box itself improves the strength of the box. Meanwhile, the groove structure of the box is filled with the heat exchange member, and the heat exchange member can act as a reinforcing rib of the box to further improve the strength of the box, thereby improving the reliability of the battery. On the other hand, the heat exchange member is embedded in the groove, occupying the space of the box, so that the two parts share one space, thereby making the battery structure more compact and reliable, also improving the volumetric energy density of the battery, and further improving the reliability of the battery.

In some embodiments, the heat exchange member is completely accommodated in the groove, and an upper surface of the heat exchange member in a thickness direction is flush with an opening of the groove.

In the above technical solution, by completely accommodating the heat exchange member in the groove, the heat exchange member can be effectively protected, which can prevent damage of the heat exchange member caused when the part of the heat exchange member not accommodated in the groove is compressed. Thus, the protected heat exchange member can reliably exchange heat with the battery cell, which can ensure the heat exchange efficiency of the battery cell. Furthermore, by making the upper surface of the heat exchange member in the thickness direction flush with the opening of the groove, the volume of the heat exchange member can be effectively increased while the heat exchange member is protected, which can increase the heat exchange amount between the heat exchange member and the battery cell, thereby enhancing the heat exchange effect between the heat exchange member and the battery cell. Moreover, since the upper surface of the heat exchange member in the thickness direction is flush with the opening of the groove, the wall body of the box body can be relatively flat, so that the wall body of the box body accommodating the heat exchange member is attractive. Additionally, the battery cell placed in the accommodating cavity is more stable.

In some embodiments, the box body includes: a box main body, the box main body is defined, in an enclosing mode, by a plurality of box walls, at least one of the plurality of box walls forms the groove, the groove is located on an inner side of the box wall close to the accommodating cavity and/or on an outer side thereof away from the accommodating cavity, and when the groove is located on the inner side, the groove is in communication with the accommodating cavity.

In the above technical solution, on the one hand, by forming the groove in the box wall of the box main body, the structural strength of the box main body can be effectively improved, and after the heat exchange member is embedded in the groove of the box wall, the structural strength of the box main body can be further improved. When the battery is hit by a side impact, the box main body can effectively protect the battery cell inside the box main body. On the other hand, the heat exchange member is embedded in the groove of the box wall, which can effectively dissipate heat from the battery cell close to the box wall. Moreover, after the heat exchange member absorbs the heat from the battery cell, the heat can be effectively transferred to the box wall. The box wall can also effectively transfer the heat to the external space. In this way, the heat is continuously transferred towards the box wall, which can improve the heat exchange effect on the battery cell.

In some embodiments, the box body includes a bottom plate and a plurality of side plates arranged around a periphery of the bottom plate and connected end to end in sequence, the groove is formed in the bottom plate, and the box main body is an integrally stamped part; or, the plurality of side plates are all profile frames, and the bottom plate is an integrally stamped part.

In the above technical solution, two different structures of the box main body are constructed. One structure of the box main body improves the overall structural strength of the box main body by making the box main body as the integrally stamped part, and the structural strength of the bottom plate is further improved by the groove formed in the bottom plate and the heat exchange member embedded in the groove, which can effectively improve the structural strength of the box main body and effectively protect the battery cell inside the box main body. The other structure of the box main body makes the side plate as the profile frame, which can effectively improve the structural strength of the box main body in a circumferential direction. Further, the structural strength of the bottom plate is improved by the groove formed in the bottom plate and the heat exchange member embedded in the groove. In addition, the above two different structures of the box main body both have the advantages of a simple structure and low production costs.

In some embodiments, the box body includes: a box main body, which is in a semi-closed structure with an opening at one end; and a cover plate, which is connected to the box main body and closes the opening, the groove is formed in the cover plate, and the groove is located on an inner side of the cover plate close to the accommodating cavity or on an outer side thereof away from the accommodating cavity.

In the above technical solution, the cover plate with the groove and the heat exchange member embedded in the groove are disposed, which can effectively improve the structural strength of the cover plate, and the heat exchange member disposed in the groove can also effectively improve the heat exchange efficiency of the top of the battery cell.

In some embodiments, the cover plate is an integrally stamped part.

In the above technical solution, the cover plate is simple and convenient to process, and the shape of the groove can be designed according to the actual situation, with high flexibility. In addition, the groove formed by integral stamping has a good sealing effect and thus can effectively protect the heat exchange member.

In some embodiments, the box main body includes a bottom plate and a plurality of side plates arranged around a periphery of the bottom plate and connected end to end in sequence, and the side plate and the bottom plate are made of a same material and are separately formed and matched by welding.

In the above technical solution, the side plate and the bottom plate are made of the same material. When the side plate and the bottom plate are welded, the welding effect is good and the structural strength after welding is high. By increasing the connection strength between the side plate and the bottom plate, the structural strength of the box main body can be improved.

In some embodiments, the heat exchange member includes at least one heat exchange tube, and when a plurality of heat exchange tubes are disposed, each heat exchange tube defines a heat exchange flow channel on an inner side thereof.

In the above technical solution, the heat exchange tube has a simple structure and low production costs, and the shape of the heat exchange member can be effectively changed. Therefore, the heat exchange tube can be bent well to effectively arrange the heat exchange flow channel in the battery. In addition, the heat exchange tube has better structural strength. After the heat exchange tube is embedded in the wall body, the heat exchange tube can effectively improve the structural strength of the wall body.

In some embodiments, the heat exchange tube is formed by bending a single tube, and optionally, the heat exchange tube is bent in an arc at a bending position.

In the above technical solution, on the one hand, the heat exchange tube can be effectively bent according to the actual heat dissipation requirements to construct heat exchange tube layouts with different densities or directions of the heat exchange tube, so that a plurality of regions with different heat exchange effects are in the entire heat exchange region, thereby enabling the heat exchange member to have different heat exchange effects on the different regions and improving the flexibility of heat exchange of the heat exchange member. On the other hand, due to different bending states of the heat exchange tube, the flow rate and pressure of the fluid in the heat exchange flow channel can also be effectively adjusted, so that the fluid can absorb the heat of the battery cell more fully, thereby improving the heat dissipation effect of the battery cell. By disposing the heat exchange tube to be bent in an arc at the bending position, the flow resistance of the fluid can be reduced, and the pressure drop can be reduced, so that the flow rate of the heat exchange fluid in the heat exchange flow channel can be increased, thereby improving the heat exchange efficiency of the heat exchange member.

In some embodiments, the groove is in clearance fit with the heat exchange tube and extends in a length direction of the heat exchange tube.

In the above technical solution, by making the groove in clearance fit with the heat exchange tube, it is easy to disassemble and assemble the heat exchange tube, which, on the one hand, can improve the assembly efficiency of the heat exchange tube, and on the other hand, can improve the replacement or maintenance efficiency of the heat exchange tube. By making the groove extend in the length direction of the heat exchange tube, the shape of the groove is the same as the shape of the heat exchange tube. Thus, after the heat exchange tube is assembled into the groove, the groove can effectively restrict the position of the heat exchange tube, so that the heat exchange tube is less likely to move or shake, and the position of the heat exchange tube is relatively stable, which can effectively dissipate heat from the battery cell.

In some embodiments, the heat exchange tube is a flat tube or a harmonica-shaped tube.

In the above technical solution, by disposing the flat tube or the harmonica-shaped tube with a relatively small thickness, the heat exchange tube can be effectively embedded in the wall body of the box body, which is not prone to increase the thickness of the wall body, and also improves the structural strength of the wall body. In addition, the flat tube or the harmonica-shaped tube has a simple structure and low production costs, which can effectively reduce the production costs of the battery.

In some embodiments, the box further includes a beam body, the beam body is disposed in the box body, and a channel allowing the heat exchange tube to pass through is constructed between the beam body and the box body.

In the above technical solution, the beam body is disposed in the box body, and the channel allowing the heat exchange tube to pass through is constructed between the beam body and the box body, which facilitates communication of the heat exchange tube and an external water pipe to form a cooling loop.

In some embodiments, the beam body is provided with a first recess, and/or the box body is provided with a second recess, and the first recess and/or the second recess are/is constructed as the channel.

In the above technical solution, the channel allowing the heat exchange tube to pass through can be constructed between the beam body and the box body according to actual requirements, which facilitates communication of the heat exchange tube and the external water pipe to form the cooling loop.

In some embodiments, the beam body is a hollow beam, and part of the beam body protrudes to an inner side of the hollow beam to form the first recess.

In the above technical solution, by disposing the beam body as the hollow beam, the weight of the beam body can be reduced, thereby reducing the weight of the battery. Part of the beam body protrudes to the inner side of the hollow beam to form the first recess. The processing mode is simple, the production costs are low, and the constructed first recess is stable in structure and not prone to compress the heat exchange tube, thus allowing the fluid to circulate smoothly in the heat exchange tube.

In some embodiments, the beam body is an expansion beam, the expansion beam can expand or contract in a second direction, or the beam body is a non-metallic beam body.

In the above technical solution, by disposing the beam body as the expansion beam, a mounting space can be provided for the volume change of the battery cell caused by thermal expansion and contraction; and by making the beam body as the non-metallic beam body, the weight of the beam body can be reduced, which thus can reduce the weight of the battery, and also provide good insulation from the battery cell.

In some embodiments, the heat exchange member includes a first heat exchange flow channel, and the first heat exchange flow channel includes a first heat exchange segment and a second heat exchange segment; and the second heat exchange segment is bent to form a U-shaped region, and the first heat exchange segment is bent to be disposed in the U-shaped region, and bent to be connected to the second heat exchange segment.

In the above technical solution, since battery cells arranged on a periphery of the battery are closer to the side wall of the box than inner battery cells, the battery cells on the periphery of the battery can more easily dissipate heat to the outside through structures such as the side wall or end plates or the like of the battery and are less affected by the heat dissipation of adjacent battery cells. Conversely, the inner battery cells face greater difficulty in dissipating heat and are more significantly affected by the heat dissipation of adjacent battery cells. This results in different heat dissipation conditions for battery cells in different positions, leading to an uneven temperature distribution between the peripheral battery cells and the inner battery cells in the battery after operation of the battery. This results in poor stability and the situation that the battery performance is prone to degradation during operation of the battery. In view of this, in the present application, the second heat exchange segment is bent to form the U-shaped region, and the first heat exchange segment is bent to be disposed in the U-shaped region. When the heat exchange member of this embodiment is used to exchange heat with a battery assembly, the U-shaped region formed by the peripheral second heat exchange segment is made to face the peripheral battery cells of the battery, and the first heat exchange segment in the U-shaped region is made to face the inner battery cells, so that the heat exchange member can compensate for the internal and external temperature difference caused by the heat exchange between the peripheral battery cells and the environment, which makes the heat exchange effects of the battery cells on the periphery of the battery assembly and the battery cells inside the battery assembly more consistent, and improves the temperature uniformity of the battery, thereby prolonging the service life of the battery to a certain extent.

In some embodiments, the second heat exchange segment is located on an outermost side of the first heat exchange flow channel in a circumferential direction.

In the above technical solution, by disposing the second heat exchange segment to be located on the outermost side of the first heat exchange flow channel in the circumferential direction, the second heat exchange segment can exchange heat with the circumferential direction of the outer side of the battery assembly, which is beneficial to alleviating the temperature difference of the battery assembly in different environments, thereby prolonging the service life of the battery assembly to a certain extent.

In some embodiments, the first heat exchange segment and the second heat exchange segment are bent in a same plane.

In the above technical solution, by disposing the first heat exchange segment and the second heat exchange segment to be bent in the same plane, the first heat exchange flow channel can exchange heat with the battery in the same plane, which thus can simplify the structure of the first heat exchange flow channel, reduce the production difficulty of the first heat exchange flow channel, and also reduce the space occupied by the first heat exchange flow channel, thereby increasing the volumetric energy density of the battery.

In some embodiments, the first heat exchange segment is connected downstream of the second heat exchange segment in a fluid flow direction; or, the heat exchange member is configured such that: when the battery assembly of the battery is heated, the first heat exchange segment is connected downstream of the second heat exchange segment in the fluid flow direction; and when the battery assembly of the battery is cooled, the first heat exchange segment is connected upstream of the second heat exchange segment in the fluid flow direction.

In the above technical solution, by disposing the first heat exchange segment to be connected downstream of the second heat exchange segment in the fluid flow direction, the first heat exchange flow channel preferentially exchanges heat with the circumferential direction of the outer side of the battery, which thus is beneficial to alleviating the temperature difference of the battery in different environments, thereby prolonging the service life of the battery to a certain extent. The heat exchange member is configured such that: when the battery assembly of the battery is heated, the first heat exchange segment is connected downstream of the second heat exchange segment in the fluid flow direction; and when the battery assembly of the battery is cooled, the first heat exchange segment is connected upstream of the second heat exchange segment in the fluid flow direction, so that the heat exchange effect on the battery can be further improved, and the temperature uniformity of the battery assembly is improved.

In some embodiments, the heat exchange member is provided with one or more heat exchange flow channels. When a plurality of heat exchange flow channels are disposed, the plurality of heat exchange flow channels are spaced apart from each other in a first direction or arranged around each other. At least one of the heat exchange flow channels is formed as a first heat exchange flow channel, and the plurality of heat exchange flow channels are arranged in parallel.

In the above technical solution, the heat exchange member is disposed to be provided with the one or more heat exchange flow channels, and the plurality of heat exchange flow channels are spaced apart from each other in the first direction or arranged around each other, so that the diversity of the heat exchange flow channel can be increased, thereby improving the adaptability of the heat exchange member and enabling the heat exchange member to meet different requirements of the battery, thereby improving the market competitiveness of the battery; and meanwhile, the plurality of heat exchange flow channels are arranged in parallel, which can enable the plurality of heat exchange flow channels to exchange heat simultaneously, thereby shortening the heat exchange time of the heat exchange member and improving the heat exchange efficiency. In some embodiments, the plurality of heat exchange flow channels are spaced apart from each other in the first direction, and two heat exchange flow channels located at two ends in the first direction are both the first heat exchange flow channel; and the two first heat exchange flow channels are arranged symmetrically about a centerline of the heat exchange member in a second direction, where the second direction and the first direction are arranged at an angle.

In the above technical solution, by disposing the two symmetrically arranged first heat exchange flow channels, liquid can be input from both sides at the same time, and the liquid input flow rate is increased, so that the length of a single heat exchange flow channel can be shortened, the pressure drop in a single heat exchange flow channel can be reduced, and thus the heat exchange efficiency can be improved.

In some embodiments, the plurality of heat exchange flow channels are arranged symmetrically about the centerline of the heat exchange member in the second direction.

In the above technical solution, by disposing the plurality of heat exchange flow channels to be arranged symmetrically about the centerline of the heat exchange member in the second direction, the plurality of heat exchange flow channels can exchange heat with the battery assembly simultaneously, thereby improving the heat exchange efficiency. Meanwhile, the temperature consistency of the battery assembly and two symmetrically arranged heat exchange regions of the heat exchange member can also be improved, thereby further improving the temperature uniformity of the battery assembly.

In some embodiments, the plurality of heat exchange flow channels further include at least one second heat exchange flow channel, and the second heat exchange flow channel is disposed between the two first heat exchange flow channels, where a structure of any second heat exchange flow channel is same as or different from a structure of the first heat exchange flow channel.

In the above technical solution, by disposing the at least one second heat exchange flow channel, the arrangement diversity of the heat exchange flow channel can be improved, so that the heat exchange member can better exchange heat with the battery assembly, thereby improving the heat exchange effect of the heat exchange member.

In some embodiments, the second heat exchange flow channel includes a plurality of fourth heat exchange segments, and the plurality of fourth heat exchange segments are connected in sequence, where the fourth heat exchange segment extends in the second direction, and the plurality of fourth heat exchange segments are spaced apart from each other in the first direction.

In the above technical solution, by disposing the second heat exchange flow channel to include the plurality of fourth heat exchange segments connected in sequence, the structural complexity of the second heat exchange flow channel can be reduced, which thus can reduce the production costs of the second heat exchange flow channel, thereby reducing the production costs of the heat exchange member.

In some embodiments, the heat exchange member is provided with a plurality of heat exchange flow channels, and the plurality of heat exchange flow channels include one first heat exchange flow channel and at least one third heat exchange flow channel. The third heat exchange flow channel is bent to be disposed in the U-shaped region of the first heat exchange flow channel, and the first heat exchange flow channel and the third heat exchange flow channel are bent in a same plane. Bending structures of the first heat exchange flow channel and the third heat exchange flow channel are same or different.

In the above technical solution, by disposing the plurality of heat exchange flow channels, the diversity of the heat exchange flow channel can be improved, so that the arrangement of the heat exchange flow channel can be designed according to the cooling requirement of the battery, thereby further enhancing the heat exchange effect of the heat exchange member and improving the temperature uniformity of the battery.

In some embodiments, the third heat exchange flow channel includes a U-shaped region structurally identical to the first heat exchange flow channel, and at least part of the first heat exchange segment of the first heat exchange flow channel is disposed in the U-shaped region of the third heat exchange flow channel.

In the above technical solution, the third heat exchange flow channel is disposed to include the U-shaped region structurally identical to the first heat exchange flow channel, and at least part of the first heat exchange segment of the first heat exchange flow channel is disposed in the U-shaped region of the third heat exchange flow channel, which can enable the first heat exchange flow channel and at least part of the third heat exchange flow channel to be arranged around each other. In this way, the winding mode of the heat exchange flow channel can be arranged according to the heat exchange requirements of each part of the battery assembly, thereby further enhancing the heat exchange effect of the heat exchange member and improving the temperature uniformity of the battery.

In some embodiments, the U-shaped region of the first heat exchange flow channel is located in a circumferential direction of an outermost side of the heat exchange member.

In the above technical solution, by disposing the U-shaped region of the second heat exchange segment of the first heat exchange flow channel to be located in the circumferential direction of the outermost side of the heat exchange member, the second heat exchange segment can exchange heat with the circumferential direction of the outer side of the battery, which thus is beneficial to alleviating the temperature difference of the battery in different environments, thereby prolonging the service life of the battery to a certain extent.

In a second aspect, embodiments of the present application further provide an electrical device, including the battery according to the embodiments in the first aspect of the present application.

In the above technical solution, the performance of the battery is improved, which is thus conducive to improving the power utilization performance of the electrical device in work.

Additional aspects and advantages of the present application will be partially given in the following description, and will partially become apparent from the following description, or will be understood from the practice of the present application.

### DESCRIPTION OF DRAWINGS

FIG. 1 is a schematic view of a vehicle according to some embodiments of the present application;
FIG. 2 is an exploded view of a battery according to some embodiments of the present application;
FIG. 3 is a schematic view of a battery according to some embodiments of the present application;
FIG. 4 is a top view of the battery in FIG. 3;
FIG. 5 is an exploded view of a box according to some embodiments of the present application;
FIG. 6 is a solid view of a heat exchange member placed in a box according to some embodiments of the present application;
FIG. 7 is a schematic view of a heat exchange member placed in a box according to some embodiments of the present application;
FIG. 8 is a schematic view of a heat exchange member placed in a box according to some other embodiments of the present application;
FIG. 9 is a schematic view of a battery assembly and a heat exchange member according to the first embodiment of the present application;
FIG. 10 is a schematic view of a battery assembly and a heat exchange member according to the second embodiment of the present application;
FIG. 11 is a schematic view of a battery assembly and a heat exchange member according to the third embodiment of the present application;
FIG. 12 is a schematic view of a battery assembly and a heat exchange member according to the fourth embodiment of the present application;
FIG. 13 is a schematic view of a battery assembly and a heat exchange member according to the fifth embodiment of the present application;
FIG. 14 is a partial sectional view of a battery according to another embodiment of the present application; and
FIG. 15 is a partial schematic view of a battery according to still another embodiment of the present application.

Reference numerals:
1, Vehicle;
1000, battery;
100, heat exchange member;
10, first heat exchange flow channel; 11, first heat exchange segment; 111, first heat exchange portion; 112, first bending portion; 12, second heat exchange segment; 120, U-shaped region; 121, second heat exchange portion; 122, third heat exchange portion; 123, second bending portion; 124, third bending portion; 125, fourth heat exchange portion; 126, sixth bending portion; 127, fifth heat exchange portion; 13, third heat exchange segment; 14, fourth bending portion; 15, first input/output segment; 16, fifth bending portion; 17, second input/output segment; 18, seventh bending portion;
30, second heat exchange flow channel; 31, fourth heat exchange segment; 40, third heat exchange flow channel;
200, battery assembly; 201, battery cell;
300, box; 301, box body; 3011, accommodating cavity; 3012, box main body; 3013, convex rib; 3014, groove; 302, bottom plate; 303, cover plate; 304, side plate; 305, channel; 306, beam body; 3061, first recess;
500, temperature regulating member; 501, first temperature regulating member; 502, second temperature regulating member; 503, third temperature regulating member;
2000, controller; 3000, motor.

### DETAILED DESCRIPTION

The embodiments of the present application are described in detail below, and examples of which are shown in the accompanying drawings, in which the same or similar reference numerals throughout denote the same or similar elements or elements having the same or similar functions. The embodiments described below with reference to the accompanying drawings are exemplary and are used only for explaining the present application, and are not to be construed as limiting the present application.

In the descriptions of the present application, it should be understood that orientations or positional relationships indicated by "upper", "lower", "front", "rear", "left", "right", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting the present application. In addition, the terms "first" and "second" are used for descriptive purposes only, and cannot be construed as indicating or implying relative importance or implicitly indicating the number of technical features indicated. From this, features defined as "first" and "second" may explicitly or implicitly include one or more features. In the description of the present application, "a plurality of" means two or more, unless otherwise expressly and specifically defined.

In the description of the present application, unless otherwise expressly specified and limited, the terms "mount", "interconnect", and "connect" should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the present application may be understood on a case-by-case basis.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand thereof in the market is also constantly expanding.

To ensure the safety of the battery during use, a water-cooling plate is usually disposed at the top or bottom of the battery or an air-cooling mode is used for heat dissipation. The currently used water-cooling plate is mostly a brazed liquid-cooling plate and a harmonica-shaped tube type liquid-cooling plate. The brazed liquid-cooling plate is usually made by brazing two plate-shaped structures. One plate-shaped structure has grooves stamped in it, and the other plate-shaped structure is a flat plate structure that covers the plate-shaped structure with the grooves, to jointly form a flow channel. This type of liquid-cooling plate, which is formed by welding an integrally stamped plate, bears the overall weight and is also used to regulate the temperature of a cell. However, this type of liquid-cooling plate has insufficient structural strength, which makes it prone to deformation or bending. In addition, the liquid-cooling plate has a complex structure, high production energy consumption and production costs, and large weight, which increases the overall weight of the battery, and meanwhile the liquid-cooling plate occupies a large space, consequently affecting the mounting density of the cell inside the battery and ultimately affecting the working efficiency of the battery. For batteries used in new energy vehicles, under the condition that the energy consumption remains unchanged and the size and weight of the battery are strictly limited, the maximum driving range of the new energy vehicle on a single charge mainly depends on the energy density of the battery.

Based on the above considerations, to address how to enhance the structural strength of a box while improving the production efficiency of the box, ensuring effective heat exchange, and reducing the production costs, a box for a battery is designed. The box includes a box body and a heat exchange member. A groove is formed in a wall body of the box body, and the concave-convex structure of the box itself improves the strength of the box. Meanwhile, the groove of the box is filled with the heat exchange member, and the heat exchange member can act as a reinforcing rib of the box to further improve the strength of the box, thereby improving the reliability of the battery. In addition, the heat exchange member is embedded in the groove, occupying the space of the box, so that the two parts share one space, which reduces the space inside the battery occupied by the heat exchange member, thereby making the battery structure more compact and reliable. Meanwhile, the mounting density of the cell in the battery is also improved, the volumetric energy density of the battery is also improved, and the reliability of the battery is further improved.

The box body includes a bottom plate and a cover plate. The bottom plate can be stamped to form the groove, and the heat exchange member is embedded in the groove, that is, the heat exchange member and the bottom plate together form the bottom structure of the battery. A concave-convex structure of the bottom plate itself improves the strength of the bottom plate. Meanwhile, the heat exchange member can act as a reinforcing rib of the bottom plate to further improve the strength of the bottom plate. The cover plate can also be stamped to form the groove, the heat exchange member is embedded in the groove, and the heat exchange member and the cover plate together form the top structure of the battery. A concave-convex structure of the cover plate itself improves the strength of the cover plate. Meanwhile, the heat exchange member can act as a reinforcing rib of the cover plate to further improve the strength of the cover plate.

The box disclosed in the present application can be used in an electrical device that uses the battery as a power source or in various energy storage systems that use the battery as an energy storage element. The electrical device can be but not limited to mobile phones, tablet computers, laptops, electric toys, electric tools, battery vehicles, electric vehicles, ships, spacecrafts, etc. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

For ease of description, the following embodiments are illustrated when the electrical device in an embodiment of the present application is, for example, a vehicle 1.

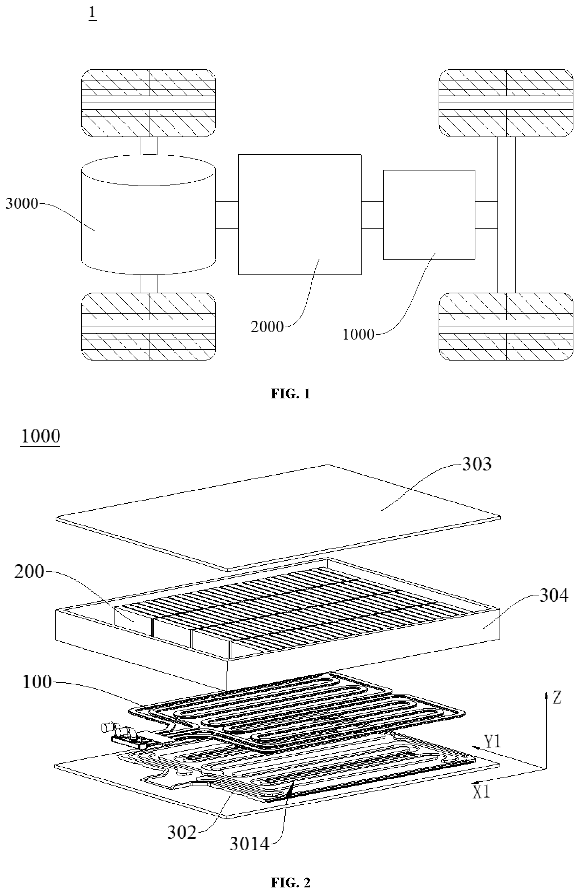

Referring to FIG. 1, FIG. 1 is a schematic diagram of a vehicle 1 provided in some embodiments of the present application. The vehicle 1 may be a fuel vehicle, a gas vehicle, or a new-energy vehicle. The new-energy vehicle may be, e.g., an all-electric vehicle, a hybrid electric vehicle, or an extended range electric vehicle. A battery 1000 is provided inside the vehicle 1. The battery 1000 may be arranged at the bottom or head or tail of the vehicle 1. The battery 1000 may be configured to power the vehicle 1, for example, the battery 1000 may serve as an operating power source of the vehicle 1. The vehicle 1 may further comprise a controller 2000 and a motor 3000. The controller 2000 is configured to control the battery 1000 to power the motor 3000, for example, serve to satisfy operating power demand when the vehicle 1 is starting, navigating, and running.

In some embodiments of the present application, the battery 1000 not only can serve as an operating power source of the vehicle 1, but also can serve as a driving power source of the vehicle 1, to provide driving power for the vehicle 1 in place of or partially in place of fuel or natural gas.

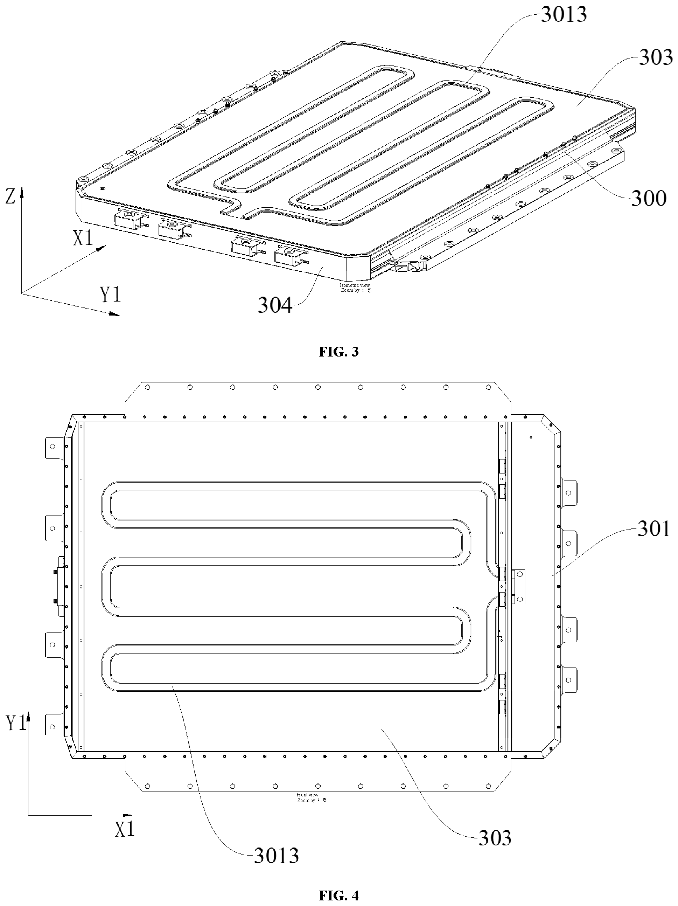

Referring to FIG. 2 to FIG. 4, FIG. 2 is an exploded view of a battery 1000 according to some other embodiments of the present application, FIG. 3 is a schematic view of a battery 1000 according to some embodiments of the present application, and FIG. 4 is a top view of the battery in FIG. 3. The battery 1000 includes a box 300, a battery cell 201, and a heat exchange member 100. The box 300 includes a box body 301, the box body 301 is provided with an accommodating cavity 3011, and a groove 3014 is formed in a wall body of the box body 301. The battery cell 201 is disposed in the accommodating cavity 3011. At least part of the heat exchange member 100 is embedded in the groove 3014 and attached to the wall body. The box body 301 is configured to provide an accommodating space for the battery cell 201, and the box body 301 may be of various structures.

Illustratively, the box body 301 may include a first portion (such as a cover plate 303) and a second portion (such as a box main body 3012), the first portion and the second portion cover each other, and the first portion and the second portion together define the accommodating cavity 3011 for accommodating the battery cell 201. The second portion may be a hollow structure with one end open, and the first portion may be a plate-like structure. The first portion covers the open side of the second portion, so that the first portion and the second portion jointly define the accommodating cavity 3011. The first portion and the second portion may also each be a hollow structure with one side open, and the open side of the first portion covers the open side of the second portion. Of course, the box body 301 formed by the first portion and the second portion may be in a variety of shapes, such as a cylinder and a rectangular solid.

Illustratively, the box body 301 may also include a bottom guard plate, and the bottom guard plate is disposed on a lower side of the bottom plate 302 of the box body 301 to further enhance the load-bearing strength and impact resistance of the bottom of the box body 301. The bottom guard plate may be made of a variety of materials, including, but not limited to, copper, iron, aluminum, stainless steel, an aluminum alloy, and the like.

Illustratively, in the battery 1000, there may be a plurality of battery cells 201, and the plurality of battery cells 201 may be connected in series or in parallel or in parallel-series, where the parallel-series connection means that the plurality of battery cells 201 are connected in both series and parallel. The plurality of battery cells 201 may be directly connected together in series or in parallel or in parallel-series, and then the whole composed of the plurality of battery cells 201 is accommodated in the box body 301. Certainly, the battery 1000 may also be a whole formed in a manner that the plurality of battery cells 201 are connected in series or in parallel or in parallel-series first to form modules of the battery 1000, and then the plurality of modules of the battery 1000 are connected in series or in parallel or in parallel-series, and accommodated in the box body 301. The battery 1000 may further include other structures. For example, the battery 1000 may further include a bus component configured to implement electrical connection among the plurality of battery cells 201.

Each battery cell 201 may be a secondary battery or a primary battery, or may be a lithium-sulfur battery, a sodium-ion battery or a magnesium-ion battery, but is not limited thereto. The battery cell 201 may be in a flat shape, in a rectangular solid shape, or in other shapes.

Illustratively, in the battery 1000, the heat exchange member 100 can be disposed between the plurality of battery cells 201 and the bottom plate 302 of the box body 301, or disposed between the bottom wall of the bottom plate 302 of the box body 301 and the bottom guard plate, or disposed between the battery cell 201 and the cover plate 303 of the box body 301, or disposed between two adjacent battery cells 201, to provide heat exchange for the plurality of battery cells 201.

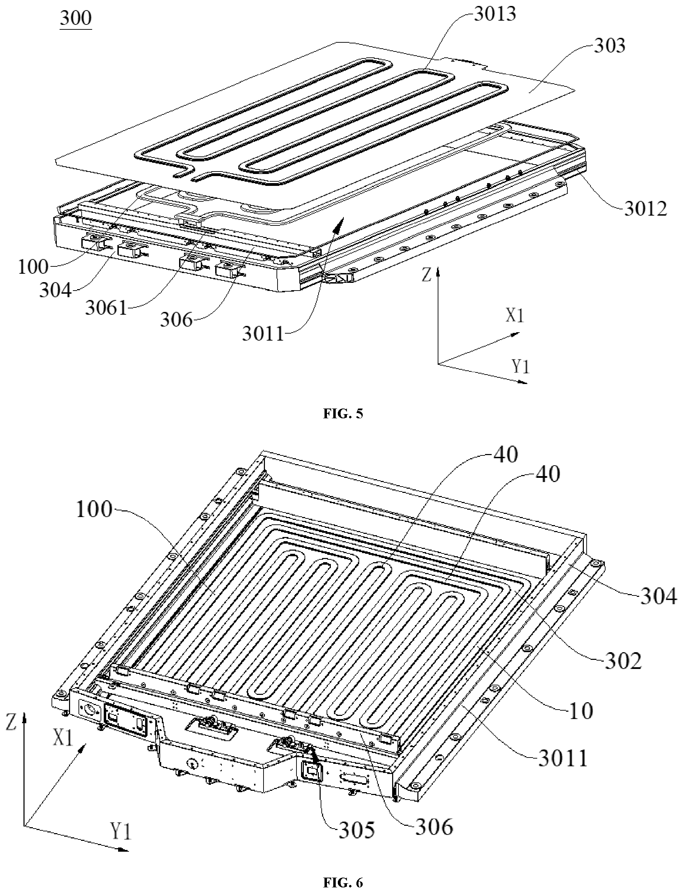

Referring to FIG. 5, FIG. 5 is a solid view of a box 300 according to some embodiments of the present application. The box 300 includes a box body 301.

The box body 301 includes a box main body 3012 and a cover plate 303. The box main body 3012 includes a plurality of side plates 304 and a bottom plate 302. The box main body 3012 is an integrally stamped part, or the plurality of side plates 304 are all profile frames; and the bottom plate 302 is an integrally stamped part, which makes the processing technology of the box main body 3012 simple and the production costs low, and increases the structural strength of the box main body 3012. The box body 301 is provided with an accommodating cavity 3011, and a groove 3014 is formed in a wall body of the box body 301. Specifically, the groove 3014 is formed in the cover plate 303, and the groove 3014 is located on an inner side of the cover plate 303 close to the accommodating cavity 3011 or on an outer side thereof away from the accommodating cavity 3011; and the groove 3014 is formed in the bottom plate 302, and the groove 3014 is located on an inner side of the bottom plate 302 close to the accommodating cavity 3011 or on an outer side thereof away from the accommodating cavity 3011. The heat exchange member 100 is embedded in the groove 3014, and an upper surface of the heat exchange member 100 in a thickness direction is flush with an opening of the groove 3014, which thus can increase the stability of the battery cell 201 placed in the accommodating cavity 3011. The box body 301 may be made of a variety of materials, including, but not limited to, copper, iron, aluminum, stainless steel, an aluminum alloy, and the like.

The heat exchange member 100 is configured to exchange heat with the battery cell 201 in the accommodating cavity 3011 to regulate the temperature of the battery cell 201, so that the temperature of the battery cell 201 is maintained within a suitable range. An inlet and an outlet of the heat exchange member 100 are located at one end of the box body 301, forming a cooling loop to exchange heat with the battery cell 201. Specifically, the heat exchange member 100 has various shapes, such as a "U"-shaped tube or a "serpentine" tube. In addition, the heat exchange member 100 can be an integrated piece or formed by splicing a plurality of pipelines, which can be selected according to the cooling requirements of the battery cell 201. The heat exchange member 100 may include a plurality of heat exchange flow channels, and the plurality of heat exchange flow channels can be connected in series or in parallel, which can increase the arrangement diversity of the heat exchange flow channel, thereby improving the adaptability of the heat exchange member 100. The heat exchange member 100 may be made of a variety of materials including, but is not limited to, copper, iron, aluminum, stainless steel, an aluminum alloy, and the like.

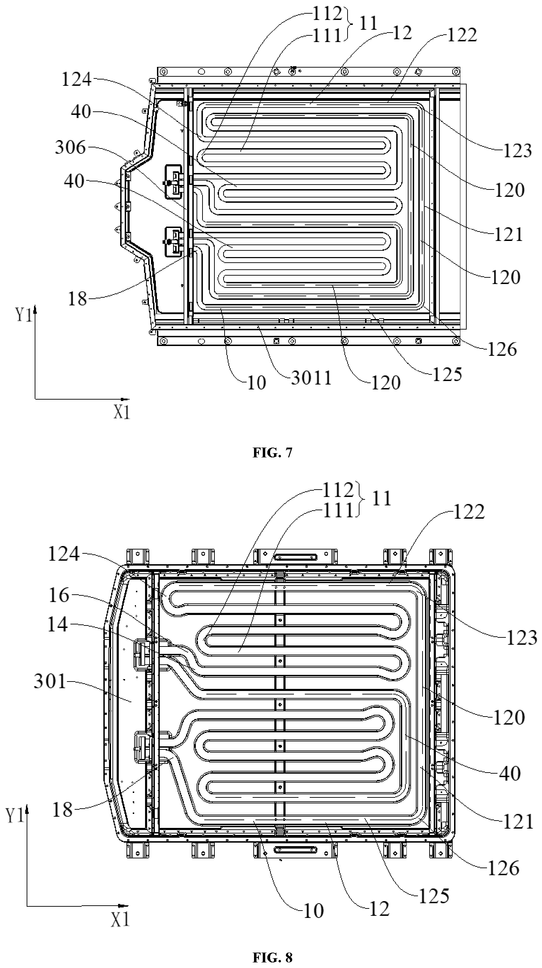

FIG. 6 is a solid view of a heat exchange member 100 placed in a box 300 according to some embodiments of the present application, FIG. 7 is a schematic view of a heat exchange member placed in a box 300 according to some embodiments of the present application, and FIG. 8 is a schematic view of a heat exchange member 100 placed in a box 300 according to some other embodiments of the present application.

According to the battery 1000 in the first aspect of the present application, as shown in FIG. 2 to FIG. 8, the battery 1000 includes the box 300, the battery cell 201, and the heat exchange member 100. The box 300 includes the box body 301, the box body 301 is provided with the accommodating cavity 3011, and the groove 3014 is formed in the wall body of the box body 301. The battery cell 201 is disposed in the accommodating cavity 3011. At least part of the heat exchange member 100 is embedded in the groove 3014 and attached to the wall body for heat exchange with the battery cell 201.

Illustratively, the battery 1000 includes the box 300, the box 300 includes the box body 301, the groove 3014 is formed in the wall body of the box body 301, and the groove 3014 can be formed by stamping the wall body of the box body 301, so that the concave-convex structure is formed on the box body 301 to increase the structural strength of the box body 301. For example, the wall body of the box body 301 is stamped to form the groove 3014, and a convex rib 3013 may be formed on the side of the wall body facing away from the groove 3014 and opposite to the groove 3014. At least part of the heat exchange member 100 is embedded in the groove 3014. The heat exchange member 100 can act as the reinforcing rib of the box body 301 to further improve the strength of the box 300. Optionally, the wall body of the box body 301 can be the cover plate 303, the plurality of side plates 304 or the bottom plate 302, and the groove 3014 is formed in the wall body of the box body 301, that is, the groove 3014 can be formed in all of the cover plate 303, the plurality of side plates 304 or the bottom plate 302. At least part of the heat exchange member 100 is embedded in the groove 3014, which can be that at least part of the heat exchange member 100 is located on the cover plate 303, or at least part of the heat exchange member 100 is located on the bottom plate 302, or at least part of the heat exchange member 100 is located on one of the side plates 304, or at least part of the heat exchange member 100 is located on the plurality of side plates 304.

At least part of the heat exchange member 100 is embedded in the groove 3014, which can be that a part of the heat exchange member 100 is embedded in the groove 3014, with another part of the heat exchange member 100 extending out from the opening of the groove 3014; or the entire heat exchange member 100 may be embedded in the groove 3014. When the entire heat exchange member 100 is embedded in the groove 3014, the upper surface of the heat exchange member 100 in the thickness direction may be flush with the opening of the groove 3014, or the upper surface of the heat exchange member 100 in the thickness direction may be lower than the opening of the groove 3014.

The heat exchange member 100 is embedded in the groove 3014 of the box body 301. On one hand, the heat exchange member 100 can act as the reinforcing rib of box body 301 to further improve the strength of the box 300, thereby improving the reliability of battery 1000; on the other hand, the structure of the heat exchange member 100 is simplified, and the heat exchange member 100 occupies the space of the box body 301, so that the heat exchange member 100 and the box body 301 share the same space, and the heat exchange member 100 no longer occupies the mounting position of the cell, thereby increasing the mounting density of the cell in the battery 1000 and also improving the volumetric energy density of the battery 1000, which achieves a more compact and reliable structure of the battery 1000, and further improves the reliability of the battery 1000. For example, the battery 1000 may act as the operating power source of the vehicle 1, thereby enhancing the volumetric energy density of the battery 1000, which can increase the driving range of the vehicle 1.

The box body 301 can serve to bear the battery cell 201. The concave-convex structure of the box body 301 itself improves the strength of the box 300. In addition, after the groove 3014 of the box body 301 is filled with the heat exchange member 100, the heat exchange member 100 can act as the reinforcing rib of the box body 301 to further improve the strength of the box body 301, so that the box body 301 is not prone to deformation when bearing the battery cell 201.

Illustratively, a layer of thermally conductive adhesive can be applied to the surface of the heat exchange member 100 close to the battery cell 201 to increase the heat exchange efficiency of the heat exchange member 100. When a part of the heat exchange member 100 is embedded in the groove 3014 and another part of the heat exchange member 100 extends from the opening of the groove 3014, the thermally conductive adhesive can be applied to both the surface of the wall body close to the battery cell 201 and the surface of the heat exchange member 100, so that the outer surface of the thermally conductive adhesive on the wall body is flush with the outer surface of the thermally conductive adhesive on the heat exchange member 100. When the upper surface of the heat exchange member 100 in the thickness direction is lower than the opening of the groove 3014, the thermally conductive adhesive can be applied to both the surface of the wall body close to the battery cell 201 and the surface of the heat exchange member 100, so that the outer surface of the thermally conductive adhesive on the wall body is flush with the outer surface of the thermally conductive adhesive on the heat exchange member 100. In this way, the thermal conductivity efficiency of the heat exchange member 100 can be increased, and the flatness of the heat exchange member 100 and the wall body can also be improved. When the battery cell 201 is placed in the accommodating cavity 3011, the stability of the battery cell 201 can be increased.

The heat exchange member 100 is attached to the wall body of the box body 301, that is, the heat exchange member 100 is directly in contact with the wall body of the box body 301, which can effectively increase the transmission of the acting force between the heat exchange member 100 and the wall body of the box body 301, thereby improving the overall structural strength after the heat exchange member 100 is attached to the wall body of the box body 301.

Illustratively, the heat exchange member 100 may include a heat exchange tube, and the heat exchange tube may be a hollow flat tube or round tube. When the heat exchange tube is a hollow flat tube, the groove 3014 can be a square groove that matches the shape of the flat tube, so that the heat exchange tube can be effectively attached to the wall surface of the groove 3014; and when the heat exchange tube is a hollow round tube, the groove 3014 can be a circular groove that matches the shape of the round tube, so that the heat exchange tube can be effectively attached to the wall surface of the groove 3014.

The heat exchange member 100 is configured to exchange heat with the battery cell 201. Flowing fluid is in the heat exchange member 100, for example, the fluid can be water. When the temperature of the battery cell 201 is low, the temperature of the fluid is higher than that of the battery cell 201. The heat of the fluid can be transferred to the battery cell 201 to raise the temperature of the battery cell 201, thereby keeping the operating temperature of the battery cell 201 within a suitable range and prolonging the operating time of the battery cell 201. Conversely, when the temperature of the battery cell 201 is too high, the temperature of the fluid is lower than that of the battery cell 201, the heat of the battery cell 201 can be transferred into the fluid to lower the temperature of the battery cell 201, thus keeping the operating temperature of the battery cell 201 within a suitable range and prolonging the operating time of the battery cell 201.

In the above technical solution, on the one hand, after the box body 301 of the battery 1000 is provided with the groove 3014, the concave-convex structure of the box body 301 itself improves the strength of the box body 301. Meanwhile, the groove 3014 of the box body 301 is filled with the heat exchange member 100, and the heat exchange member 100 can act as the reinforcing rib of the box body 301 to further improve the strength of the box 300, thereby improving the reliability of the battery 1000. On the other hand, the heat exchange member 100 is embedded in the groove 3014, occupying the space of the box body 301, so that the two parts share one space, thereby making the structure of the battery 1000 more compact and reliable, also improving the volumetric energy density of the battery 1000, and further improving the reliability of the battery 1000.

According to some embodiments of the present application, as shown in FIG. 2 to FIG. 7, the heat exchange member 100 is completely accommodated in the groove 3014, and the upper surface of the heat exchange member 100 in the thickness direction is flush with the opening of the groove 3014.

In the above technical solution, by completely accommodating the heat exchange member 100 in the groove 3014, the heat exchange member 100 can be effectively protected, which can prevent damage of the heat exchange member 100 caused when the part of the heat exchange member 100 not accommodated in the groove 3014 is compressed. Thus, the protected heat exchange member 100 can reliably exchange heat with the battery cell 201, which can ensure the heat exchange efficiency of the battery cell 201. Furthermore, by making the upper surface of the heat exchange member 100 in the thickness direction flush with the opening of the groove 3014, the volume of the heat exchange member 100 can be effectively increased while the heat exchange member 100 is protected, which can increase the heat exchange amount between the heat exchange member 100 and the battery cell 201, thereby enhancing the heat exchange effect between the heat exchange member 100 and the battery cell 201. Moreover, since the upper surface of the heat exchange member 100 in the thickness direction is flush with the opening of the groove 3014, the wall body of the box body 301 can be relatively flat, so that the wall body of the box body 301 accommodating the heat exchange member 100 is attractive. Additionally, the battery cell 201 placed in the accommodating cavity 3011 is more stable.

According to some embodiments of the present application, as shown in FIG. 2 to FIG. 7, the box body 301 includes: the box main body 3012, where the box main body 3012 is defined, in an enclosing mode, by a plurality of box walls, at least one of the plurality of box walls forms the groove 3014, the groove 3014 is located on an inner side of the box wall close to the accommodating cavity 3011 and/or on an outer side thereof away from the accommodating cavity 3011, and when the groove 3014 is located on the inner side, the groove 3014 is in communication with the accommodating cavity 3011.

Illustratively, the groove 3014 may be formed on one box wall of the box main body 3012, or the groove 3014 may be formed on two of the plurality of box walls of the box main body 3012, or the groove 3014 may be formed on three of the plurality of box walls of the box main body 3012, or the groove 3014 may be formed on all the plurality of box walls of the box main body 3012.

As shown in FIG. 6 and FIG. 7, the plurality of box walls can be the plurality of side plates 304 and the bottom plate 302 connected to the bottom end of the plurality of side plates 304. The plurality of side plates 304 are a first side plate, a second side plate, a third side plate, and a fourth side plate connected in sequence. Optionally, the groove 3014 may be formed on the first side plate, the second side plate, the third side plate, the fourth side plate, or the bottom plate 302; alternatively, the groove 3014 may be formed on the first side plate and the second side plate, or on the first side plate and the third side plate, or on the first side plate and the fourth side plate, or on the first side plate and the bottom plate 302, or on the second side plate and the third side plate, or on the second side plate and the fourth side plate, or on the second side plate and the bottom plate 302, or on the third side plate and the fourth side plate, or on the third side plate and the bottom plate 302, or on the fourth side plate and the bottom plate 302; alternatively, the groove 3014 may be formed on the first side plate, the second side plate, and the third side plate, or on the first side plate, the second side plate, and the bottom plate 302, or on the first side plate, the second side plate, and the fourth side plate, or on the second side plate, the third side plate, and the fourth side plate, or on the third side plate, the fourth side plate, and the bottom plate 302, or on the third side plate, the fourth side plate, and the bottom plate 302; alternatively, the groove 3014 may be formed on all of the first side plate, the second side plate, the third side plate, the fourth side plate, and the bottom plate 302.

Illustratively, the groove 3014 is located on the inner side of the box wall close to the accommodating cavity 3011, and when the groove 3014 is located on the inner side of the accommodating cavity 3011, the groove 3014 is in communication with the accommodating cavity 3011, at least part of the heat exchange member 100 is embedded in the groove 3014, the heat exchange member 100 can be directly in contact with the battery cell 201 in the accommodating cavity 3011, and the heat or cold of the heat exchange member 100 can be directly transferred to the battery cell 201, which can improve the heat exchange efficiency of the heat exchange member 100.

Illustratively, the groove 3014 is located on the outer side of the box wall away from the accommodating cavity 3011. At least part of the heat exchange member 100 is embedded in the groove 3014. The heat exchange member 100 can exchange heat with the box wall, and then the box wall can uniformly transfer the heat or cold to the battery cell 201. By enabling the groove 3014 to be located on the outer side of the box wall away from the accommodating cavity 3011, the heat exchange member 100 can be located on the outer side of the accommodating cavity 3011. For example, if the heat exchange member 100 is a metal heat exchange tube, the metal heat exchange tube is enabled to be located on the outer side of the accommodating cavity 3011, which can effectively insulate the metal heat exchange tube from the battery cell 201.

Illustratively, a part of the groove 3014 is located on the inner side of the box wall close to the accommodating cavity 3011, and another part of the groove 3014 is located on the outer side of the box wall away from the accommodating cavity 3011, so that a part of the heat exchange member 100 embedded in the groove 3014 can be directly in contact with the battery cell 201, thereby ensuring the heat exchange efficiency of the battery cell 201, while the other part can transfer the heat or cold of the heat exchange member 100 to the battery cell 201 more evenly through the box wall, which can help achieve the temperature uniformity of the battery cell 201.

In the above technical solution, on the one hand, by forming the groove 3014 in the box wall of the box main body 3012, the structural strength of the box main body 3012 can be effectively improved, and after the heat exchange member 100 is embedded in the groove 3014 of the box wall, the structural strength of the box main body 3012 can be further improved. When the battery 1000 is hit by a side impact, the box main body 3012 can effectively protect the battery cell 201 inside the box main body 3012. On the other hand, the heat exchange member 100 is embedded in the groove 3014 of the box wall, which can effectively dissipate heat from the battery cell 201 close to the box wall. Moreover, after the heat exchange member 100 absorbs the heat from the battery cell 201, the heat can be effectively transferred to the box wall. The box wall can also effectively transfer the heat to the external space. In this way, the heat is continuously transferred towards the box wall, which can improve the heat exchange effect on the battery cell 201.

According to some embodiments of the present application, as shown in FIG. 2 to FIG. 7, the box body 301 includes a bottom plate 302 and a plurality of side plates 304 arranged around the periphery of the bottom plate 302 and connected end to end in sequence. The groove 3014 is formed in the bottom plate 302. The concave-convex structure of the bottom plate 302 itself improves the strength of the bottom plate 302. Meanwhile, the heat exchange member 100 can act as a reinforcing rib of the bottom plate 302 to further improve the strength of the bottom plate 302. In addition, the heat exchange member 100 is disposed on the bottom plate 302, which can effectively dissipate heat from the bottom of the battery cell 201.

For example, the plurality of side plates 304 can be a first side plate, a second side plate, a third side plate, and a fourth side plate connected in sequence. An angle can be formed between the first side plate and the second side plate, and the angle can be 90°; an angle can be formed between the second side plate and the third side plate, and the angle can be 90°; an angle can be formed between the third side plate and the fourth side plate, and the angle can be 90°; an angle can be formed between the fourth side plate and the first side plate, and the angle can be 90°; the bottom plate 302 can be mounted on the bottom surface of the plurality of side plates 304, and the angles between the bottom plate 302 and the first side plate, the second side plate, the third side plate, and the fourth side plate are all 90°.

Illustratively, the box main body 3012 is an integrally stamped part. For example, a metal plate can be pressed. A part of the metal plate is constructed as the bottom plate 302, and the other part of the metal plate is constructed as the plurality of side plates 304 connected in sequence along the peripheral edge of the bottom plate 302, which can simplify the forming process of the box main body 3012 and ensures high connection strength and good sealing between the bottom plate 302 and the side plate 304, thereby effectively protecting the battery cell 201 in the box main body 3012.

Furthermore, when the groove 3014 is on the bottom plate 302, the groove 3014 can also be directly constructed during the production of the box main body 3012 by stamping, thus reducing the processing steps and improving the processing efficiency.

Illustratively, the plurality of side plates 304 are all profile frames, and the bottom plate 302 is an integrally stamped part. For example, the plurality of side plates 304 can be designed and processed separately, and then the plurality of side plates 304 are connected by welding. The bottom plate 302 can be manufactured separately by stamping a metal plate. The bottom plate 302 and the side plate 304 are processed separately, which achieves a simple structure and convenient processing, and can reduce the production costs. Optionally, after being welded and formed, the plurality of side plates 304 can be welded to the bottom plate 302 to form the box main body 3012 by splicing. In addition, it should be noted that the side plate 304, which is made of the profile frame, has good structural strength and can effectively offset the circumferential impact from the battery 1000, thereby effectively protecting the battery cell 201 in the box main body 3012.

Furthermore, when the groove 3014 is on the bottom plate 302, the groove 3014 can also be directly constructed during the production of the bottom plate 302 by stamping, thus reducing the processing steps and improving the processing efficiency.

In the above technical solution, two different structures of the box main body 3012 are constructed. One structure of the box main body 3012 improves the overall structural strength of the box main body 3012 by making the box main body 3012 as the integrally stamped part, and the structural strength of the bottom plate 302 is further improved by the groove 3014 formed in the bottom plate 302 and the heat exchange member 100 embedded in the groove 3014, which can effectively improve the structural strength of the box main body 3012 and effectively protect the battery cell 201 in the box main body 3012. The other structure of the box main body 3012 makes the side plate 304 as the profile frame, which can effectively improve the structural strength of the box main body 3012 in a circumferential direction. Further, the structural strength of the bottom plate 302 is improved by the groove 3014 formed in the bottom plate 302 and the heat exchange member 100 embedded in the groove 3014. In addition, the above two different structures of the box main body 3012 both have the advantages of a simple structure and low production costs.

In some embodiments, as shown in FIG. 2 to FIG. 7, the box body 301 includes the box main body 3012 and the cover plate 303. The box main body 3012 is a semi-closed structure with an opening at one end. The cover plate 303 is connected to the box main body 3012 and the cover plate 303 closes the opening. The groove 3014 is formed in the cover plate 303 and the groove 3014 is located on the inner side of the cover plate 303 close to the accommodating cavity 3011 or on the outer side thereof away from the accommodating cavity 3011. The concave-convex structure of the cover plate 303 itself improves the strength of the cover plate 303. Meanwhile, the heat exchange member 100 can act as the reinforcing rib of the cover plate 303 to further improve the strength of the cover plate 303.

Illustratively, the groove 3014 is located on the inner side of the cover plate 303 close to the accommodating cavity 3011, and when the groove 3014 is located on the inner side of the accommodating cavity 3011, the groove 3014 is in communication with the accommodating cavity 3011, at least part of the heat exchange member 100 is embedded in the groove 3014, and the heat exchange member 100 can be directly in contact with the battery cell 201 in the accommodating cavity 3011, which can improve the heat exchange efficiency of the heat exchange member 100.

Illustratively, the groove 3014 is located on the outer side of the cover plate 303 away from the accommodating cavity 3011. At least part of the heat exchange member 100 is embedded in the groove 3014. The heat exchange member 100 can exchange heat with the cover plate 303, and then the cover plate 303 can uniformly dissipate the heat or cold of the heat exchange member 100 to transfer the heat or cold of the heat exchange member 100 to the battery cell 201 in a more balanced mode.

Illustratively, the box main body 3012 is an integrally stamped part. For example, a metal plate can be pressed. A part of the metal plate is constructed as the bottom plate 302, and the other part of the metal plate is constructed as the plurality of side plates 304 connected in sequence along the peripheral edge of the bottom plate 302, which can simplify the forming process of the box main body 3012 and ensures high connection strength and good sealing between the bottom plate 302 and the side plate 304. Furthermore, the cover plate 303 with the groove 3014 and the heat exchange member 100 embedded in the groove 3014 are disposed, so that the box body 301 assembled in this way has high structural strength, thereby effectively protecting the battery cell 201 in the box body 301.

Furthermore, when the groove 3014 is on the bottom plate 302, the groove 3014 can also be directly constructed during the production of the box main body 3012 by stamping, thus reducing the processing steps and improving the processing efficiency.

Illustratively, the plurality of side plates 304 are all profile frames, and the bottom plate 302 is an integrally stamped part. For example, the plurality of side plates 304 can be designed and processed separately, and then the plurality of side plates 304 are connected by welding. The bottom plate 302 can be manufactured separately by stamping a metal plate. The bottom plate 302 and the side plate 304 are processed separately, which achieves a simple structure and convenient processing, and can reduce the production costs. Optionally, after being welded and formed, the plurality of side plates 304 can be welded to the bottom plate 302 to form the box main body 3012 by splicing. In addition, it should be noted that the side plate 304, which is made of the profile frame, has good structural strength and can effectively offset the circumferential impact from the battery 1000, thereby effectively protecting the battery cell 201 in the box main body 3012. Furthermore, the cover plate 303 with the groove 3014 and the heat exchange member 100 embedded in the groove 3014 are disposed, so that the box body 301 assembled in this way has high structural strength, thereby effectively protecting the battery cell 201 in the box body 301.

Furthermore, when the groove 3014 is on the bottom plate 302, the groove 3014 can also be directly constructed during the production of the bottom plate 302 by stamping, thus reducing the processing steps and improving the processing efficiency.

In the above technical solution, the cover plate 303 with the groove 3014 and the heat exchange member 100 embedded in the groove 3014 are disposed, which can effectively improve the structural strength of the cover plate 303, and the heat exchange member 100 disposed in the groove 3014 can also effectively improve the heat exchange efficiency of the top of the battery cell 201.

According to some embodiments of the present application, as shown in FIG. 3 to FIG. 7, the cover plate 303 is an integrally stamped part. The cover plate 303 constructed by integral forming has good consistency and high structural strength.

Illustratively, the cover plate 303 can be integrally stamped to form the groove 3014. The structure is simple and the processing difficulty is low. The shape of the groove 3014 can be designed according to the actual situation. The groove 3014 has a good sealing effect and thus can effectively protect the heat exchange member 100. Furthermore, the groove 3014 is matched with the heat exchange member 100, which can increase the contact area between the heat exchange member 100 and the cover plate 303, so that the heat exchange member 100 can dissipate heat to the outside through the cover plate 303. This can improve the heat exchange effect of the heat exchange member 100 on the battery cell 201.

In the above technical solution, the cover plate 303 is simple and convenient to process, and the shape of the groove 3014 can be designed according to the actual situation, with high flexibility. In addition, the groove 3014 formed by integral stamping has a good sealing effect and thus can effectively protect the heat exchange member 100.

According to some embodiments of the present application, as shown in FIG. 2 to FIG. 7, the box main body 3012 includes the bottom plate 302 and the plurality of side plates 304 arranged around the periphery of the bottom plate 302 and connected end to end in sequence, and the side plate 304 and the bottom plate 302 are made of the same material and are separately formed and matched by welding.

Illustratively, the plurality of side plates 304 may be welded to the bottom plate 302 by welding, and then two adjacent side plates 304 are welded together. Alternatively, the plurality of side plates 304 may be welded first, and then the plurality of welded side plates 304 are welded to the bottom plate 302. Since the plurality of side plates 304 are made of the same material, and the side plate 304 and the bottom plate 302 are also made of the same material, when two side plates 304 are welded, or when the side plate 304 and the bottom plate 302 are welded, the welding effect is good, and the structural strength after welding is high. Therefore, the side plate 304 is matched with the bottom plate 302 by welding, which can increase the connection strength between the side plate 304 and the bottom plate 302, thereby improving the structural strength of the box main body 3012.

In the above technical solution, the side plate 304 and the bottom plate 302 are made of the same material. When the side plate 304 and the bottom plate 302 are welded, the welding effect is good and the structural strength after welding is high. By increasing the connection strength between the side plate 304 and the bottom plate 302, the structural strength of the box main body 3012 can be improved.

According to some embodiments of the present application, as shown in FIG. 2 to FIG. 7, the heat exchange member 100 includes at least one heat exchange tube, when a plurality of heat exchange tubes are disposed, each heat exchange tube defines a heat exchange flow channel on an inner side thereof, and the heat exchange flow channel is configured to circulate the fluid.

Illustratively, the number of the heat exchange tube can be one, two, three or more, and the number of the heat exchange tube can be designed according to the size of the battery cell 201.

Illustratively, the shape of the heat exchange tube can be various, for example, the heat exchange tube can be a circular tube or a flat tube; and meanwhile, the shape of the heat exchange flow channel defined by the heat exchange tube can also be various, for example, the heat exchange flow channel can be a U-shaped heat exchange flow channel, a serpentine heat exchange flow channel, etc.

Illustratively, the plurality of heat exchange tubes can be arranged sequentially in a first direction (referring to the Y1 direction in FIG. 6). Of course, the plurality of heat exchange tubes can also be arranged around each other, and further, the plurality of heat exchange tubes can be arranged around each other in the same plane.

In the above technical solution, the heat exchange tube has a simple structure and low production costs, and the shape of the heat exchange member can be effectively changed. Therefore, the heat exchange tube can be bent well to effectively arrange the heat exchange flow channel in the battery 1000. In addition, the heat exchange tube has better structural strength. After the heat exchange tube is embedded in the wall body, the heat exchange tube can effectively improve the structural strength of the wall body.

According to some embodiments of the present application, as shown in FIG. 2 to FIG. 7, the heat exchange tube is formed by bending a single tube.

Formed by bending a single tube refers to the process by which the heat exchange tube is formed by bending a single straight tube many times through processing techniques such as pressing and rolling. Illustratively, a single straight tube can be bent at a plurality of preset positions, and is bent into a V shape, a U shape, etc., with the operation simple and convenient.

In the above technical solution, on the one hand, the heat exchange tube can be effectively bent according to the actual heat dissipation requirements to construct heat exchange tube layouts with different densities or directions of the heat exchange tube, so that a plurality of regions with different heat exchange effects are in the entire heat exchange region, thereby enabling the heat exchange member 100 to have different heat exchange effects on the different regions and improving the flexibility of heat exchange of the heat exchange member 100. On the other hand, due to different bending states of the heat exchange tube, the flow rate and pressure of the fluid in the heat exchange flow channel can also be effectively adjusted, so that the fluid can absorb the heat of the battery cell 201 more fully, thereby improving the heat dissipation effect of the battery cell 201.

In addition, by forming the heat exchange tube by bending a single tube, the sealing performance of the heat exchange flow channel can be effectively improved, thereby reducing the risk of fluid leakage and improving the reliability of the heat exchange member 100 during use.

According to some embodiments of the present application, the heat exchange tube is bent in an arc at the bending position.

The bending in an arc can reduce the flow resistance of the fluid, and reduce the pressure drop, so that the heat exchange tube which is bent in an arc at the bending position can increase the flow rate of the heat exchange fluid in the heat exchange flow channel, thereby improving the heat exchange efficiency of the heat exchange member 100.

In the above technical solution, by disposing the heat exchange tube to be bent in an arc at the bending position, the flow resistance of the fluid can be reduced, and the pressure drop can be reduced, so that the flow rate of the heat exchange fluid in the heat exchange flow channel can be increased, thereby improving the heat exchange efficiency of the heat exchange member 100.

According to some embodiments of the present application, as shown in FIG. 2 to FIG. 7, the groove 3014 is in clearance fit with the heat exchange tube and extends in a length direction of the heat exchange tube.

The groove 3014 is in clearance fit with the heat exchange tube, which makes it easy to assemble the heat exchange tube into the groove 3014, achieving high assembly efficiency. It also makes it easy to disassemble the heat exchange tube from the groove 3014, thus facilitating the replacement or maintenance of the heat exchange tube. Furthermore, due to the clearance fit between the groove 3014 and the heat exchange tube, when the wall body with the groove 3014 undergoes a certain deformation, it is not prone to damage the heat exchange tube in the groove 3014. For example, if the wall body undergoes elastic deformation, and the heat exchange tube is in interference fit with the groove 3014, the heat exchange tube is also prone to deformation. The deformation of the heat exchange tube may affect the heat exchange flow channel in the heat exchange tube, and the deformation of the heat exchange flow channel may easily affect the circulation of the fluid, consequently affecting the heat exchange effect of the heat exchange tube.

Illustratively, when the heat exchange tube is placed in the groove 3014, one side surface of the heat exchange tube can be in clearance fit with one side wall surface of the groove 3014, and the other side surface of the heat exchange tube abuts against the other side wall surface of the groove 3014; alternatively, both side surfaces of the heat exchange tube can be in clearance fit with the wall surfaces on both sides of the groove 3014, respectively.

Illustratively, thermally conductive adhesive can be applied in an assembly gap between the groove 3014 and the heat exchange tube. This not only fixes the heat exchange tube into the groove 3014, but also improves the heat exchange efficiency of the heat exchange tube in transferring heat or cold to the box body 301.

As shown in FIG. 2 to FIG. 7, the heat exchange tube is a bent tube with a plurality of bends, and the groove 3014 is also constructed as a groove shape that bends in the length direction of the heat exchange tube. That is, the bending shape of the heat exchange tube is the same as the shape of the groove 3014. In this way, the groove 3014 can effectively position and assemble the heat exchange tube. After being mounted in the groove 3014, the heat exchange tube is less likely to move or shake. The position of the heat exchange tube is relatively stable, which can effectively dissipate heat from the battery cell 201.

In the above technical solution, by making the groove 3014 in clearance fit with the heat exchange tube, it is easy to disassemble and assemble the heat exchange tube, which, on the one hand, can improve the assembly efficiency of the heat exchange tube, and on the other hand, can improve the replacement or maintenance efficiency of the heat exchange tube. By making the groove 3014 extend in the length direction of the heat exchange tube, the shape of the groove 3014 is the same as the shape of the heat exchange tube. Thus, after the heat exchange tube is assembled into the groove 3014, the groove 3014 can effectively restrict the position of the heat exchange tube, so that the heat exchange tube is less likely to move or shake, and the position of the heat exchange tube is relatively stable, which can effectively dissipate heat from the battery cell 201.

According to some embodiments of the present application, as shown in FIG. 2 to FIG. 7, the heat exchange tube is a flat tube or a harmonica-shaped tube.

The flat tube or the harmonica-shaped tube is a hollow tube with a simple structure, a simple manufacturing process, and low costs, thus reducing the production costs of the heat exchange tube. In addition, both upper and lower surfaces of a square tube or the flat tubes are flat planes, and then the heat exchange tube is the flat tube or the harmonica-shaped tube, which can increase the mounting stability of the heat exchange tube.

Referring to FIG. 2 to FIG. 7, the heat exchange tube can be assembled on the bottom plate 302 or the cover plate 303 provided with the groove 3014 in a stamping mode. Since the heat exchange tube is the flat tube or the harmonica-shaped tube, by taking the flat tube assembled on the bottom plate 302 as an example, the thickness of the flat tube is relatively small, so the overall thickness of the flat tube after being assembled on the bottom plate 302 is also small, which can improve the structural strength of the bottom plate 302 while reducing the thickness of the heat exchange member 100 combined with the bottom plate 302, thereby being beneficial for the thinning design of the battery 1000.

Illustratively, the box main body 3012 is formed by integral stamping, the box main body 3012 is provided with the bottom plate 302, the bottom plate 302 is provided with the groove 3014, and the box main body 3012 formed by integral stamping has good sealing performance. The heat exchange tube, which is a flat tube or a harmonica-shaped tube, is embedded in the groove 3014, which can improve the structural strength of the bottom plate 302 while reducing the thickness of the heat exchange member 100 combined with the bottom plate 302, thereby being beneficial for the thinning design of the battery 1000.

In the above technical solution, by disposing the flat tube or the harmonica-shaped tube with a relatively small thickness, the heat exchange tube can be effectively embedded in the wall body of the box body 301, which is not prone to increase the thickness of the wall body, and also improves the structural strength of the wall body. Furthermore, the flat tube or the harmonica-shaped tube has a simple structure and low production costs, which can effectively reduce the production costs of the battery 1000.

According to some embodiments of the present application, as shown in FIG. 5 to FIG. 7, the box 300 further includes a beam body 306, the beam body 306 is disposed in the box body 301, and a channel 305 allowing the heat exchange tube to pass through is constructed between the beam body 306 and the box body 301.

The beam body 306 is disposed in the box body 301 to separate an assembly region of the battery cell 201 from an assembly region of electrical elements, which can also limit the position of the battery cell 201. By constructing the channel 305 allowing the heat exchange tube to pass through between the beam body 306 and the box body 301, communication of the heat exchange tube with an external water pipe can be facilitated to form a cooling loop.

Illustratively, two beam bodies 306 may be disposed, and spaced apart from each other in the box body 301, and the assembly region for assembling the battery cell 201 is constructed between the two beam bodies 306. Optionally, the channel 305 may be constructed between one of the two beam bodies 306 and the box body 301, or the channel 305 may be constructed between both the beam bodies 306 and the box body 301.

Illustratively, the box body 301 includes the bottom plate 302 and the cover plate 303. Two heat exchange members 100 are disposed, one heat exchange member 100 is located in the groove 3014 of the cover plate 303, and the other heat exchange member 100 is located in the groove 3014 of the bottom plate 302. The channel 305 is also constructed between the beam body 306 and the cover plate 303. The heat exchange tube of the heat exchange member 100 located on the cover plate 303 is adapted to pass through the channel 305. The channel 305 is constructed between the beam body 306 and the bottom plate 302. The heat exchange tube of the heat exchange member 100 located on the bottom plate 302 is adapted to pass through the channel 305.

In the above technical solution, the beam body 306 is disposed in the box body 301, and the channel 305 allowing the heat exchange tube to pass through is constructed between the beam body 306 and the box body 301, which facilitates communication of the heat exchange tube and the external water pipe to form the cooling loop.

According to some embodiments of the present application, as shown in FIG. 5 to FIG. 7, the beam body 306 is provided with a first recess 3061, and/or the box body 301 is provided with a second recess, and the first recess 3061 and/or the second recess are/is constructed as the channel 305.

Illustratively, the beam body 306 is provided with the first recess 3061, the beam body 306 is disposed in the box body 301, and the first recess 3061 is constructed as the channel 305 allowing the heat exchange tube to pass through, which facilitates the processing and forming of the channel 305.

Illustratively, the box body 301 is provided with the second recess, for example, the box body 301 includes the cover plate 303 and the bottom plate 302, that is, both the cover plate 303 and the bottom plate 302 are provided with the second recess, the beam body 306 is disposed in the box body 301, and the second recess is constructed as the channel 305 allowing the heat exchange tube to pass through, which facilitates the processing and forming of the channel 305.

Illustratively, the beam body 306 is provided with the first recess 3061, the box body 301 is provided with the second recess, for example, the box body 301 includes the cover plate 303 and the bottom plate 302, that is, both the cover plate 303 and the bottom plate 302 are provided with the second recess, the beam body 306 is disposed in the box body 301, and the first recess 3061 is matched with the second recess to be constructed as the channel 305 allowing the heat exchange tube to pass through, which facilitates the processing and forming of the channel 305.

In the above technical solution, the channel 305 allowing the heat exchange tube to pass through can be constructed between the beam body 306 and the box body 301 according to actual requirements, which facilitates communication of the heat exchange tube and the external water pipe to form the cooling loop.

According to some embodiments of the present application, as shown in FIG. 5 to FIG. 7, the beam body 306 is a hollow beam, and part of the beam body 306 protrudes to an inner side of the hollow beam to form the first recess 3061.

The beam body 306 is a hollow beam, which can reduce the weight of the beam body 306, thereby reducing the weight of the battery 1000. The first recess 3061 is constructed from the beam body 306. On the one hand, this simplifies the processing mode of the first recess 3061, and on the other hand, it eliminates the need to dispose the second recess on the box body 301, thereby increasing the structural stability of the box body 301.

For example, the first recess 3061 can be processed into a shape that fits the heat exchange tube, so that the heat exchange tube can be fixed in the channel 305 defined by the beam body 306 and the box body 301 to further fix the heat exchange tube.

In the above technical solution, by disposing the beam body 306 as a hollow beam, the weight of the beam body 306 can be reduced, thereby reducing the weight of the battery 1000. Part of the beam body 306 protrudes to the inner side of the hollow beam to form the first recess 3061. The processing mode is simple, the production costs are low, and the constructed first recess 3061 is stable in structure and not prone to compress the heat exchange tube, thus allowing the fluid to circulate smoothly in the heat exchange tube.

According to some embodiments of the present application, as shown in FIG. 5 to FIG. 7, the beam body 306 is an expansion beam, the expansion beam can expand or contract in a second direction, or the beam body 306 is a non-metallic beam body.

The temperature of the battery cell 201 is affected by the operating status and the external temperature. When the temperature of the battery cell 201 drops, the battery cell 201 may contract and the volume of the battery cell 201 may decrease. The beam body 306 is an expansion beam, and the beam body 306 can correspondingly expand to a certain extent in the second direction to fix the battery cell 201 into the accommodating cavity 3011. When the temperature of the battery cell 201 rises, the battery cell 201 may expand and the volume of the battery cell 201 may increase. The beam body 306 is an expansion beam, and the beam body 306 can correspondingly shrink to a certain extent in the second direction to provide an expansion space for the expansion of the battery cell 201.

The beam body 306 is a non-metallic beam body, which can reduce the weight of the beam body 306, thereby reducing the weight of the battery 1000, and can also provide better insulation from the battery cell 201.

For example, as shown in FIG. 6, the second direction is the thickness direction of the battery cell 201, that is, the X1 direction shown in FIG. 6.

In the above technical solution, by disposing the beam body 306 as the expansion beam, a mounting space can be provided for the volume change of the battery cell 201 caused by thermal expansion and contraction; and by making the beam body 306 as the non-metallic beam body, the weight of the beam body 306 can be reduced, which thus can reduce the weight of the battery 1000, and provide good insulation from the battery cell 201.

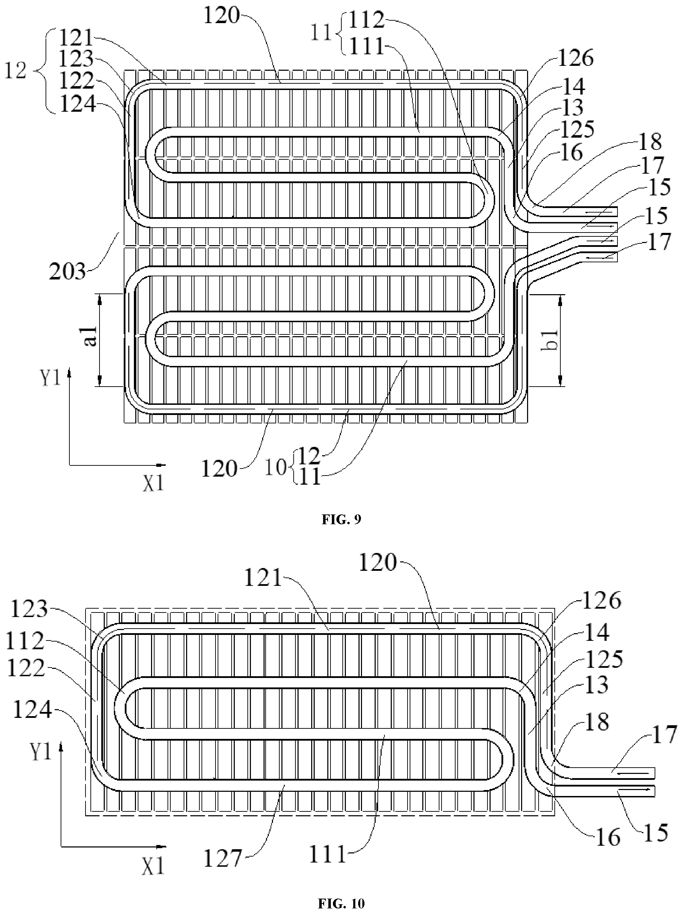

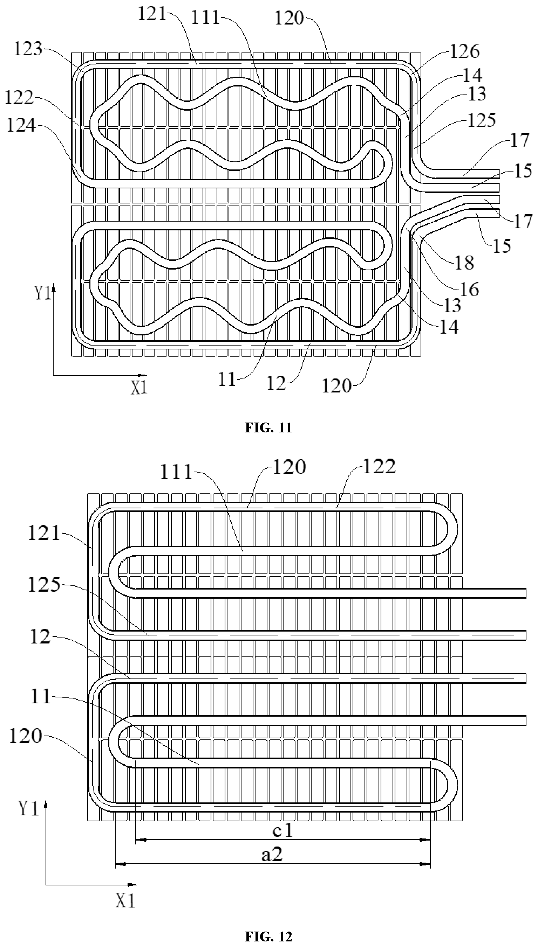

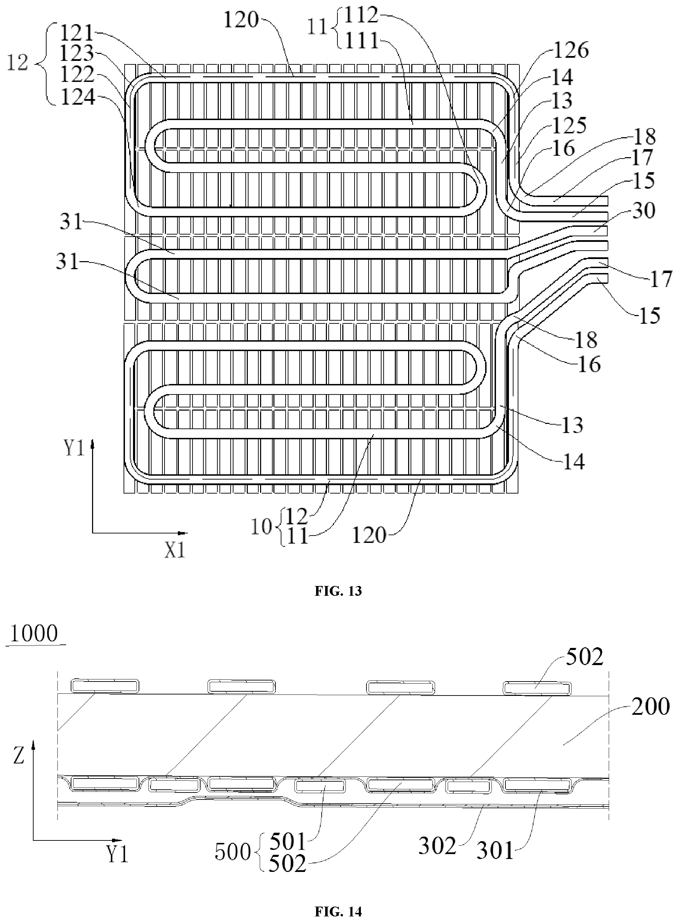

The heat exchange member 100 according to an embodiment of the present application is described below with reference to FIG. 7 to FIG. 13, FIG. 7 is a schematic view of a heat exchange member 100 placed in a box 300 according to some embodiments of the present application, FIG. 8 is a schematic view of a heat exchange member 100 placed in a box 300 according to some other embodiments of the present application, FIG. 9 is a schematic view of a battery assembly 200 and a heat exchange member 10 according to the first embodiment of the present application, FIG. 10 is a schematic view of a battery assembly 200 and a heat exchange member 100 according to the second embodiment of the present application, FIG. 11 is a schematic view of a battery assembly 200 and a heat exchange member 10 according to the third embodiment of the present application, FIG. 12 is a schematic view of a battery assembly 200 and a heat exchange member 10 according to the fourth embodiment of the present application, and FIG. 13 is a schematic view of a battery assembly 200 and a heat exchange member 10 according to the fifth embodiment of the present application.

Embodiments of the present application provide a heat exchange member 100, as shown in FIG. 7 to FIG. 13, the heat exchange member 100 is used for the battery 1000. The heat exchange member 100 includes a first heat exchange flow channel 10, the first heat exchange flow channel 10 includes a first heat exchange segment 11 and a second heat exchange segment 12; and the second heat exchange segment 12 is bent to form a U-shaped region 120, the first heat exchange segment 11 is bent to be disposed in the U-shaped region 120, and bent to be connected to the second heat exchange segment 12.

Specifically, the battery 1000 may include a plurality of battery cells 201. The first heat exchange flow channel 10 is configured to exchange heat with the plurality of battery cells 201 of the battery 1000, so that the temperature of the battery cells 201 can be limited within the safe operating temperature, thus ensuring the operational reliability of the battery 1000.

The above expression "the second heat exchange segment 12 is bent to form the U-shaped region 120 (e.g., the region shown by the dotted line in FIG. 9), and the first heat exchange segment 11 is bent to be disposed in the U-shaped region 120" is intended to indicate that the second heat exchange segment 12 is disposed on the periphery of the first heat exchange segment 11 in the circumferential direction, and can be arranged on three circumferential side edges of the first heat exchange segment 11. The second heat exchange segment 12 can be arranged closer to the peripheral edge of the battery 1000 relative to the first heat exchange segment 11.

The second heat exchange segment 12 is bent to form the U-shaped region 120, that is, in a direction from one end of the second heat exchange segment 12 to the other end, the second heat exchange segment 12 extends along a U-shaped line to form the U-shaped region 120 in a U shape.

The first heat exchange segment 11 is bent to be disposed in the U-shaped region 120, that is, the first heat exchange segment 11 is arranged in the space defined, in the enclosing mode, by the second heat exchange segment 12, and the first heat exchange segment 11 extends non-linearly along the inner side of the second heat exchange segment 12, having at least one bending position.

It should be noted that in this embodiment, it is only limited that the first heat exchange segment 11 is bent to be disposed in the U-shaped region 120, and the bending form of the first heat exchange segment 11 is not limited, that is, the specific bending form of the first heat exchange segment 11 can be designed according to the heat exchange requirements of the battery 1000. For example, the first heat exchange segment 11 can extend in the length direction of the battery cell 201 (that is, the Y1 direction in FIG. 7), is bent in the width direction of the battery cell 201 (that is, the X1 direction in FIG. 7) after extending to a certain length, then continues to extend in the length direction of the battery cell 201, and is bent in the width direction. Alternatively, the first heat exchange segment 11 can extend in the width direction of the battery cell 201, is bent in the length direction of the battery cell 201 after extending to a certain length, then continues to extend in the width direction of the battery cell 201, and is bent in the length direction.

The first heat exchange segment 11 and the second heat exchange segment 12 are bent to be connected. That is, one end of the first heat exchange segment 11 and one end of the second heat exchange segment 12 are connected, and the connection position of the first heat exchange segment 11 and the second heat exchange segment 12 is a bent non-linear structure. For example, the connection position of the first heat exchange segment 11 and the second heat exchange segment 12 can be bent into an arc segment.

The first heat exchange segment 11 and the second heat exchange segment 12 are connected. Thus, one of the end of the first heat exchange segment 11 away from the second heat exchange segment 12 and the end of the second heat exchange segment 12 away from the first heat exchange segment 11 can be used as a liquid input end, and the other end can be used as a liquid output end. Therefore, when the first heat exchange flow channel 10 performs heat exchange, the fluid can flow from the first heat exchange segment 11 to the second heat exchange segment 12, or from the second heat exchange segment 12 to the first heat exchange segment 11.

It can be understood that as the fluid flows in the first heat exchange flow channel 10, the temperature of the fluid gradually changes, resulting in a gradual decrease in the heat exchange effect. For example, when the heat exchange member 100 cools the battery assembly 200, the heat from the battery cell 201 is gradually transferred to the fluid, causing the temperature of the fluid to gradually increase as the fluid flows along the first heat exchange flow channel 10, and the temperature difference between the fluid and the battery cell 201 gradually decreases, resulting in a gradual decrease in heat exchange efficiency. When the heat exchange member 100 heats the battery assembly 200, the heat from the fluid is gradually transferred to the battery cell 201, causing the temperature of the fluid to gradually decrease as the fluid flows along the first heat exchange flow channel 10, and the temperature difference between the fluid and the battery cell 201 gradually decreases, resulting in a gradual decrease in heat exchange efficiency.

In this embodiment, when the heat exchange member 100 is used to cool the battery assembly 200, the fluid can flow from the first heat exchange segment 11 to the second heat exchange segment 12, or the fluid can flow from the second heat exchange segment 12 to the first heat exchange segment 11. When the fluid also flows from the first heat exchange segment 11 to the second heat exchange segment 12, the battery cells 201 in the middle of the battery 1000 (i.e., the inner battery cells 201 on the inner side of the periphery) can be cooled first, and then the battery cells 201 on the periphery of the battery 1000 are cooled. Since the heat dissipation of the battery cells 201 on the periphery of the battery 1000 is better than that of the inner battery cells 201, the lower-temperature fluid in the first heat exchange segment 11 can better meet the heat dissipation requirements of the battery cells 201 in the middle of the battery 1000. Meanwhile, since the battery cells 201 at the peripheral edge can directly face the external environment to dissipate heat naturally. When the temperature of the fluid in the second heat exchange segment 12 is slightly higher, the heat dissipation requirements of the peripheral battery cells 201 can still be met, so that the cooling effect of the battery cells 201 on the periphery of the battery 1000 and the cooling effect of the battery cells 201 in the middle of the battery 1000 are roughly the same, and then the temperature of the battery cells 201 on the periphery of the battery 1000 and the temperature of the battery cells 201 in the middle of the battery 1000 are relatively consistent after cooling, thereby making the temperature distribution inside the battery 1000 more uniform.

When the heat exchange member 100 is used to heat the battery assembly 200, the fluid can flow from the first heat exchange segment 11 to the second heat exchange segment 12, but the fluid can also flow from the second heat exchange segment 12 to the first heat exchange segment 11. Illustratively, when the fluid flows from the second heat exchange segment 12 to the first heat exchange segment 11, the battery cells 201 on the periphery of the battery assembly 200 can be heated first, and then the battery cells 201 in the middle of the battery assembly 200 are cooled by the fluid. Since the battery cells 201 on the periphery of the battery 1000 dissipate more heat to the external environment, the temperature of the battery cells 201 on the periphery of battery 1000 is more readily lowered. The fluid first heats the battery cells 201 on the periphery of battery 1000. The higher-temperature fluid can simultaneously rise the temperature of the peripheral battery cells 201 and compensate for the heat loss of the battery cell 201 caused by heat dissipation to the external environment, thereby meeting the heating requirements thereof. The battery cells 201 in the middle of the battery assembly 200 have a smaller contact area with the external environment and thus experience less heat loss. The lower-temperature fluid flowing in the first heat exchange segment 11, combined with the heat generated by the battery cell 201 itself, can effectively meet the heating requirements thereof. Therefore, both the battery cells 201 on the periphery of the battery 1000 and the battery cells 201 in the middle of the battery assembly 200 achieve substantially equivalent heating effects, which thus makes the temperature of the battery cells 201 on the periphery of the battery 1000 and the temperature of the battery cells 201 in the middle of the battery assembly 200 more consistent after heating, thereby making the temperature distribution inside the battery 1000 more uniform.

In the above technical solution, by bending the second heat exchange segment 12 to form the U-shaped region 120, and bending the first heat exchange segment 11 to be disposed in the U-shaped region 120, when the heat exchange member 100 exchanges heat with the battery assembly 200, the U-shaped region 120 formed by the peripheral second heat exchange segment 12 can be made to face the peripheral battery cells, and the first heat exchange segment 11 in the U-shaped region 120 can be made to face the inner battery cells, which enables the heat exchange member 100 to compensate for the internal and external temperature difference caused by the heat exchange between the peripheral battery cells 201 and the environment, makes the heat exchange effects of the battery cells 201 on the periphery of the battery assembly 200 and the battery cells 201 inside the battery assembly 200 more consistent, and improves the temperature uniformity of the battery 1000, thereby prolonging the service life of the battery 1000 to a certain extent.

According to some embodiments of the present application, as shown in FIG. 7 to FIG. 13, the second heat exchange segment 12 can be located on an outermost side of the first heat exchange flow channel 10 in a circumferential direction.

That is to say, the second heat exchange segment 12 is formed as the most peripheral flow channel of the first heat exchange flow channel 10. In this way, the second heat exchange segment 12 can be configured to exchange heat with the battery cells 201 on the periphery of the battery 1000, thereby improving the temperature uniformity of the battery cells 201 on the periphery of the battery 1000 in the circumferential direction.

In the above technical solution, by disposing the second heat exchange segment 12 to be located on the outermost side of the first heat exchange flow channel 10 in the circumferential direction, the second heat exchange segment 12 can exchange heat with the battery cell 201 on the outer side of the battery assembly 200 in the circumferential direction, which is beneficial to alleviating the temperature difference of the battery assembly 200 caused by heat exchange with the environment, thereby prolonging the service life of the battery assembly 200 to a certain extent.

According to some embodiments of the present embodiment, the first heat exchange segment 11 and the second heat exchange segment 12 can be bent in a same plane.

In the above technical solution, by disposing the first heat exchange segment 11 and the second heat exchange segment 12 to be bent in the same plane, the first heat exchange flow channel 10 can exchange heat with the battery 1000 in the same plane, which thus can simplify the structure of the first heat exchange flow channel 10, reduce the production difficulty of the first heat exchange flow channel 10, and also reduce the space occupied by the first heat exchange flow channel 10, thereby increasing the volumetric energy density of the battery 1000.

According to some embodiments of the present application, as shown in FIG. 7 to FIG. 13, the first heat exchange segment 11 may include a plurality of first heat exchange portions 111, and the plurality of first heat exchange portions 111 are spaced apart from each other and sequentially bent to be connected.

That is to say, the plurality of first heat exchange portions 111 are connected in sequence, and the connection position of two connected first heat exchange portions 111 is bent. For example, the two connected first heat exchange portions 111 can be bent along a broken line or along an arc. The number of the first heat exchange portions 111 can be two, three, four, five or more.

It should be noted that the shape of the first heat exchange portion 111 can be varied, for example, the first heat exchange portion 111 can be in a straight line shape or an arc shape, etc. The extension direction of the first heat exchange portion 111 can also be varied. For example, the first heat exchange portion 111 can extend in the length direction or the thickness direction of the battery cell 201. In this way, the plurality of first heat exchange portions 111 are bent to be connected in sequence, which enables the first heat exchange segment 11 to form the heat exchange flow channel in the form of an S shape, a Chinese character " 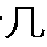 " shape, a V shape, etc.

In the above technical solution, on the one hand, by disposing the plurality of first heat exchange portions 111, the heat exchange area of the first heat exchange segment 11 can be increased, which thus can increase the heat exchange area of the first heat exchange flow channel 10, thereby improving the heat exchange effect of the first heat exchange flow channel 10; on the other hand, since the internal battery cells are wrapped by the external battery cells, the temperature difference between the internal battery cells is not large. Therefore, by disposing the plurality of first heat exchange portions 111, the overall heat exchange effect can be guaranteed while ensuring that the temperature difference between the internal and external battery cells is small.

According to some embodiments of the present application, as shown in FIG. 7 to FIG. 13, the plurality of first heat exchange portions 111 are spaced apart from each other in the first direction (i.e., the Y1 direction shown in FIG. 7), each first heat exchange portion 111 extends linearly in the second direction (i.e., the X1 direction shown in FIG. 7), and the first direction and the second direction are arranged at an angle.

The expression "the first direction and the second direction are arranged at an angle" is intended to indicate that the first direction and the second direction can be arranged perpendicularly or only intersect without being perpendicular. For example, the first direction and the second direction can be arranged at an angle of 30°, 60°, 80°, 120°, 150° or 170°. For example, as shown in FIG. 9, the first direction is the length direction of the battery cell 201, the second direction is the thickness direction of the battery cell 201, the first heat exchange portions 111 extend in the length direction of the battery cell 201 and are spaced apart from each other in the thickness direction of the battery cell 201. In this way, the plurality of first heat exchange portions 111 can be bent to be connected to form the S-shaped heat exchange flow channel, which can achieve heat exchange with a plurality of battery cells 201.

In the above technical solution, by disposing the first heat exchange portion 111 to extend linearly in the second direction, the production difficulty of the first heat exchange portion 111 can be reduced, thereby reducing the production complexity of the first heat exchange flow channel 10. Meanwhile, the straight tube can also increase the flow velocity of the fluid, thereby improving the heat exchange effect of the first heat exchange flow channel 10.

According to some embodiments of the present application, as shown in FIG. 7 to FIG. 13, the first heat exchange segment 11 may further include a first bending portion 112, and the first being portion 112 is in an arc shape and is bent to be connected between two adjacent first heat exchange portions 111.

The first bending portion 112 is in an arc shape, that is, the first bending portion 112 extends along an arc. The fluid flow directions at both ends of the first bending portion 112 have a certain angle. Thus, the first bending portion 112 can change the flow direction of the fluid, thereby allowing the two connected first heat exchange portions 111 to extend and be disposed within a preset region, thereby increasing the heat exchange area of the first heat exchange segment 11 and improving the heat exchange efficiency of the first heat exchange segment 11. Meanwhile, the first bending portion 112 is in an arc shape, where the arc shape can reduce the flow resistance of the fluid and reduce the pressure drop, thereby increasing the flow rate of the fluid and further improving the heat exchange efficiency of the first heat exchange segment 11.

Furthermore, the number of the first bending portion 112 can be one, two, three or more. The first bending portion 112 can allow the first heat exchange segment 11 to be disposed in a winding mode, thereby increasing the heat exchange area of the first heat exchange flow channel 10 and improving the heat exchange efficiency of the first heat exchange flow channel 10.

In the above technical solution, by disposing the first bending portion 112, the flow direction of the fluid in the first heat exchange segment 11 can be changed, achieving a smooth transition connection between the two first heat exchange portions 111 and realizing the winding extension of the first heat exchange flow channel 10, which thus can increase the contact area between a single battery cell and the first heat exchange flow channel 10, thereby increasing the heat exchange area and improving the heat exchange efficiency of the first heat exchange flow channel 10. Meanwhile, the first bending portion 112 is in an arc shape, which can also reduce the flow resistance of the fluid and reduce the pressure drop, thereby increasing the flow rate of the fluid and further improving the heat exchange efficiency of the first heat exchange segment 11. In addition, the first bending portion 112 is disposed, which makes the structure of the first heat exchange segment 11 more compact so as to occupy a smaller overall space, thereby facilitating the miniaturization design of the battery 1000 and ensuring the volumetric energy density of the battery 1000.

According to some embodiments of the present application, as shown in FIG. 7 to FIG. 13, the first bending portion 112 can be in a shape of a semi-circle arc.

That is to say, the first bending portion 112 can extend along a semi-circle arc. Specifically, the first bending portion 112 can extend along the semi-circle arc that protrudes away from the direction of the two first heat exchange portions 111 connected by the first bending portion 112. The angle between an inlet and an outlet of the first bending portion 112 is 180°, and the flow directions at the outlet and the inlet of the first bending portion 112 are opposite, which makes the two adjacent first heat exchange portions 111 closer, so that the structure of the entire first heat exchange segment 11 is more compact and reliable. The first bending portion 112 is configured to connect two first heat exchange portions 111 that are disposed parallel to each other and spaced apart from each other. In other embodiments, the bending degree of the first bending portion 112 can be adjusted as needed, for example, it can be 150°, 135°, etc., which is not limited in the embodiments of the present application.

Two first heat exchange portions 111 can be connected by the first bending portion 112 to form a "U"-shaped heat exchange channel. The first heat exchange segment 11 can include one or more "U"-shaped heat exchange channels. The plurality of "U"-shaped heat exchange channels are sequentially connected, and the connected "U"-shaped heat exchange channels are connected by the first bending portion 112.

In the above technical solution, by disposing the first bending portion 112 to be in the semi-circle arc shape, the design diversity of the heat exchange flow channel can be increased, thereby improving the compatibility between the heat exchange member 100 and the battery 1000; and meanwhile, the structure in the semi-circle arc shape is relatively simple, thereby reducing the production difficulty of the heat exchange member 100 and increasing the production speed of the heat exchange member 100.

According to some embodiments of the present application, as shown in FIG. 7 to FIG. 11 and FIG. 13, the second heat exchange segment 12 may include a second heat exchange portion 121, a third heat exchange portion 122, and a fourth heat exchange portion 125, the second heat exchange portion 121 extends along a first side periphery of the first heat exchange segment 11, the third heat exchange portion 122 is connected between the second heat exchange portion 121 and the first heat exchange segment 11 and extends along a second side periphery of the first heat exchange segment 11, a first end of the third heat exchange portion 121 is connected to the second heat exchange portion 122 at an angle, and a second end of the third heat exchange portion 122 is connected to the first heat exchange segment 11 at an angle; and the fourth heat exchange portion 125 is in communication with the second heat exchange portion 121, is connected to the second heat exchange portion 121 at an angle, and extends along a third side periphery of the first heat exchange segment 11.

It can be understood that the fourth heat exchange portion 125 is connected to the end of the second heat exchange portion 121 away from the third heat exchange portion 122. The fourth heat exchange portion 125, the second heat exchange portion 121, and the third heat exchange portion 122 are sequentially connected to form the U-shaped region 120. The first heat exchange segment 11 is arranged in the U-shaped region 120 and is connected to the end of the third heat exchange portion 122 away from the second heat exchange portion 121.

The first end of the third heat exchange portion 122 is connected to the second heat exchange portion 121 at an angle, that is, the third heat exchange portion 122 is connected to the second heat exchange portion 121, and the third heat exchange portion 122 and the second heat exchange portion 121 are not collinear or parallel, but are arranged at an angle greater than 0° and less than 180°. For example, the third heat exchange portion 122 is connected to the second heat exchange portion 121 and the angle therebetween is 30°, 45°, 60°, 90°, 120°, 135°, 150°, etc.

The second end of the third heat exchange portion 122 is connected to the first heat exchange segment 11 at an angle, that is, the second end of the third heat exchange portion 122 is connected to the second heat exchange portion 121, and the second end of the third heat exchange portion 122 and the first heat exchange segment 11 are arranged at an angle greater than 0° and less than 180°. For example, the second end of the third heat exchange portion 122 is connected to the first heat exchange segment 11 and the angle therebetween is 30°, 45°, 60°, 90°, 120°, 135°, 150°, etc.

The fourth heat exchange portion 125 is in communication with the second heat exchange portion 121 and is connected to the second heat exchange portion 121 at an angle, that is, the fourth heat exchange portion 125 and the second heat exchange portion 121 are connected and arranged at an angle greater than 0° and less than 180°. For example, the fourth heat exchange portion 125 is connected to the second heat exchange portion 121 and the angle therebetween is 30°, 45°, 60°, 90°, 120°, 135°, 150°, etc.

It should be noted that this embodiment defines the second heat exchange segment 12 as being arranged on three sides of the first heat exchange segment 11 in the circumferential direction, and does not define the specific positions of the second heat exchange portion 121, the third heat exchange portion 122, and the fourth heat exchange portion 125 relative to the first heat exchange segment 11. Therefore, the specific positions of the second heat exchange portion 121, the third heat exchange portion 122, and the fourth heat exchange portion 125 can be designed according to actual conditions. For example, if the second heat exchange portion 121 can be arranged on one side of the first heat exchange segment 11 in the first direction, then the third heat exchange portion 122 and the fourth heat exchange portion 125 can be arranged on both sides of the first heat exchange segment 11 in the second direction, respectively; and if the second heat exchange portion 121 is arranged on one side of the first heat exchange segment 11 in the second direction, then the third heat exchange portion 122 and the fourth heat exchange portion 125 can be arranged on both sides of the first heat exchange segment 11 in the first direction, respectively.

In the above technical solution, by arranging the second heat exchange portion 121, the third heat exchange portion 122, and the fourth heat exchange portion 125 on three sides of the first heat exchange segment 11, respectively, the second heat exchange segment 12 can surround the first heat exchange segment 11, thereby increasing the compactness of the arrangement of the first heat exchange flow channel 10, and realizing the miniaturization of the structure of the first heat exchange flow channel 10, which is beneficial to ensuring the volumetric energy density of the battery 1000. Meanwhile, it can also simplify the structure of the first heat exchange flow channel 10 and facilitate the processing and production of the heat exchange member 100.

According to some embodiments of the present application, as shown in FIG. 7 to FIG. 13, the first heat exchange segment 11 may include a plurality of first heat exchange portions 111, and the plurality of first heat exchange portions 111 are sequentially bent to be connected in the first direction; the second heat exchange portion 121 is located on one side of the plurality of first heat exchange portions 111 in the first direction, the third heat exchange portion 122 is located on one side of the plurality of first heat exchange portions 111 in the second direction, and the first direction and the second direction are arranged at an angle; the first end of the third heat exchange portion 122 is connected to an end of the second heat exchange portion 121 in the second direction, and the second end of the third heat exchange portion 122 is connected to the first heat exchange portion, furthest from the second heat exchange portion 121 in the first direction, in the plurality of first heat exchange portions 111, the fourth heat exchange portion 125 is located on the other side of the plurality of first heat exchange portions 111 in the second direction, one end of the fourth heat exchange portion 125 is connected to the end of the second heat exchange portion 121 away from the third heat exchange portion 122, and the other end of the fourth heat exchange portion 125 extends, in the first direction, in a direction away from the second heat exchange portion 121.

The plurality of first heat exchange portions 111 are sequentially bent to be connected in the first direction. That is, the plurality of first heat exchange portions 111 are sequentially arranged in the first direction, and in the first direction, two adjacent and connected first heat exchange portions 111 are bent to be connected. The first heat exchange portion 111 may extend along a straight line parallel to the second direction, or the first heat exchange portion 111 may extend along a straight line arranged at an angle to the second direction, or the first heat exchange portion 111 may extend along a curve and/or a broken line in the second direction.

It can be understood that the fourth heat exchange portion 125, the second heat exchange portion 121, the third heat exchange portion 122, and the first heat exchange portion 111 furthest from the second heat exchange portion 121 are sequentially connected, and the plurality of first heat exchange portions 111 are spaced apart from each other in the first direction and sequentially connected. In this way, the heat exchange fluid can flow sequentially through the fourth heat exchange portion 125, the second heat exchange portion 121, and the third heat exchange portion 122, and then enters the first heat exchange segment 11. In the first heat exchange segment 11, the fluid first passes through the first heat exchange portion 111 furthest from the second heat exchange portion 121, and finally flows to the first heat exchange portion 111 closest to the second heat exchange portion 121. Alternatively, the heat exchange fluid can first flow into the first heat exchange segment 11, and in the first heat exchange segment 11, the fluid first flows through the first heat exchange portion 111 closest to the second heat exchange portion 121, flows out from the first heat exchange portion 111 furthest from the second heat exchange portion 121, then flows to the third heat exchange portion 122, and then flows sequentially through the second heat exchange portion 121 and the fourth heat exchange portion 125 through the third heat exchange portion 122.

In addition, the expression "the first direction and the second direction are arranged at an angle" is intended to indicate that the first direction and the second direction can be arranged perpendicularly or can only intersect without being perpendicular. For example, the first direction and the second direction can be arranged at an angle of 30°, 60°, 80°, 120°, 150° or 170°.

For example, as shown in FIG. 9, the first direction can be the length direction of the battery cell 201, i.e., the Y1 direction shown in FIG. 9, and the second direction is the thickness direction of the battery cell 201, i.e., the X1 direction shown in FIG. 9. Taking the first heat exchange flow channel 10 arranged away from the origin of coordinates in the Y1 direction in the figure as an example, the first heat exchange portion 111 extends along a straight line in the X1 direction, and the plurality of first heat exchange portions 111 are spaced apart from each other in the Y1 direction. The second heat exchange portion 121 is arranged on the side of the plurality of first heat exchange portions 111 away from the origin of coordinates in the Y1 direction, extends along a straight line in the X1 direction, and is configured to exchange heat with the side edge of the battery assembly 200 away from the origin of coordinates in the Y1 direction. The third heat exchange portion 122 is arranged on the side of the plurality of first heat exchange portions 111 close to the origin of coordinates in the X1 direction and extends along a straight line in the Y1 direction. The third heat exchange portion 122 is configured to exchange heat with the side edge of the battery assembly 200 close to the origin of coordinates in the X1 direction. The fourth heat exchange portion 125 is arranged on the side of the plurality of first heat exchange portions 111 away from the origin of coordinates in the X1 direction and extends along a straight line in the Y1 direction. The fourth heat exchange portion 125 can be configured to exchange heat with the side edge of the battery assembly 200 away from the origin of coordinates in the X1 direction.

In the above technical solution, by disposing the plurality of first heat exchange portions 111 to be sequentially bent to be connected in the first direction, the second heat exchange portion 121 to be located on one side of the plurality of first heat exchange portions 111 in the first direction, the third heat exchange portion 122 to be located on one side of the plurality of first heat exchange portions 111 in the second direction, and the fourth heat exchange portion 125 to be located on the other side of the plurality of first heat exchange portions 111 in the second direction, the positional relationship of the second heat exchange portion 121, the third heat exchange portion 122, the fourth heat exchange portion 125, and the first heat exchange portion 111 is defined, and the layout of the first heat exchange flow channel 10 is further defined, thereby simplifying the structure of the first heat exchange flow channel 10, and facilitating processing and manufacturing.

According to some embodiments of the present application, as shown in FIG. 9 to FIG. 11 and FIG. 13, the third heat exchange portion 122 and the fourth heat exchange portion 125 extend in the first direction (e.g., the Y1 direction shown in FIG. 9), and both the first heat exchange portion 111 and the second heat exchange portion 121 extend in the second direction.

Furthermore, both the third heat exchange portion 122 and the fourth heat exchange portion 125 extend linearly in the first direction, and both the first heat exchange portion 111 and the second heat exchange portion 121 extend linearly in the second direction. The linear structure is simple, thereby making production convenient and facilitating arrangement, which can further reduce the production complexity and the production costs of the first heat exchange flow channel 10.

In the above technical solution, by disposing the third heat exchange portion 122 and the fourth heat exchange portion 125 to extend in the first direction, and both the first heat exchange portion 111 and the second heat exchange portion 121 to extend in the second direction, it facilitates arranging the first heat exchange flow channel 10 in the winding mode, thereby reducing the production difficulty of the first heat exchange flow channel 10 and reducing the production costs of the heat exchange member 100.

According to some embodiments of the present application, as shown in FIG. 9 to FIG. 11 and FIG. 13, both the third heat exchange portion 122 and the fourth heat exchange portion 125 extend in the first direction, and in the first direction, a length b1 of the fourth heat exchange portion 125 is less than or equal to a length a1 of the third heat exchange portion 122.

When the length b1 of the fourth heat exchange portion 125 is equal to the length a1 of the third heat exchange portion 122, the fourth heat exchange portion 125, the second heat exchange portion 121, and the third heat exchange portion 122 are sequentially connected to form the standard U-shaped flow channel. When the length b1 of the fourth heat exchange portion 125 is less than the length a1 of the third heat exchange portion 122, it facilitates avoiding other flow channel segments of the first heat exchange flow channel 10 (for example, avoiding the first input/output segment 15 shown in FIG. 9), avoiding other heat exchange flow channels or avoiding other parts, which thus is beneficial for the layout of the first heat exchange flow channel 10, achieving a compact structure.

In the above technical solution, by setting the length of the fourth heat exchange section 125 to be equal to the length of the third heat exchange section 122, the dimensions of the two ends of the U-shaped region 120 can be made close, which is beneficial to controlling the temperature difference of the battery cells 201 at both ends of the battery assembly 200 in the second direction and improving the temperature uniformity of the battery assembly 200. By setting the length of the fourth heat exchange section 125 to be less than the length of the third heat exchange section 122 in the first direction, it is convenient for the fourth heat exchange section 125 to be connected to the current collector, and the fourth heat exchange section 125 can also avoid other flow channel sections, other flow channel structures or other components of the first heat exchange flow channel 10.

According to some embodiments of the present application, as shown in FIG. 9 to FIG. 11, the fourth heat exchange portion 125 extends in the first direction and extends to a position close to the first heat exchange portion, furthest from the second heat exchange portion 121, in the plurality of first heat exchange portions 111.

Specifically, the fourth heat exchange portion 125 extends in the first direction. One end of the fourth heat exchange portion 125 is connected to the second heat exchange portion 121, and the other end of the fourth heat exchange portion 125 extends to a position close to the first heat exchange portion, furthest from the second heat exchange portion 121, in the plurality of first heat exchange portions 111. That is, the other end of the fourth heat exchange portion 125 extends to be flush with the first heat exchange portion 111 furthest from the second heat exchange portion 121, or the other end of the fourth heat exchange portion 125 extends to be close to the first heat exchange portion 111 furthest from the second heat exchange portion 121, or the other end of the fourth heat exchange portion 125 extends beyond the first heat exchange portion 111 furthest from the second heat exchange portion 121.

This can increase the length of the fourth heat exchange portion 125, increase the heat exchange area between the fourth heat exchange portion 125 and the battery assembly 200, further improves the heat exchange effect of the heat exchange member 100, and also benefits the layout of the first heat exchange flow channel 10.

In the above technical solution, by disposing the fourth heat exchange portion 125 to extend in the first direction to a position close to the first heat exchange portion, furthest from the second heat exchange portion 121, in the plurality of first heat exchange portions 111, the heat exchange area of the fourth heat exchange portion 125 can be increased, so that the first heat exchange flow channel 10 can exchange heat with the plurality of battery cells 201 arranged corresponding to the first heat exchange flow channel 10 as much as possible, thereby improving the heat exchange comprehensiveness of the first heat exchange flow channel 10 and further improving the heat exchange effect of the battery 1000.

According to some embodiments of the present application, as shown in FIG. 12, the first heat exchange segment 11 may include a plurality of first heat exchange portions 111, and the plurality of first heat exchange portions 111 are sequentially bent to be connected in the first direction; the second heat exchange portion 121 is located on one side of the plurality of first heat exchange portions 111 in the second direction, and the third heat exchange portion 122 is located on one side of the plurality of first heat exchange portions 111 in the first direction, and the first direction and the second direction are arranged at an angle; the first end of the third heat exchange portion 122 is connected to one end of the second heat exchange portion 121 in the first direction, the second end of the third heat exchange portion 122 is connected to the first heat exchange portion, closest to the third heat exchange portion 122 in the first direction, in the plurality of first heat exchange portions 111, the fourth heat exchange portion 125 is located on the other side of the plurality of first heat exchange portions 111 in the first direction, one end of the fourth heat exchange portion 125 is connected to an end of the second heat exchange portion 121 away from the third heat exchange portion 122, and the other end of the fourth heat exchange portion 125 extends, in the second direction, in a direction away from the second heat exchange portion 121.

The plurality of first heat exchange portions 111 are sequentially bent to be connected in the first direction. That is, the plurality of first heat exchange portions 111 are sequentially arranged in the first direction, and in the first direction, two adjacent and connected first heat exchange portions 111 are bent to be connected. The first heat exchange portion 111 may extend along a straight line parallel to the second direction, or the first heat exchange portion 111 may extend along a straight line arranged at an angle to the second direction, or the first heat exchange portion 111 may extend along a curve and/or a broken line in the second direction.

It can be understood that the fourth heat exchange portion 125, the second heat exchange portion 121, the third heat exchange portion 122, and the first heat exchange portion 111 closest to the third exchange portion 122 are sequentially connected, and the plurality of first heat exchange portions 111 are spaced apart from each other in the first direction and sequentially connected. In this way, the fluid can flow sequentially through the fourth heat exchange portion 125, the second heat exchange portion 121, and the third heat exchange portion 122, and then enter the first heat exchange segment 11. In the first heat exchange segment 11, the fluid first passes through the first heat exchange portion 111 closest to the third heat exchange portion 122, and finally flows to the first heat exchange portion 111 furthest from the third heat exchange portion 122. Alternatively, the fluid can first flow into the first heat exchange segment 11, and in the first heat exchange segment 11, the fluid first flows through the first heat exchange portion 111 furthest from the third heat exchange portion 122, flows out from the first heat exchange portion 111 closest to the third heat exchange portion 122, then flows to the third heat exchange portion 122, and then flows sequentially through the second heat exchange portion 121 and the fourth heat exchange portion 125 via the third heat exchange portion 122.

In addition, the expression "the first direction and the second direction are arranged at an angle" is intended to indicate that the first direction and the second direction can be arranged perpendicularly or can only intersect without being perpendicular. For example, the first direction and the second direction can be arranged at an angle of 30°, 60°, 80°, 120°, 150° or 170°.

For example, as shown in FIG. 9, the first direction can be the length direction of the battery cell 201, i.e., the Y1 direction shown in FIG. 9, and the second direction is the thickness direction of the battery cell 201, i.e., the X1 direction shown in FIG. 9. Taking the first heat exchange flow channel 10 arranged away from the origin of coordinates in the Y1 direction in the figure as an example, the first heat exchange portion 111 extends along a straight line in the X1 direction, and the plurality of first heat exchange portions 111 are spaced apart from each other in the Y1 direction. The second heat exchange portion 121 is arranged on the side of the plurality of first heat exchange portions 111 close to the origin of the coordinates in the X1 direction, extends along a straight line in the Y1 direction, and is configured to exchange heat with the side edge of the battery assembly 200 close to the origin of coordinates in the X1 direction. The third heat exchange portion 122 is arranged on the side of the plurality of first heat exchange portions 111 away from the origin of coordinates in the Y1 direction and extends along a straight line in the X1 direction. The third heat exchange portion 122 is configured to exchange heat with the side edge of the battery assembly 200 away from the origin of coordinates in the Y1 direction. The fourth heat exchange portion 125 is arranged on the side of the plurality of first heat exchange portions 111 close to the origin of coordinates in the Y1 direction, extends along a straight line in the X1 direction, and can be configured to exchange heat with the side edge of the battery assembly 200 close to the origin of coordinates in the Y1 direction.

In the above technical solution, by disposing the plurality of second heat exchange portions 121 to be located on one side of the plurality of first heat exchange portions 111 in the second direction, the third heat exchange portion 122 to be located on one side of the plurality of first heat exchange portions 111 in the first direction, and the fourth heat exchange portion 125 to be located on the other side of the plurality of first heat exchange portions 111 in the first direction, the layout of the other first heat exchange flow channel 10 is defined, so that the diversity of the first heat exchange flow channel 10 can be increased and the heat exchange requirements of different batteries 1000 can be met, thereby simplifying the structure of the first heat exchange flow channel 10, and facilitating processing and manufacturing.

According to some embodiments of the present application, as shown in FIG. 12, the first heat exchange portion 111, the third heat exchange portion 122, and the fourth heat exchange portion 125 extend in the second direction (e.g., the X1 direction shown in FIG. 12), and the second heat exchange portion 121 extends in the first direction (e.g., the Y1 direction shown in FIG. 12).

Furthermore, the first heat exchange portion 111, the third heat exchange portion 122, and the fourth heat exchange portion 125 extend linearly in the second direction, and the second heat exchange portion 121 extends linearly in the first direction. The linear structure is simple, thereby making production convenient and facilitating arrangement, which can further reduce the production complexity and the production costs of the first heat exchange flow channel 10.

In the above technical solution, by disposing the first heat exchange portion 111, the third heat exchange portion 122, and the fourth heat exchange portion 125 to extend in the second direction, and the second heat exchange portion 121 to extend in the first direction, it facilitates arranging the first heat exchange flow channel 10 in the winding mode, thereby reducing the production difficulty of the first heat exchange flow channel 10 and reducing the production costs of the heat exchange member 100. Meanwhile, such arrangement further makes the structure of the first heat exchange flow channel 10 more compact and reliable.

According to some embodiments of the present application, as shown in FIG. 12, the first heat exchange portion 111 and the third heat exchange portion 122 extend in the second direction, the second heat exchange portion 121 extends in the first direction, and in the second direction, a length a2 of the third heat exchange portion 122 is greater than or equal to a length c1 of the first heat exchange portion 111.

In the above technical solution, by setting the length a2 of the third heat exchange portion 122 to be greater than the length c1 of the first heat exchange portion 111 in the second direction, the first heat exchange segment 11 can be wrapped in the U-shaped region 120 of the second heat exchange segment 12, increasing the length of the third heat exchange portion 122 and increasing the heat exchange area of the third heat exchange portion 122, so that the second heat exchange segment 12 can define, in an enclosing mode, a larger U-shaped region 120, thereby improving the heat exchange effect of the heat exchange member 100. By setting the length a2 of the third heat exchange portion 122 to be equal to the length c1 of the first heat exchange portion 111, the length dimensions of the third heat exchange portion 122 of the first heat exchange flow channel 10 extending in the second direction and the plurality of first heat exchange portions 121 are close, which is beneficial to controlling the temperature difference of the battery assembly 200 in the first direction, thereby improving the temperature uniformity of the battery assembly 200.

According to some embodiments of the present application, as shown in FIG. 7 to FIG. 11 and FIG. 13, the second heat exchange segment 12 may further include a second bending portion 123 and a third bending portion 124, both the second bending portion 123 and the third bending portion 124 are in an arc shape, the second bending portion 123 is connected between the first end of the third heat exchange portion 122 and the second heat exchange portion 121, and the third bending portion 124 is connected between the second end of the third heat exchange portion 122 and the first heat exchange portion 111.

The second bending portion 123 and the third bending portion 124 are configured to connect the second heat exchange portion 121 with the third heat exchange portion 122 and the third heat exchange portion 122 with the first heat exchange portion 111, respectively. The second bending portion 123 is in an arc shape, that is, the second bending portion 123 extends along an arc, and the fluid flow directions at both ends of the second bending portion 123 have a certain angle. The third bending portion 124 is in an arc shape, that is, the third bending portion 124 extends along an arc, and the fluid flow directions at both ends of the third bending portion 124 have a certain angle.

Thus, the second bending portion 123 and the third bending portion 124 can change the flow direction of the fluid, so that the second heat exchange segment 12 extends within a preset region and is configured to exchange heat with the battery assembly 200. Meanwhile, the second bending portion 123 and the third bending portion 124 in the arc shape can reduce the flow resistance of the fluid and reduce the pressure drop, thereby increasing the flow rate of the fluid and further improving the heat exchange efficiency of the first heat exchange flow channel 10.

In the above technical solution, by disposing the second bending portion 123 and the third bending portion 124, the flow direction of the fluid within the first heat exchange flow channel 10 can be changed, thereby achieving a smooth transition connection between the third heat exchange portion 122 and the second heat exchange portion 121, as well as a smooth transition connection between the third heat exchange portion 122 and the first heat exchange portion 111. Thus, the second bending portion 123 and third bending portion 124 can reduce the flow resistance of the fluid flowing within the second heat exchange segment 12, thereby reducing the pressure drop, increasing the flow velocity of the fluid, and further enhancing the heat exchange efficiency of the first heat exchange flow channel 10. In addition, by disposing the second bending portion 123 and the third bending portion 124, the first heat exchange flow channel 10 can be arranged in a winding mode, which can increase the heat exchange area of the first heat exchange flow channel 10 and make the structure more compact, and is more conducive to realizing the miniaturization design of the battery 1000, thereby improving the volumetric energy density of the battery 1000.

According to some embodiments of the present application, as shown in FIG. 7 to FIG. 11 and FIG. 13, the second bending portion 123 can be in a shape of a quarter-circle arc.

That is to say, the second bending portion 123 may extend along a semi-circle arc. Specifically, the first bending portion 112 may extend along a quarter-circle arc that protrudes away from the first connecting segment. The angle between an inlet and an outlet of the second bending portion 123 can be 90°. The second bending portion 123 is similar to a 90° elbow in a pipe material, which can change the direction of the flow channel, so that the flow direction of the fluid changes by 90° after the fluid passes through the second bending portion 123. For example, the flow direction of the liquid can be changed from the Y1 direction to the X1 direction, or from the X1 direction to the Y1 direction. The second bending portion 123 connects the second heat exchange portion 121 and the third heat exchange portion 122. In this case, the second heat exchange portion 121 and the third heat exchange portion 122 are arranged perpendicularly to each other, which thus allows for a more organized layout of the second heat exchange segment 12, enabling the flow channel of the second heat exchange segment 12 to better fit the layout of the battery assembly 200. Thus, this can enhance the effect of heat exchange of the second heat exchange segment 12 with the battery assembly 200.

In other embodiments, the bending angle of the second bending portion 123 may also be adjusted as required, such as to 50°, 80°, 120°, 135°, 150°, etc., which is not limited in the embodiments of the present application.

In the above technical solution, by setting the second bending portion 123 to be in the shape of a quarter-circle arc, the flow direction of the fluid can be changed from the original flow direction to a direction perpendicular to the original flow direction after the fluid passes through the second bending portion 123. Meanwhile, the arc shape can also reduce the flow resistance of the fluid, which allows the fluid to flow smoothly in the second bending portion 123, thereby effectively preventing the decline of the heat exchange efficiency caused by slow flow of the fluid.

According to some embodiments of the present application, as shown in FIG. 7 to FIG. 11 and FIG. 13, the third bending portion 124 is in a shape of a quarter-circle arc.

That is to say, the third bending portion 124 can extend along a semi-circle arc. Specifically, the third bending portion 124 can extend along the quarter-circle arc that protrudes away from the first connecting segment. The angle between an inlet and an outlet of the third bending portion 124 is 90°. The third bending portion 124 is similar to a 90° elbow in a pipe material, which can change the direction of the flow channel, so that the flow direction of the fluid changes by 90° after the fluid passes through the third bending portion 124. For example, the flow direction of the liquid can be changed from the Y1 direction to the X1 direction, or from the X1 direction to the Y1 direction. The third bending portion 124 connects the third heat exchange portion 122 and the first heat exchange portion 111. In this case, the third heat exchange portion 122 and the first heat exchange portion 111 are arranged perpendicularly to each other, which thus allows for a more organized layout of the first heat exchange flow channel 10, enabling the first heat exchange flow channel 10 to better fit the layout of the battery assembly 200. Therefore, this can enhance the effect of heat exchange of the first heat exchange flow channel with the battery assembly 200.

In other embodiments, the bending angle of the third bending portion 124 may also be adjusted as required, such as to 50°, 80°, 120°, 135°, 150°, etc., which is not limited in the embodiments of the present application.

In the above technical solution, by setting the third bending portion 124 to be in the shape of a quarter-circle arc, the flow direction of the fluid can be changed from the original flow direction to a direction perpendicular to the original flow direction after the fluid passes through the third bending portion 124. Meanwhile, the third bending portion 124 in the arc shape can also reduce the flow resistance of the fluid, which allows the fluid to flow smoothly in the third bending portion 124, thereby effectively preventing the decline of the heat exchange efficiency caused by slow flow of the fluid.

According to some embodiments of the present application, as shown in FIG. 10, the second heat exchange segment 12 may further include a fifth heat exchange portion 127, the fifth heat exchange portion 127 extends along a fourth side periphery of the first heat exchange segment 11 and closes at least part of an opening of the U-shaped region 120 formed by the second heat exchange portion 121, the third heat exchange portion 122, and the fourth heat exchange portion 125.

It can be understood that the fifth heat exchange portion 127 can close part of the opening of the U-shaped region 120 or completely close the opening of the U-shaped region 120. Thus, the second heat exchange segment 12 can basically cover the peripheral edge of the battery assembly 200 and exchange heat with the peripheral edge of the battery assembly 200. In this way, the second heat exchange segment 12 can exchange heat with all or most of the peripheral edge of the battery assembly 200. Therefore, the structure of the first heat exchange flow channel 10 can be disposed according to the actual arrangement mode or heat exchange requirements of the battery assembly 200, and the second heat exchange segment 12 provided with the fifth heat exchange portion 127 is disposed to optimize the heat exchange structure of the first heat exchange flow channel 10, thereby improving the heat exchange efficiency.

In the above technical solution, by disposing the fifth heat exchange portion 127, the second heat exchange segment 12 can perform heat exchange on four peripheral edges of the battery assembly 200, so that the second heat exchange segment 12 of one first heat exchange flow channel 10 can be used to perform heat exchange on the four peripheral edges of the battery assembly 200. Thus, the heat exchange effect of the four peripheral edges of the battery assembly 200 can be enhanced, thereby improving the temperature uniformity of the battery assembly 200.

According to some embodiments of the present application, as shown in FIG. 10, the fifth heat exchange portion 127 is arranged opposite to the second heat exchange portion 121, and the fifth heat exchange portion 127 is connected between the second end of the third heat exchange portion 122 and the first heat exchange segment 11, connected to the third heat exchange portion 122 at an angle, and connected to the first heat exchange segment 11 at an angle.

It should be noted that in the above embodiment, the second heat exchange portion 121 is arranged on one side of the first heat exchange segment 11 in the first direction (e.g., the side of the plurality of first heat exchange portions 111 in FIG. 10 away from the origin of coordinates in the Y1 direction), the fifth heat exchange portion 127 is arranged opposite to the second heat exchange portion 121, that is, the fifth heat exchange portion 127 is arranged on the other side of the first heat exchange segment 11 in the first direction (e.g., the side of the plurality of first heat exchange portions 111 in FIG. 10 close to the origin of coordinates in the Y1 direction), the third heat exchange portion 122 is arranged on one side of the first heat exchange segment 11 in the second direction (e.g., the side of the plurality of first heat exchange portions 111 in FIG. 10 close to the origin of coordinates in the X1 direction), and both ends of the third heat exchange portion 122 in the Y1 direction are respectively connected to the second heat exchange portion 121 and the fifth heat exchange portion 127.

The fifth heat exchange portion 127 is connected to the third heat exchange portion 122 at an angle, for example, the fifth heat exchange portion 127 and the third heat exchange portion 122 are connected and arranged at an angle greater than 0° and less than or equal to 180°. For example, the angle between the fifth heat exchange portion 127 and the third heat exchange portion 122 is 30°, 45°, 60°, 90°, 120°, 135°, 150°, etc. The fifth heat exchange portion 127 is connected to the first heat exchange segment 11 at an angle, for example, the fifth heat exchange portion 127 and the first heat exchange segment 11 are connected and arranged at an angle greater than 0° and less than or equal to 180°. For example, the angle between the fifth heat exchange portion 127 and the third heat exchange portion 122 is 30°, 45°, 60°, 90°, 120°, 135°, 150°, etc.

Furthermore, the fifth heat exchange portion 127 and the third heat exchange portion 122 can be connected by an arc segment, for example, the fifth heat exchange portion 127 and the third heat exchange portion 122 can be connected by a quarter-circle arc.

Furthermore, the fifth heat exchange portion 127 and the first heat exchange segment 11 can be connected by an arc segment, for example, the fifth heat exchange portion 127 and the first heat exchange segment 11 can be connected by a semi-circle arc.

In the above technical solution, by disposing the fifth heat exchange portion 127 opposite to the second heat exchange portion 121 and connecting the fifth heat exchange portion 127 between the third heat exchange portion 122 and the first heat exchange segment 11, the structure of the first heat exchange flow channel 10 can be further optimized according to the heat exchange requirements of the battery assembly 200.

In some other embodiments, as shown in FIG. 10, the fifth heat exchange portion 127 is arranged opposite to the second heat exchange portion 121, one end of the fifth heat exchange portion 127 is connected to the end of the fourth heat exchange portion 125 away from the second heat exchange portion 121, and the fifth heat exchange portion 127 and the fourth heat exchange portion 125 are connected at an angle.

The fifth heat exchange portion 127 and the fourth heat exchange portion 125 are connected at an angle, for example, the fifth heat exchange portion 127 and the fourth heat exchange portion 125 are connected and arranged at an angle greater than 0° and less than or equal to 180°. For example, the angle between the fifth heat exchange portion 127 and the third heat exchange portion 122 is 30°, 45°, 60°, 90°, 120°, 135°, 150°, etc.

For example, referring to FIG. 12, the second heat exchange portion 121 and the fifth heat exchange portion 127 are respectively arranged on both sides of the first heat exchange segment 11 in the X1 direction, the third heat exchange portion 122 and the fourth heat exchange portion 125 are respectively arranged on both sides of the first heat exchange segment 11 in the Y1 direction, the fifth heat exchange portion 127 extends in the Y1 direction, the end of the fifth heat exchange portion 127 close to the origin of coordinates in the Y1 direction is connected to the fourth heat exchange portion 125, and the end of the fifth heat exchange segment away from the origin of coordinates in the Y1 direction extends toward the third heat exchange segment 13.

The fifth heat exchange portion 127 and the fourth heat exchange portion 125 can be connected by an arc, for example, the fifth heat exchange portion 127 and the fourth heat exchange portion 125 can be connected by a quarter-circle arc.

In the above technical solution, by disposing the fifth heat exchange portion 127 opposite to the second heat exchange portion 121 and connecting the fifth heat exchange portion 127 to the fourth heat exchange portion 125, the structure of the first heat exchange flow channel 10 can be further optimized according to the heat exchange requirements of the battery assembly 200.

In the above technical solution, by disposing the fifth heat exchange portion 127 opposite to the second heat exchange portion 121, and connecting the fifth heat exchange portion 127 between the second end of the third heat exchange portion 122 and the first heat exchange segment 11, or connecting one end of the fifth heat exchange portion 127 to the end of the fourth heat exchange portion 125 away from the second heat exchange portion 121, various arrangements of the heat exchange flow channel can be achieved, thereby meeting the heat exchange requirements of various batteries 1000.

According to some embodiments of the present application, as shown in FIG. 9 to FIG. 13, the first heat exchange flow channel 10 may further include a third heat exchange segment 13, the first heat exchange segment 11 is connected between the third heat exchange segment 13 and the second heat exchange segment 12, and the third heat exchange segment 13 and the first heat exchange segment 11 are connected at an angle.

That is to say, in the first heat exchange flow channel 10, the second heat exchange segment 12, the first heat exchange segment 11, and the third heat exchange segment 13 are sequentially connected. The fluid can flow from the second heat exchange segment 12 through the first heat exchange segment 11 to the third heat exchange segment 13, or can flow from the third heat exchange segment 13 through the first heat exchange segment 11 to the second heat exchange segment 12.

The third heat exchange segment 13 and the first heat exchange segment 11 are connected and arranged at an angle greater than 0° and less than or equal to 180°. For example, the angle between the third heat exchange segment 13 and the first heat exchange segment 11 is 30°, 45°, 60°, 90°, 120°, 135°, 150°, etc.

In the above technical solution, by disposing the third heat exchange segment 13, the heat exchange area of the first heat exchange flow channel 10 can further be increased, thereby improving the heat exchange effect of the first heat exchange flow channel 10.

According to some embodiments of the present application, as shown in FIG. 9 to FIG. 13, the first heat exchange segment 11 includes a plurality of first heat exchange portions 111, the plurality of first heat exchange portions 111 are sequentially connected in the first direction (e.g., the Y1 direction shown in FIG. 9); and the third heat exchange segment 13 is arranged on a side of the first heat exchange segment 11 away from the third heat exchange portion 122, and the third heat exchange segment 13 is connected to the first heat exchange portion, closest to the second heat exchange portion 121 in the first direction, in the plurality of first heat exchange portions 111.

Specifically, the third heat exchange segment 13 is arranged adjacent to the fourth heat exchange portion 125 and arranged between the fourth heat exchange portion 125 and the first heat exchange portion 111. Thus, the third heat exchange segment 13 is also arranged on the outer side of the first heat exchange segment 11 in the circumferential direction. Therefore, the heat exchange area of the first heat exchange flow channel 10 in the circumferential direction can be increased, and the heat exchange efficiency of the first heat exchange flow channel 10 on the peripheral side is improved.

Furthermore, the third heat exchange segment 13 and the fourth heat exchange portion 125 may be arranged both internally and externally on the same side of the first heat exchange segment 11, which can further increase the heat exchange area at this position, thereby enhancing the heat exchange efficiency. In addition, since the third heat exchange segment 13 and the fourth heat exchange portion 125 are located at both ends of the first flow channel in the fluid flow direction, the third heat exchange segment 13 and the fourth heat exchange portion 125 can exchange heat with the same region of the battery assembly 200, thereby improving the temperature uniformity of the region.

Furthermore, the third heat exchange segment 13 is connected to the first heat exchange portion, closest to the second heat exchange portion 121 in the first direction, in the plurality of first heat exchange portions 111. The plurality of first heat exchange portions 111 are connected sequentially in the first direction. The third heat exchange portion 122 is connected to the first heat exchange portion, furthest from the second heat exchange portion 121 in the first direction, in the plurality of first heat exchange portions 111. In this way, during heat exchange with the battery assembly 200, in the first heat exchange flow channel 10, the temperature of the fluid in the first heat exchange portion 111 closest to the second heat exchange portion 121 and the temperature of the fluid in the third heat exchange segment 13, as well as the temperature of the heat exchange fluid in the second heat exchange portion 121 and the fourth heat exchange portion 125, are respectively the relatively highest and lowest temperatures in the first heat exchange flow channel 10, while the temperatures of the remaining parts are moderate.

Due to the heat dissipation effect of the battery 1000, the edge temperature of the battery 1000 is lower than the middle temperature thereof. Thus, the second heat exchange portion 121 and the first heat exchange portion 111 closest to the second heat exchange portion 121 exchange heat in the same region. The third heat exchange segment 13 and the fourth heat exchange portion 125 exchange heat in the same region. This can further improve the temperature uniformity within the battery assembly 200, balance the temperature difference of the battery assembly 200, and thus improve the temperature uniformity of the battery assembly 200.

In the above technical solution, by additionally disposing the third heat exchange segment 13 and disposing the third heat exchange segment 13 to be connected to the first heat exchange portion, closest to the second heat exchange portion 121 in the first direction, in the plurality of first heat exchange portions 111, the heat exchange area can be increased, and the temperature difference of the battery assembly 200 can be balanced, thereby improving the temperature uniformity of the battery assembly 200.

According to some embodiments of the present application, as shown in FIG. 9 to FIG. 13, the third heat exchange segment 13 extends, in the first direction, in a direction away from the second heat exchange portion 121, the first heat exchange portion 111 always extends in the second direction, and the first direction and the second direction are arranged at an angle.

Specifically, one end of the third heat exchange portion 122 is connected to the first heat exchange portion, furthest from the second heat exchange portion 121 in the first direction, in the plurality of first heat exchange portions 111. The other end of the third heat exchange portion 122 extends toward the first heat exchange portion 111 furthest from the second heat exchange portion 121. Meanwhile, the fourth heat exchange portion 125 also extends toward the first heat exchange portion 111 furthest from the second heat exchange portion 121.

Furthermore, the third heat exchange segment 13 is arranged on the side of the first heat exchange segment 11 away from the third heat exchange portion 122, and in this case, the third heat exchange segment 13 and the fourth heat exchange portion 125 are arranged on the same outer side of the first heat exchange portion 111 in the circumferential direction. The third heat exchange segment 13 and the fourth heat exchange portion 125 are respectively located at both ends of the first flow channel in the fluid flow direction. When the third heat exchange segment 13 and the fourth heat exchange portion 125 jointly exchange heat with the same region of the battery assembly 200, the temperature difference at the edge position of the battery assembly 200 can be balanced, thereby improving the temperature uniformity at the edge position of the battery assembly 200.

In the above technical solution, by extending the third heat exchange segment 13, in the first direction, in a direction away from the second heat exchange portion 121, the heat exchange area of the first heat exchange flow channel 10 can be increased, thereby improving the heat exchange effect of the first heat exchange flow channel 10 on the battery cell 201. Simultaneously, when the third heat exchange segment 13 and the fourth heat exchange portion 125 jointly exchange heat with the battery assembly 200, the temperature difference in a region at the edge position of the battery assembly 200 can be balanced, thereby improving the temperature uniformity at the edge position of the battery assembly 200.

According to some embodiments of the present application, as shown in FIG. 9 to FIG. 12, the third heat exchange segment 13 extends in the first direction to a position close to the first heat exchange portion, furthest from the second heat exchange portion 121, in the plurality of first heat exchange portions 111.

In the above technical solution, by disposing the third heat exchange segment 13 to extend in the first direction to a position close to the first heat exchange portion, furthest from the second heat exchange portion 121, in the plurality of first heat exchange portions 111, the length of the third heat exchange portion 122 can be increased, so that the heat exchange area of the third heat exchange portion 122 is increased, thereby improving the heat exchange effect of the first heat exchange flow channel 10.

According to some embodiments of the present application, as shown in FIG. 9 to FIG. 13, the first heat exchange flow channel 10 may further include a fourth bending portion 14, and the fourth bending portion 14 is in an arc shape and bent to be connected between the third heat exchange segment 13 and the first heat exchange portion 111.

The fourth bending portion 14 is in an arc shape, that is, the fourth bending portion 14 extends along an arc. The fluid flow directions at both ends of the fourth bending portion 14 have a certain angle. Thus, the fourth bending portion 14 can change the flow direction of the fluid, thereby allowing the third heat exchange segment 13 to extend in a preset direction. Meanwhile, the arc shape can reduce the flow resistance of the fluid and reduce the pressure drop, thereby increasing the flow rate of the fluid and further improving the heat exchange efficiency of the first heat exchange flow channel 10.

In the above technical solution, by disposing the fourth bending portion 14, the flow direction of the fluid between the third heat exchange segment 13 and the first heat exchange portion 111 can be changed. Meanwhile, the fourth bending portion 14 in the arc shape can reduce the flow resistance of the fluid and reduce the pressure drop, thereby increasing the flow rate of the fluid and further improving the heat exchange efficiency of the first heat exchange flow channel 10. In addition, by disposing the fourth bending portion 14, the first heat exchange flow channel 10 can be arranged in a winding mode, which can increase the heat exchange area of the first heat exchange flow channel 10 and make the structure more compact, and is more conducive to realizing the miniaturization design of the battery 1000, thereby improving the volumetric energy density of the battery 1000.

According to some embodiments of the present application, as shown in FIG. 9 to FIG. 13, the fourth bending portion 14 can be in a shape of a quarter-circle arc.

That is to say, the fourth bending portion 14 can extend along a semi-circle arc. Specifically, the fourth bending portion 14 can extend along the quarter-circle arc that protrudes to the connection position of the second heat exchange portion 121 and the fourth heat exchange portion 125. The angle between an inlet and an outlet of the fourth bending portion 14 is 90°. The fourth bending portion 14 is similar to a 90° elbow in a pipe material, which can change the direction of the flow channel, so that the flow direction of the fluid changes by 90° after the fluid passes through the fourth bending portion 14. For example, the flow direction of the liquid can be changed from the X1 direction to the Y1 direction, or from the Y1 direction to the X1 direction.

Furthermore, the fourth bending portion 14 connects the third heat exchange segment 13 and the first heat exchange portion 111. The third heat exchange segment 13 and the first heat exchange portion 111 can be arranged perpendicularly to each other. The first heat exchange portion 111 extends in the second direction. The third heat exchange segment 13 extends in the first direction. The first direction is perpendicular to the second direction. In this way, a more organized layout of the first heat exchange flow channel 10 can be achieved, enabling the first heat exchange flow channel 10 to better fit the layout of the battery assembly 200. Thus, this enhances the effect of heat exchange of the first heat exchange flow channel with the battery assembly 200.

In other embodiments, the bending angle of the fourth bending portion 14 may also be adjusted as required, such as to 50°, 80°, 120°, 135°, 150°, etc., which is not limited in the embodiments of the present application.

In the above technical solution, by setting the fourth bending portion 14 to be in the shape of a quarter-circle arc, the flow direction of the fluid can be changed from the original flow direction to a direction perpendicular to the original flow direction after the fluid passes through the fourth bending portion 14; and meanwhile, the arc shape can also reduce the flow resistance of the fluid, which allows the fluid to flow smoothly in the fourth bending portion 14, thereby effectively preventing the decline of the heat exchange efficiency caused by slow flow of the fluid.

According to some embodiments of the present application, as shown in FIG. 9 to FIG. 13, the first heat exchange flow channel 10 may further include: a first input/output segment 15, one end of the first input/output segment 15 is connected to the third heat exchange segment 13 at an angle, and the other end of the first input/output segment 15 forms the first inlet/outlet of the first heat exchange flow channel 10.

The first inlet/outlet is configured to allow the fluid to be input or output. When the first inlet/outlet is configured to allow the fluid to be input, the first input/output segment 15 is configured to convey the fluid into the third heat exchange segment 13. When the first inlet/outlet is configured to output the fluid, the first input/output segment 15 is configured to guide the fluid after heat exchange through the first inlet/outlet into the first heat exchange flow channel 10.

The first input/output segment 15 is connected to the third heat exchange segment 13 at an angle, for example, the first input/output segment 15 and the third heat exchange segment 13 are connected and arranged at an angle greater than 0° and less than or equal to 180°. For example, the angle between the first input/output segment 15 and the third heat exchange segment 13 is 30°, 45°, 60°, 90°, 120°, 135°, 150°, etc.

In the above technical solution, by disposing the first input/output segment 15, the external pipeline can be conveniently connected, so that the fluid can enter or be discharged from the first heat exchange flow channel 10. Meanwhile, the fluid entering or being discharged from the first heat exchange flow channel 10 can be guided, so that the fluid can enter or be discharged quickly, thereby improving the heat exchange rate.

According to some embodiments of the present application, as shown in FIG. 9 to FIG. 13, the first input/output segment 15 extends, in the second direction, in a direction away from the first heat exchange segment 11, and the third heat exchange segment 13 extends in the first direction.

It can be understood that a certain angle is formed between the first input/output segment 15 and the third heat exchange segment 13. As a result, a certain space may be formed on the side of the third heat exchange segment 13 facing the first input/output segment 15, which can facilitate the layout of other components within the battery 1000.

In the above technical solution, by disposing the first input/output segment 15 to extend, in the second direction, in the direction away from the first heat exchange segment 11, the pipe layout of the first heat exchange flow channel 10 can be made more reasonable and connection with the external pipe is facilitated. Meanwhile, the first inlet/outlet can be made to be away from the battery assembly 200, which helps to reduce the occurrence of damage to the battery assembly 200 caused by water leakage from the first inlet/outlet.

According to some embodiments of the present application, as shown in FIG. 7 to FIG. 13, the first heat exchange flow channel 10 may further include a fifth bending portion 16, and the fifth bending portion 16 is in an arc shape and bent to be connected between the third heat exchange segment 13 and the first input/output segment 15.

The fifth bending portion 16 is in an arc shape, that is, the fifth bending portion 16 extends along an arc, and the fluid flow directions at both ends of the fifth bending portion 16 have a certain angle. This allows the third heat exchange segment 13 and the first input/output segment 15 to be in communication, enabling the fluid to circulate smoothly from the third heat exchange segment 13 to the first input/output segment 15 or from the first input/output segment 15 to the third heat exchange segment 13, thus achieving liquid input or output of the first input/output segment 15. Meanwhile, the arc shape can also reduce the flow resistance of the fluid and reduce the pressure drop, thereby increasing the flow rate of the fluid and further improving the heat exchange efficiency of the first heat exchange flow channel 10.

In the above technical solution, by disposing the fifth bending portion 16, the fluid can circulate smoothly from the third heat exchange segment 13 to the first input/output segment 15 or from the first input/output segment 15 to the third heat exchange segment 13, thus achieving liquid input or output of the first input/output segment 15. Meanwhile, the fifth bending portion 16 in the arc shape can also reduce the flow resistance of the fluid and reduce the pressure drop, thereby increasing the flow rate of the fluid and further improving the heat exchange efficiency of the first heat exchange flow channel 10.

According to some embodiments of the present application, as shown in FIG. 9 to FIG. 13, the fifth bending portion 16 is in the arc shape, and the central angle corresponding to the fifth bending portion 16 is greater than or equal to 90° and less than 180°.

For example, the central angle corresponding to the fifth bending portion 16 can be 90°, 120°, 150° or 170°.

As shown in FIG. 9, the heat exchange member 100 includes two first heat exchange flow channels 10. The fifth bending portion 16 of the first heat exchange flow channel 10 located on the side away from the origin of coordinates in the Y1 direction is in the shape of a quarter-circle arc. The third heat exchange segment 13 is arranged perpendicular to the first input/output segment 15. Meanwhile, the first input/output segment 15 of the first heat exchange flow channel 10 located on the lower side includes a first extension segment and a second extension segment. The first extension segment is connected between the second extension segment and the third heat exchange segment 13. The first extension segment extends along a straight line inclined relative to the second direction, and the second extension segment extends along a straight line parallel to the second direction. The first extension segment and the third heat exchange segment 13 are connected by the fifth bending portion 16. The central angle corresponding to the arc of the fifth bending portion 16 is greater than 90° and less than 135°.

In the above technical solution, by disposing the fifth bending portion 16 to be in the arc shape, the flow resistance of the fluid can be further reduced, thereby allowing the fluid to flow smoothly within the fifth bending portion 16, and effectively preventing the decline of the heat exchange efficiency caused by slow flow of the fluid. Meanwhile, the central angle corresponding to the fifth bending portion 16 is greater than or equal to 90° and less than 180°, which can also form a certain space on the side of the third heat exchange segment 13 facing the first input/output segment 15, thereby facilitating the arrangement of other components within the battery 1000 and improving the layout rationality of the battery 1000.

According to some embodiments of the present application, as shown in FIG. 7 to FIG. 13, the second heat exchange segment 12 further includes a sixth bending portion 126, and the sixth bending portion 126 is connected between the fourth heat exchange portion 125 and the second heat exchange portion 121.

The sixth bending portion 126 is formed in an arc shape, that is, the sixth bending portion 126 extends along an arc. The fluid flow directions at both ends of the sixth bending portion 126 have a certain angle. Thus, the sixth bending portion 126 can change the flow direction of the fluid, thereby allowing the second heat exchange portion 121 and the fourth heat exchange portion 125 to extend in a preset direction. Meanwhile, the sixth bending portion 126 in the arc shape can reduce the flow resistance of the fluid and reduce the pressure drop, thereby increasing the flow rate of the fluid and further improving the heat exchange efficiency of the first heat exchange flow channel 10.

In the above technical solution, by disposing the sixth bending portion 126, the flow direction of the fluid in the first heat exchange flow channel 10 can be changed, thereby realizing the winding arrangement of the first heat exchange flow channel 10, which thus can increase the heat exchange area of the first heat exchange flow channel 10, thereby improving the heat exchange efficiency of the first heat exchange flow channel 10. Meanwhile, the sixth bending portion 126 is in an arc shape, which can also reduce the flow resistance of the fluid and reduce the pressure drop, thereby increasing the flow rate of the fluid and further improving the heat exchange efficiency of the first heat exchange flow channel 10. In addition, by disposing the sixth bending portion 126, the second heat exchange segment 12 can form the U-shaped region 120, and then the first heat exchange segment is wrapped by the second heat exchange segment 12, thereby increasing the compactness of the arrangement of the first heat exchange flow channel 10, and realizing the miniaturization of the structure of the first heat exchange flow channel 10, which is beneficial to improving the volumetric energy density of the battery.

According to some embodiments of the present application, as shown in FIG. 7 to FIG. 13, the sixth bending portion 126 is in a shape of a quarter-circle arc.

That is to say, the sixth bending portion 126 can extend along a semi-circle arc. Specifically, the sixth bending portion 126 can extend along the quarter-circle arc that protrudes away from the first heat exchange segment 11. The angle between an inlet and an outlet of the sixth bending portion 126 is 90°. The sixth bending portion 126 is similar to a 90° elbow in a pipe material, which can change the direction of the flow channel, so that the flow direction of the fluid changes by 90° after the fluid passes through the sixth bending portion 126. For example, the flow direction of the liquid can be changed from the X1 direction to the Y1 direction, or from the Y1 direction to the X1 direction. The sixth bending portion 126 connects the second heat exchange portion 121 and the fourth heat exchange portion 125. In this case, the second heat exchange portion 121 and the fourth heat exchange portion 125 are arranged perpendicular to each other. In this way, a more organized layout of the second heat exchange flow channel 12 can be achieved, enabling the second heat exchange flow channel 12 to better fit the layout of the battery assembly 200. Thus, this enhances the effect of heat exchange of the second heat exchange segment 12 with the battery assembly 200.

In other embodiments, the bending angle of the sixth bending portion 126 may also be adjusted as required, such as to 50°, 80°, 120°, 135°, 150°, etc., which is not limited in the embodiments of the present application.

In the above technical solution, by setting the sixth bending portion 126 to be in the shape of a quarter-circle arc, the flow direction of the fluid can be changed from the original flow direction to a direction perpendicular to the original flow direction after the fluid passes through the sixth bending portion 126; and meanwhile, the arc shape can further reduce the flow resistance of the fluid, which allows the fluid to flow smoothly in the sixth bending portion 126, thereby effectively preventing the decline of the heat exchange efficiency caused by slow flow of the fluid.

According to some embodiments of the present application, as shown in FIG. 9 to FIG. 13, the first heat exchange flow channel 10 may further include a second input/output segment 17, one end of the second input/output segment 17 is connected to the fourth heat exchange portion 125 at an angle, and the other end of the second input/output segment 17 forms a second inlet/outlet of the first heat exchange flow channel 10.

The second inlet/outlet is configured to input or output of the fluid. When the second inlet/outlet is configured to allow the fluid to be input, the second input/output segment 17 is configured to convey the fluid into the third heat exchange segment 13. When the second inlet/outlet is configured to output the fluid, the second input/output segment 17 is configured to guide the fluid after heat exchange through the second inlet/outlet into the first heat exchange flow channel 10.

The second input/output segment 17 is connected to the fourth heat exchange portion 125 at an angle, for example, the second input/output segment 17 and the fourth heat exchange portion 125 are connected and arranged at an angle greater than 0° and less than or equal to 180°. For example, the angle between the second input/output segment 17 and the fourth heat exchange portion 125 is 30°, 45°, 60°, 90°, 120°, 135°, 150°, etc.

In the above technical solution, by disposing the second input/output segment 17, the external pipeline can be conveniently connected, so that the fluid can enter or be discharged from the first heat exchange flow channel 10 to complete heat exchange on the battery cell 201. Meanwhile, the fluid entering or being discharged from the first heat exchange flow channel 10 can also be guided, so that the fluid can enter or be discharged quickly, thereby increasing the heat exchange rate.

According to some embodiments of the present application, as shown in FIG. 9 to FIG. 13, the second input/output segment 17 extends, in the second direction, in the direction away from the first heat exchange segment 11, and the fourth heat exchange portion 125 extends in the first direction (e.g., the Y1 direction shown in FIG. 9).

It can be understood that a certain angle is formed between the second input/output segment 17 and the fourth heat exchange portion 125. As a result, a certain space may be formed on the side of the fourth heat exchange portion 125 facing the second input/output segment 17, which thus can facilitate the layout of other components (such as high-voltage boxes and other structures) within the battery 1000.

In the above embodiment, by disposing the second input/output segment 17 to extend, in the second direction, in the direction away from the first heat exchange segment 11, the pipe layout of the first heat exchange flow channel 10 can be made more reasonable and connection with the external pipe is facilitated. Meanwhile, the second inlet/outlet can be made to be away from the battery assembly 200, which helps to reduce the occurrence of damage to the battery assembly 200 caused by water leakage from the second inlet/outlet.

According to some embodiments of the present application, as shown in FIG. 9 to FIG. 13, the first heat exchange flow channel 10 may further include a seventh bending portion 18, and the seventh bending portion 18 is in an arc shape and bent to be connected between the fourth heat exchange portion 125 and the second input/output segment 17.

The seventh bending portion 18 is in an arc shape, that is, the seventh bending portion 18 has a certain angle, and thus the seventh bending portion 18 is bent to be connected between the fourth heat exchange portion 125 and the second input/output segment 17, and communication of the fourth heat exchange portion 125 and the second input/output segment 17 can be achieved, thereby enabling the fluid to circulate smoothly from the fourth heat exchange portion 125 to the second input/output segment 17 or from the second input/output segment 17 to the fourth heat exchange portion 125, thus achieving liquid input or output of the second input/output segment 17. Meanwhile, the arc shape can also reduce the flow resistance of the fluid and reduce the pressure drop, thereby increasing the flow rate of the fluid and further improving the heat exchange efficiency of the first heat exchange flow channel 10.

In the above technical solution, by disposing the seventh bending portion 18, the fluid can smoothly circulate from the fourth heat exchange portion 125 to the second input/output segment 17 or from the second input/output segment 17 to the fourth heat exchange portion 125, thereby achieving liquid input or output from the second input/output segment 17. Meanwhile, the seventh bending portion 18 in the arc shape can reduce the flow resistance of the fluid and reduce the pressure drop, thereby increasing the flow rate of the fluid and further improving the heat exchange efficiency of the first heat exchange flow channel 10.

According to some embodiments of the present application, as shown in FIG. 9 to FIG. 13, the seventh bending portion 18 is in the arc shape, and the central angle corresponding to the seventh bending portion 18 is greater than or equal to 90° and less than 180°.

For example, the central angle corresponding to the seventh bending portion 18 can be 90°, 120°, 150° or 170°.

As shown in FIG. 9, the heat exchange member 100 includes two first heat exchange flow channels 10. The seventh bending portion 18 of the first heat exchange flow channel 10 located on the side away from the origin of coordinates in the Y1 direction is in the shape of a quarter-circle arc. The fourth heat exchange portion 125 is arranged perpendicular to the second input/output segment 17. Meanwhile, the second input/output segment 17 of the first heat exchange flow channel 10 located on the lower side includes a third extension segment and a fourth extension segment. The third extension segment is connected between the fourth extension segment and the fourth heat exchange portion 125. The third extension segment extends along a straight line inclined relative to the second direction, and the fourth extension segment extends along a straight line parallel to the second direction. The third extension segment and the fourth heat exchange portion 125 are connected by the seventh bending portion 18. The central angle corresponding to the arc of the seventh bending portion 18 is greater than 90° and less than 135°.

In the above technical solution, by disposing the seventh bending portion 18 to be in the arc shape, the flow resistance of the fluid can be further reduced, thereby allowing the fluid to flow smoothly within the seventh bending portion 18, and effectively preventing the decline of the heat exchange efficiency caused by slow flow of the fluid. Meanwhile, the central angle corresponding to the seventh bending portion 18 is greater than or equal to 90° and less than 180°, which can also form an avoidance space on the side of the fourth heat exchange portion 125 facing the second input/output segment 17, thereby facilitating the arrangement of other components within the battery 1000 and improving the layout rationality of the battery 1000.

According to some embodiments of the present application, as shown in FIG. 7 to FIG. 11 and FIG. 13, the first heat exchange segment 11 is connected downstream of the second heat exchange segment 12 in the fluid flow direction.

That is to say, the fluid first flows through the second heat exchange segment 12 and then flows into the first heat exchange segment 11. The second heat exchange segment 12 is arranged around the first heat exchange segment 11 in the circumferential direction. When the first heat exchange flow channel 10 exchanges heat with the battery assembly 200, the periphery of the battery assembly 200 dissipates heat quickly, especially under low temperature heating working conditions, the high-temperature fluid starts to exchange heat from the second heat exchange segment 12, which can make the first heat exchange flow channel 10 preferentially exchange heat on the outer side of the battery assembly 200 in the circumferential direction, thereby being beneficial to alleviating the temperature difference between the inside and outside of the battery assembly 200 and prolonging the service life of the battery 1000 to a certain extent.

In the above technical solution, by disposing the first heat exchange segment 11 to be connected downstream of the second heat exchange segment 12 in the fluid flow direction, the first heat exchange flow channel 10 can preferentially perform heat exchange on the outer side of the battery 1000 in the circumferential direction, thereby being beneficial to alleviating the temperature difference of the battery 1000 in different environments and prolonging the service life of the battery 1000 to a certain extent.

According to some embodiments of the present application, as shown in FIG. 7 to FIG. 11 and FIG. 13, the heat exchange member 100 is configured such that: when the battery assembly 200 of the battery 1000 is heated, the first heat exchange segment 11 is connected downstream of the second heat exchange segment 12 in the fluid flow direction; and when the battery assembly 200 of the battery 1000 is cooled, the first heat exchange segment 11 is connected upstream of the second heat exchange segment 12 in the fluid flow direction.

Specifically, when the battery assembly 200 of the battery 1000 is heated, the temperature of the fluid flowing inside the heat exchange member 100 is higher than the operating temperature of the battery 1000. The heat exchange member 100 heats the battery assembly 200. The high-temperature fluid first flows into the second heat exchange segment 12 and then flows to the first heat exchange segment 11. The temperature of the fluid flowing inside the second heat exchange segment 12 is higher than the temperature of the fluid inside the first heat exchange segment 11.

Since the high-temperature fluid first enters the second heat exchange segment 12 located on the periphery of the first heat exchange flow channel 10, the second heat exchange segment 12 can first heat the battery cells 201 on the periphery of the battery assembly 200, and then cool the battery cells 201 in the middle of the battery assembly 200 after the fluid enters the first heat exchange segment 11. Since the battery cells 201 on the periphery of the battery 1000 dissipate more heat to the external environment, it is easier to lower the temperature of the battery cells 201 on the periphery of the battery 1000, the battery cells 201 on the periphery of the battery 1000 are heated first by the fluid, the higher-temperature fluid can raise the temperature of the battery cells 201 on the periphery, and meanwhile compensate for the heat loss of the battery cell 201 caused by heat dissipation to the external environment, thereby meeting the heating requirements thereof. The battery cells 201 in the middle of the battery assembly 200 have a less contact area with the external environment, resulting in the minimal heat loss. The lower-temperature fluid flowing in the first heat exchange segment 11 can cooperate with the heat generated by the battery cells 201 themselves to adequately meet the heating requirements thereof. As a result, both the battery cells 201 on the periphery of the battery assembly 200 and the battery cells 201 in the middle of the battery assembly 200 can achieve a basically consistent heating effect. This ensures that the temperatures of the battery cells 201 on the periphery of the battery assembly 200 and the battery cells 201 in the middle of the battery assembly 200 become more uniform after heating, leading to a more even temperature distribution within the battery 1000.

When the battery assembly 200 of the battery 1000 is cooled, the temperature of the fluid flowing inside the heat exchange member 100 is lower than the operating temperature of the battery 1000. The heat exchange member 100 is configured to lower the temperature of the battery 1000. The fluid flows to the second heat exchange segment 12 from the first heat exchange segment 11. The temperature of the fluid flowing inside the first heat exchange segment 11 is lower than the temperature of the fluid inside the second heat exchange segment 12.

When the battery 1000 is cooled, the fluid flows from the first heat exchange segment 11 to the second heat exchange segment 12. That is, the fluid flows from the middle part of the battery assembly 200 to the edge of the battery assembly 200 and exchanges heat. Since the heat dissipation of the battery cells 201 on the periphery of the battery 1000 is better than that of the inner battery cells 201, the lower-temperature fluid in the first heat exchange segment 11 can better meet the heat dissipation requirements of the battery cells 201 in the middle of the battery 1000. The battery cells 201 on the periphery of the battery assembly 200 can directly face the external environment for natural heat dissipation. Even when the temperature of the heat exchange fluid in the second heat exchange segment 12 is slightly higher, the heat dissipation requirements of the peripheral battery cells 201 can still be met, thereby making the cooling effect of the battery cells 201 on the periphery of the battery 1000 and the cooling effect of the battery cells 201 in the middle of the battery 1000 roughly the same. Then, the temperature of the battery cells 201 on the periphery of the battery 1000 and the temperature of the battery cells 201 in the middle of the battery 1000 are relatively consistent after cooling, which reduces the inner and outer temperature difference of the battery assembly 200, thereby making the temperature distribution inside the battery 1000 more uniform.

In the above technical solution, the heat exchange member 100 is configured such that: when the battery assembly 200 of the battery 1000 is heated, the first heat exchange segment 11 is connected downstream of the second heat exchange segment 12 in the fluid flow direction; and when the battery assembly 200 of the battery 1000 is cooled, the first heat exchange segment 11 is connected upstream of the second heat exchange segment 12 in the fluid flow direction, which can further improve the heat exchange effect of the battery 1000, thereby improving the temperature uniformity of the battery assembly 200.

According to some embodiments of the present application, as shown in FIG. 7 to FIG. 13, the heat exchange member 100 is provided with one or more heat exchange flow channels, when a plurality of heat exchange flow channels are disposed, the plurality of heat exchange flow channels are spaced apart from each other in the first direction or arranged around each other, at least one of the heat exchange flow channels is formed as the first heat exchange flow channel 10, and the plurality of heat exchange flow channels are arranged in parallel.

It can be understood that the number of the heat exchange flow channels of the heat exchange member 100 can be one, two, three, four or more. When a plurality of heat exchange flow channels are formed, one of the plurality of heat exchange flow channels can be formed as the first heat exchange flow channel 10, or two, three, four or more heat exchange flow channels can be formed as the first heat exchange flow channel 10, or all the plurality of heat exchange flow channels can be formed as the first heat exchange flow channel 10.

In some embodiments, the plurality of heat exchange flow channels are spaced apart from each other in the first direction. For example, as shown in FIG. 9, the heat exchange member 100 can include two heat exchange flow channels, and the two first heat exchange flow channels 10 are spaced apart from each other in the first direction. Further, both the two heat exchange flow channels can be formed as the first heat exchange flow channel 10. For example, the heat exchange member 100 can include three heat exchange flow channels which are arranged sequentially in the first direction. Furthermore, two of the three heat exchange flow channels constitute the first heat exchange flow channel 10, and one constitutes the second heat exchange flow channel 30, with the second heat exchange flow channel 30 arranged between the two first heat exchange flow channels 10.

In some other embodiments, the plurality of heat exchange flow channels are arranged around each other. For example, as shown in FIG. 8, the heat exchange member 100 is provided with two heat exchange flow channels arranged in parallel, and the two heat exchange flow channels are arranged around each other. Further, both the two heat exchange flow channels can be formed as the first heat exchange flow channel 10. For another example, as shown in FIG. 7, the heat exchange member 100 is provided with three heat exchange flow channels arranged in parallel, and the three heat exchange flow channels are arranged around each other. Further, all the three heat exchange flow channels can be formed as the first heat exchange flow channel.

The plurality of heat exchange flow channels are arranged in parallel, that is, inlets of the plurality of heat exchange flow channels are connected to the same liquid supply pipe, and outlets of the plurality of heat exchange flow channels are connected to the same liquid output pipe.

In the above technical solution, by disposing the heat exchange member 100 to be provided with one or more heat exchange flow channels, and the plurality of heat exchange flow channels to be spaced apart from each other in the first direction or arranged around each other, the diversity of the heat exchange flow channel can be increased, thereby improving the adaptability of the heat exchange member 100, enabling the heat exchange member to meet the needs of different batteries 1000, and further improving the market competitiveness of the battery 1000. Meanwhile, the parallel arrangement of the plurality of heat exchange flow channels enables the plurality of heat exchange flow channels to exchange heat simultaneously, thereby shortening the heat exchange time of the heat exchange member 100 and improving the heat exchange efficiency.

According to some embodiments of the present application, as shown in FIG. 9, FIG. 11, and FIG. 13, the plurality of heat exchange flow channels are spaced apart from each other in the first direction, and two heat exchange flow channels located at both ends in the first direction are both the first heat exchange flow channel 10; and the two first heat exchange flow channels 10 are symmetrically arranged about a centerline of the heat exchange member 100 in the second direction, and the second direction and the first direction are arranged at an angle.

It can be understood that arranging the second heat exchange segment 12 of the first heat exchange flow channel 10 on the periphery of the battery assembly 200 can improve the uniformity of the temperatures inside and outside the battery assembly 200. Therefore, by forming the two heat exchange flow channels at both ends in the first direction as the first heat exchange flow channel 10, the temperature uniformity of the battery cells 201 at both ends of the battery assembly 200 in the first direction can be better, thus achieving overall temperature uniformity of the battery assembly 200.

Furthermore, the fluid flow direction of the two first heat exchange flow channels 10 and the inlet and the outlet at both ends are symmetrically arranged, so that the two first heat exchange flow channels 10 can simultaneously exchange heat with both ends of the battery assembly 200 in the first direction, thereby achieving better temperature uniformity.

The expression "the second direction and the first direction are arranged at an angle" is intended to indicate that the first direction and the second direction can be arranged perpendicularly or can only intersect without being perpendicular. For example, the first direction and the second direction can be arranged at an angle of 30°, 60° or 80°.

In the above technical solution, by disposing two symmetrically arranged first heat exchange flow channels 10, liquid can be input from both sides simultaneously, the liquid input flow rate can be increased, the length of a single heat exchange flow channel can be shortened, the pressure drop in a single heat exchange flow channel can be reduced, and thus the heat exchange efficiency can be improved.

According to some embodiments of the present application, as shown in FIG. 9, FIG. 11, and FIG. 13, the plurality of heat exchange flow channels are symmetrically arranged about the centerline of the heat exchange member 100 in the second direction.

The flow direction of the plurality of heat exchange flow channels and the inlet and the outlet at both ends are also symmetrically arranged, which can divide the heat exchange member 100 into two symmetrically distributed parts. In this way, during the heat exchange process, the fluid distribution of the two symmetrical parts of the heat exchange member 100 is consistent, thereby improving the temperature consistency of the heat exchange regions of the battery assembly 200 corresponding to the two parts of the heat exchange member 100, and further improving the temperature equalization effect of the battery assembly 200.

In the above technical solution, by disposing the plurality of heat exchange flow channels to be symmetrically arranged about the centerline of the heat exchange member 100 in the second direction, the plurality of heat exchange flow channels can exchange heat with the battery assembly 200 simultaneously, thereby improving the heat exchange efficiency. Meanwhile, the temperature consistency of the regions of the battery assembly 200 exchanging heat with the two symmetrically arranged parts of the heat exchange member 100 can also be improved, thereby further improving the temperature equalization effect of the battery assembly 200.

In some embodiments of the present application, the plurality of heat exchange flow channels are asymmetrically arranged about the centerline of the heat exchange member 100 in the second direction, so that the plurality of heat exchange channels can designed according to the actual conditions of the battery assembly 200, thereby enabling the heat exchange member 100 to meet the heat exchange requirements of the battery assembly 200 and further ensuring the heat exchange effect of the battery assembly 200.

According to some embodiments of the present application, as shown in FIG. 13, the plurality of heat exchange flow channels further include at least one second heat exchange flow channel 30, and the second heat exchange flow channel 30 is disposed between the two first heat exchange flow channels 10, where the structure of any second heat exchange flow channel 30 is same as or different from the structure of the first heat exchange flow channel 10.

Specifically, the second heat exchange flow channel 30 is disposed between the two first heat exchange flow channels 10 and is mainly configured to perform heat exchange with the middle position of the battery assembly 200. The temperature of the battery cell 201 disposed in the middle position is relatively balanced. Therefore, the structure of any second heat exchange flow channel 30 can be the same as or different from the structure of the first heat exchange flow channel 10. For example, the structure of the second heat exchange flow channel 30 can be a simple U-shaped structure. Furthermore, the structure of the second heat exchange flow channel 30 can be designed according to the actual heat exchange situation of the battery 1000.

In addition, the number of the second heat exchange flow channel 30 can be one or more. For example, the number of the second heat exchange flow channel 30 can be one, two, three or more. The number of the second heat exchange flow channel 30 can be selected according to the arrangement of the battery assembly 200.

In the above embodiment, by disposing at least one second heat exchange flow channel 30, the arrangement diversity of the heat exchange flow channel can be increased, thereby enabling the heat exchange member 100 to better exchange heat with the battery assembly 200 and improving the heat exchange effect of the heat exchange member 100.

According to some embodiments of the present application, as shown in FIG. 13, the second heat exchange flow channel 30 includes a plurality of fourth heat exchange segments 31, and the plurality of fourth heat exchange segments 31 are sequentially connected in the fluid flow direction, where the fourth heat exchange segment 31 extends in the second direction, and the plurality of fourth heat exchange segments 31 are spaced apart from each other in the first direction.

Specifically, the plurality of fourth heat exchange segments 31 are sequentially connected and can form a U-shaped or S-shaped heat exchange flow channel.

For example, the number of the fourth heat exchange segment 31 can be two, three or more, and the number of the fourth heat exchange segment 31 can be designed according to the dimension of the battery assembly 200.

In the above technical solution, by disposing the second heat exchange flow channel 30 to include the plurality of sequentially connected fourth heat exchange segments 31, the structural complexity of the second heat exchange flow channel 30 can be reduced, thereby reducing the production costs of the second heat exchange flow channel 30 and further reducing the production costs of the heat exchange member 100.

According to some embodiments of the present application, as shown in FIG. 8, the heat exchange member 100 is provided with a plurality of heat exchange flow channels, the plurality of heat exchange flow channels include one first heat exchange flow channel 10 and at least one third heat exchange flow channel 40, the third heat exchange flow channel 40 is bent to be disposed in the U-shaped region 120 of the first heat exchange flow channel 10, the first heat exchange flow channel 10 and the third heat exchange flow channel 40 are bent in a same plane, and bending structures of the first heat exchange flow channel 10 and the third heat exchange flow channel 40 are the same or different.

It can be understood that the bending structures of the first heat exchange flow channel 10 and the third heat exchange flow channel 40 can be the same or different. The number of the third heat exchange flow channel 40 can be one or more, for example, the number of the third heat exchange flow channel 40 can be one, two, three or more.

For example, as shown in FIG. 8, the plurality of heat exchange flow channels include one first heat exchange flow channel 10 and one third heat exchange flow channel 40, the third heat exchange flow channel 40 and the first heat exchange flow channel 10 are in the same structure, and the third heat exchange flow channel 40 is bent to be disposed in the U-shaped region 120 of the first heat exchange flow channel 10.

Specifically, both the first heat exchange flow channel 10 and the third heat exchange flow channel 40 include the first heat exchange portion 111, the second heat exchange portion 121, the third heat exchange portion 122, and the fourth heat exchange portion 125. The plurality of first heat exchange portions 111, the third heat exchange portion 122, and the fourth heat exchange portion 125 of the first heat exchange flow channel 10 and the third heat exchange flow channel 40 all extend in the X1 direction, and the second heat exchange portion 121 extends in the Y1 direction. The fourth heat exchange portion 125, the second heat exchange portion 121, and the third heat exchange portion 122 are sequentially bent to be connected to form the U-shaped region 120 with the opening facing the side away from the origin of coordinates in the X1 direction. The plurality of first heat exchange portions 111 are included, and the plurality of first heat exchange portions 111 are arranged in the U-shaped region 120, spaced apart from each other in the Y1 direction, and sequentially bent to be connected.

The third heat exchange portion 122 of the first heat exchange flow channel 10 is arranged on the side of the plurality of first heat exchange portions 111 away from the origin of coordinates in the Y1 direction, and the fourth heat exchange portion 125 is arranged on the side of the plurality of first heat exchange portions 111 close to the origin of coordinates in the Y1 direction. The third heat exchange flow channel 40 is connected to the first heat exchange portion 111 furthest from the origin of coordinates in the Y1 direction. The third heat exchange portion 122 of the third heat exchange flow channel 40 is arranged on the side of the plurality of first heat exchange portions 111 close to the origin of coordinates in the Y1 direction, and the fourth heat exchange portion 125 is arranged on the side of the plurality of first heat exchange portions 111 away from the origin of coordinates in the Y1 direction. The third heat exchange portion 122 of the third heat exchange flow channel 40 is connected to the first heat exchange portion 111 closest to the origin of coordinates in the Y1 direction. The third heat exchange flow channel 40 is arranged between the fourth heat exchange portion 125 and the plurality of first heat exchange portions 111 of the first heat exchange flow channel 10.

In addition, the first heat exchange flow channel 10 and the third heat exchange flow channel 40 also include the first input/output segment 15 and the second input/output segment 17. The first input/output segment 15 of the first heat exchange flow channel 10 is connected to the fourth heat exchange portion 125, and the second input/output segment 17 is connected to the first heat exchange portion 111 closest to the origin of coordinates in the Y1 direction. The first input/output segment 15 of the third heat exchange flow channel 40 is connected to the first heat exchange portion 111 furthest from the origin of coordinates in the Y1 direction, and the second input/output segment 17 is connected to the fourth heat exchange portion 125.

In the above technical solution, by disposing the plurality of heat exchange flow channels, the diversity of the heat exchange flow channel can be increased, so that the arrangement of the heat exchange flow channel can be designed according to the cooling requirement of the battery 1000, thereby further improving the heat exchange effect of the heat exchange member 100 and improving the temperature uniformity of the battery 1000.

According to some embodiments of the present application, as shown in FIG. 7, the third heat exchange flow channel 40 includes the U-shaped region 120 structurally identical to the first heat exchange flow channel 10, and at least part of the first heat exchange segment 11 of the first heat exchange flow channel 10 is disposed in the U-shaped region 120 of the third heat exchange flow channel 40.

It can be understood that it is possible that the first heat exchange segment 11 of the first heat exchange flow channel 10 may be partially disposed within the U-shaped region 120 of the third heat exchange flow channel 40, or entirely disposed within the U-shaped region 120 of the third heat exchange flow channel 40.

For example, as shown in FIG. 7, the plurality of heat exchange flow channels include one first heat exchange flow channel 10 and two third heat exchange flow channels 40, and the two third heat exchange flow channels 40 and the first heat exchange flow channel 10 are in the same structure.

Specifically, the first heat exchange flow channel 10 and the two third heat exchange flow channels 40 each include the first heat exchange portion 111, the second heat exchange portion 121, the third heat exchange portion 122, and the fourth heat exchange portion 125. The fourth heat exchange portion 125, the second heat exchange portion 121, and the third heat exchange portion 122 of the first heat exchange flow channel 10 and any one of the two third heat exchange flow channels 40 are sequentially bent to be connected to form the U-shaped structure 120 with the opening facing the side away from the origin of coordinates in the X1 direction; a plurality of first heat exchange portions 111 are included, the plurality of first heat exchange portions 111 are arranged in the U-shaped region 120, and the plurality of first heat exchange portions 111 extend along a straight line in the X1 direction, and spaced apart from each other in the Y1 direction and sequentially bent to be connected; and the second heat exchange portion 121 extends in the Y1 direction, and the third heat exchange portion 122 and the fourth heat exchange portion 125 both extend in the X1 direction.

The third heat exchange portion 122 of the first heat exchange flow channel 10 is located on the side of the plurality of first heat exchange portions 111 away from the origin of coordinates in the Y1 direction, and connected to the first heat exchange portion 111 furthest from the origin of coordinates in the Y1 direction. The fourth heat exchange portion 125 is located on the side of the plurality of first heat exchange portions 111 close to the origin of coordinates in the Y1 direction.

The third heat exchange portion 122 of one third heat exchange flow channel 40 is located on the side of the plurality of first heat exchange portions 111 away from the origin of coordinates in the Y1 direction, and connected to the first heat exchange portion 111 furthest from the origin of coordinates in the Y1 direction. The third heat exchange portion 122 of the third heat exchange flow channel 40 and the first heat exchange portion 111, furthest from the origin of coordinates in the Y1 direction, of the third heat exchange flow channel 40 are located between the third heat exchange portion 122 of the first heat exchange flow channel 10 and the plurality of first heat exchange portions 111 of the first heat exchange flow channel 10. The plurality of first heat exchange portions 111 of the first heat exchange flow channel 10 are located between the first heat exchange portion 111, furthest from the origin of coordinates in the Y1 direction, of the third heat exchange flow channel 40 and the second first heat exchange portion 111 on the side, away from the origin of coordinates in the Y1 direction, of the third heat exchange flow channel 40.

The other third heat exchange flow channel 40 is located between the fourth heat exchange portion 125 of the adjacent third heat exchange flow channel 40 and the plurality of first heat exchange portions 111 of the adjacent third heat exchange flow channel 40, and the fourth heat exchange portion 125 of the third heat exchange flow channel 40 is located on the side of the plurality of first heat exchange portions 111 of the third heat exchange flow channel 40 away from the origin of coordinates in the Y1 direction. The third heat exchange portion 122 of the third heat exchange flow channel 40 is connected to the first heat exchange portion 111, closest to the origin of coordinates in the Y1 direction, of the third heat exchange flow channel 40.

In addition, the first heat exchange flow channel 10 and the two third heat exchange flow channels 40 each include the first input/output segment 15 and the second input/output segment 17, where the first input/output segment 15 and the second input/output segment 17 are respectively connected to the fourth heat exchange portion 125 and the first heat exchange portion 111.

In the above technical solution, by disposing the third heat exchange flow channel 40 to include the U-shaped region 120 with the same structure as the first heat exchange flow channel 10, and disposing at least part of the first heat exchange segment 11 of the first heat exchange flow channel 10 within the U-shaped region 120 of the third heat exchange flow channel 40, the first heat exchange flow channel 10 and at least part of the third heat exchange flow channel 40 can be arranged around each other. In this way, the winding mode of the heat exchange flow channel can be arranged according to the heat exchange requirements of each part of the battery assembly 200, thereby further improving the heat exchange effect of the heat exchange member 100 and improving the temperature uniformity of the battery 1000.

According to some embodiments of the present application, as shown in FIG. 7 and FIG. 8, the U-shaped region 120 of the second heat exchange segment 12 of the first heat exchange flow channel 10 is located in a circumferential direction of an outermost side of the heat exchange member 100.

That is to say, the U-shaped region 120 of the second heat exchange segment 12 of the first heat exchange flow channel 10 is formed as the outermost heat exchange flow channel of the heat exchange member 100. In this way, the U-shaped region 120 of the first heat exchange flow channel 10 can be configured to exchange heat with the outer peripheral edge of the battery assembly 200, thereby improving the heat exchange effect on the peripheral edge of the battery assembly 200.

In the above technical solution, by disposing the U-shaped region 120 of the second heat exchange segment 12 of the first heat exchange flow channel 10 to be located in the circumferential direction of the outermost side of the heat exchange member 100, the second heat exchange segment 12 can perform heat exchange in the circumferential direction of the outer side of the battery 1000, thereby being beneficial to alleviating the temperature difference of the battery 1000 in different environments and prolonging the service life of the battery 1000 to a certain extent.

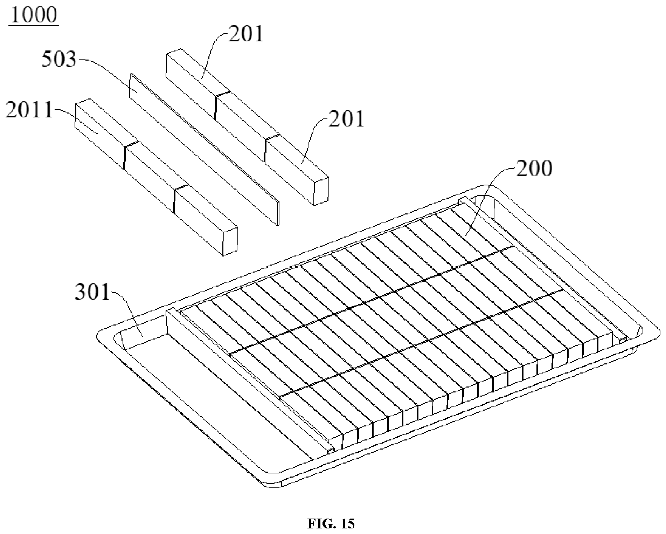

A temperature regulating member 500 according to an embodiment of the present application is described below with reference to FIG. 14 and FIG. 15. FIG. 14 is a partial sectional view of a battery 1000 according to another embodiment of the present application, and FIG. 15 is a partial schematic view of a battery 1000 according to still another embodiment of the present application.

According to some embodiments of the present application, as shown in FIG. 14 and FIG. 15, a thermal management system of the battery 1000 includes the temperature regulating member 500. The temperature regulating member 500 includes at least one of a first temperature regulating member 501 and a second temperature regulating member 502. The first temperature regulating member 501 is disposed outside the box body 301 and attached to the outer wall of the box 300. The second temperature regulating member 502 is disposed inside the box 300 and located between any side of the peripheral surface of the battery cell 201 and the box 300. At least one of the first temperature regulating member 501 and the second temperature regulating member 502 forms the heat exchange member 100.

Specifically, the temperature regulating member 500 is configured to regulate the operating temperature of the battery 1000, so that the battery can operate within a safe range. The expression "the temperature regulating member 500 includes at least one of the first temperature regulating member 501 and the second temperature regulating member 502" can be understood to mean that the temperature regulating member may include only the first temperature regulating member 501, or only the second temperature regulating member 502, or both the first temperature regulating member 501 and the second temperature regulating member 502.

The expression "at least one of the first temperature regulating member 501 and the second temperature regulating member 502 forms the heat exchange member 100" can be understood to mean that only the first temperature regulating member 501 may be formed as the heat exchange member 100, only the second temperature regulating member 502 may be formed as the heat exchange member 100, or both may be formed as the heat exchange member 100.

The expression "the second temperature regulating member 502 is disposed inside the box 300 and located between any side of the peripheral surface of the battery cell 201 and the box 300" can be understood to mean that the second temperature regulating member 502 may be disposed between the battery cell 201 and the bottom wall of the box body 301, between the battery cell 201 and the cover plate 303 of the box body 300, or between the battery cell 201 and the surrounding wall of the box 300.

When the temperature regulating member 500 includes only the first temperature regulating member 501, the first temperature regulating member 501 is formed as the heat exchange member 100. The temperature regulating member 500 is disposed outside the box body 301 and attached to the outer wall of the bottom wall of the box body 301. The bottom of the box body 301 can be equivalent to a heat spreader to uniformly transfer the heat of the heat exchange member 100 to the battery assembly 200 and perform heat exchange with the battery assembly 200. In this case, the bottom of the box body 301 can also play an isolation role, so that even when the heat exchange member 100 leaks, the internal battery cells 201 cannot be affected.

When the temperature regulating member 500 includes only the second temperature regulating member 502, the second temperature regulating member 502 is formed as the heat exchange member 100. The temperature regulating member 500 is disposed inside the box 300 of the battery 1000 and located between any side of the peripheral surface of the battery cell 201 and the box 300. In this case, the heat exchange member 100 can directly exchange heat with the battery cell 201, thereby improving the heat transfer effect of the heat exchange member 100.

When the temperature regulating member 500 includes both the first temperature regulating member 501 and the second temperature regulating member 502, the first temperature regulating member 501 is disposed outside the box body 301 and attached to the outer wall of the bottom wall of the box body 301, the second temperature regulating member 502 is disposed inside the box 300 and located between any side of the peripheral surface of the battery cell 201 and the box 300; and meanwhile, one of the first temperature regulating member 501 and the second temperature regulating member 502 may be formed as the heat exchange member 100, or both of them may be formed as the heat exchange member 100.

In the above technical solution, by disposing at least one of the first temperature regulating member 501 and the second temperature regulating member 502 to form the heat exchange member 100, the thermal management system of the battery 1000 can better manage the heat of the battery 1000, so that the battery assembly 200 can operate in a good temperature environment during the operation of the battery 1000, thereby making the operation of the battery 1000 more stable and the performance of the battery 1000 better.

According to some embodiments of the present application, as shown in FIG. 15, the thermal management system of the battery 1000 further includes a third temperature regulating member 503. The third temperature regulating member 503 is disposed inside the box body 301 and located between two adjacent battery cells 201. The structure of the third temperature regulating member 503 is the same as or different from the structure of the heat exchange member 100.

Specifically, in some embodiments, the structure of the third temperature regulating member 503 is the same as that of the heat exchange member 100; and in some other embodiments, the structure of the third temperature regulating member 503 is different from that of the heat exchange member 100. For example, the third temperature regulating member 503 may be formed as a harmonica-shaped tube plate or as a U-shaped tube, etc.

Furthermore, a plurality of third temperature regulating members 503 may be disposed, and the plurality of third temperature regulating members 503 are respectively disposed between two adjacent battery cells 201.

In the above technical solution, by disposing the third temperature regulating member 503 between two adjacent battery cells 201, the third temperature regulating member 503 can make large-area contact with the battery cell 201, which thus increases the contact area between the third temperature regulating member 503 and the battery cell 201, thereby improving the heat exchange effect of the third temperature regulating member 503 and improving the heat exchange efficiency of the entire battery 1000.

In a second aspect, embodiments of the present application provide an electrical device, including the battery 1000 according to the embodiments of the first aspect of the present application.

In the above technical solution, the performance of the battery 1000 is improved, which thus is conducive to improving the power utilization performance of the electrical device in work.

The battery 1000 according to an embodiment of the present application and the electrical device with the same are described below with reference to FIG. 3 to FIG. 13.

Referring to FIG. 3 to FIG. 13, the battery 1000 includes the heat exchange member 100, the battery assembly 200, and the box 300. The box 300 includes the box body 301. The heat exchange member 100 and the battery assembly 200 are located in the box body 301. The battery assembly 200 includes the battery cell 201.

The box body 301 is provided with the accommodating cavity 3011, and the battery cell 201 is located in the accommodating cavity 3011. The box body 301 is configured to bear and protect the battery cell 201. The groove 3014 is formed in the wall body of the box body 301 The wall body of the box body 301 is stamped to form the groove 3014. The heat exchange member 100 is embedded in the groove 3014, and the upper surface of the heat exchange member 100 in the thickness direction is flush with the opening of the groove 3014. The heat exchange member 100 is configured to exchange heat with the battery cell 201 in order to regulate the temperature of the battery cell 201.

The box body 301 includes the box main body 3012 and the cover plate 303. The box main body 3012 is a semi-closed structure with an opening at one end. The cover plate 303 is connected to the box main body 3012 and configured to close the opening. The box main body 3012 is defined by a plurality of box walls. The box main body 3012 includes the bottom plate 302 and the plurality of side plates 304 that surround the peripheral edge of the bottom plate 302 and are connected end to end in sequence. The box wall can be either the bottom plate 302 or the side plate 304. The box main body 3012 is an integrally stamped part, or the plurality of side plates 304 are all profile frames, and the bottom plate 302 is an integrally stamped part. The side plate 304 and the bottom plate 302 are made of the same material, and the side plate 304 and the bottom plate 302 are separately formed and matched by welding.

The groove 3014 is formed in at least one of the plurality of box walls, that is, the groove 3014 is formed in at least one of the bottom plate 302 or the plurality of side plates 304. Specifically, the groove 3014 is formed in the inner side of the bottom plate 302 close to the accommodating cavity 3011 or in the outer side thereof away from the accommodating cavity 3011, and when the groove 3014 is located on the inner side, the groove 3014 is in communication with the accommodating cavity 3011; and the groove 3014 is formed in the inner side of the cover plate 303 close to the accommodating cavity 3011 or in the outer side thereof away from the accommodating cavity 3011, and when the groove 3014 is located on the inner side, the groove 3014 is in communication with the accommodating cavity 3011.

The heat exchange member 100 is embedded in the groove 3014. Specifically, the heat exchange member 100 can be embedded on the cover plate 303 and the bottom plate 302. Thermally conductive adhesive can be applied to the side surface of the heat exchange member 100 close to the battery cell 201 to increase the heat exchange efficiency of the heat exchange member 100. The heat exchange member 100 includes one or more heat exchange tubes, and fluid flows inside the heat exchange tubes. When the temperature of the battery 1000 is low, the temperature of the fluid is higher than that of the battery 1000. The heat of the fluid can be transferred to the battery 1000 to rise the temperature of the battery 1000, thereby keeping the operating temperature of the battery 1000 within a suitable range and prolonging the operating time of the battery 1000. Conversely, when the temperature of the battery 1000 is too high, the temperature of the fluid is lower than that of the battery 1000, the heat of the battery 1000 can be transferred into the fluid to lower the temperature of the battery 1000, thus keeping the operating temperature of the battery 1000 within a suitable range and prolonging the operating time of the battery 1000.

The box body 300 also includes the beam body 306, and the beam body 306 is disposed inside the box body 301. The beam body 306 is an expansion beam or a non-metallic beam body. Part of the beam body 306 protrudes to the inner side of the hollow beam to form the first recess 3061. The channel 305 allowing the heat exchange tube to pass through is constructed between the beam body 306 and the box body 301, that is, the first recess 3061 is constructed as the channel 305.

The heat exchange member 100 according to four embodiments of the present application will be described below with reference to FIG. 5 to FIG. 13.

### Embodiment 1

Specifically, as shown in FIG. 9, the heat exchange member 100 includes two heat exchange tubes, and the first heat exchange flow channel 10 is defined in each of the two heat exchange tubes. The two first heat exchange flow channels 10 are spaced apart from each other in the Y1 direction and are symmetrically arranged in the X1 direction of the battery assembly 200. Each first heat exchange flow channel 10 includes: three first heat exchange portions 111, one second heat exchange portion 121, one third heat exchange portion 122, one fourth heat exchange portion 125, and one third heat exchange segment 13. The fourth heat exchange portion 125, the second heat exchange portion 121, and the third heat exchange portion 122 are sequentially connected to form the U-shaped region 120, and the three first heat exchange portion 111 are bent to be arranged in the U-shaped region 120.

Specifically, both the second heat exchange portion 121 and the first heat exchange portion 111 extend linearly in the X1 direction and are spaced apart from each other in the Y1 direction, and the second heat exchange portion 121 is arranged on the side of the first heat exchange portion 111 close to the edge position of the battery 1000 in the Y1 direction; the third heat exchange portion 122, the fourth heat exchange portion 125, and the third heat exchange segment 13 all extend linearly in the Y1 direction, and the third heat exchange portion 122 is arranged on the side of the three first heat exchange portions 111 close to the origin of coordinates in the X1 direction, and connected to the end of the second heat exchange portion 121 close to the origin of coordinates in the X1 direction and the end of the first heat exchange portion 111, furthest from the second heat exchange portion 121, close to the origin of coordinates in the X1 direction, the fourth heat exchange portion 125 is arranged on the side of the three first heat exchange portions 111 away from the origin of coordinates in the X1 direction and connected to the end of the second heat exchange portion 121 away from the origin of coordinates in the X1 direction, and the third heat exchange segment 13 is arranged on the side of the plurality of first heat exchange portions 111 away from the origin of coordinates in the X1 direction and one end of the third heat exchange segment 13 is connected to the end of the first heat exchange portion 111, closest to the second heat exchange portion 121, away from the origin of coordinates in the X1 direction.

When the battery assembly 200 is heated and kept warm, the flow direction of the first heat exchange flow channel 10 is sequentially the fourth heat exchange portion 125, the second heat exchange portion 121, the third heat exchange portion 122, and the first heat exchange portion 111. When the battery assembly 200 is cooled, the flow direction of the first heat exchange flow channel 10 is sequentially the third heat exchange segment 13, the first heat exchange portion 111, the third heat exchange portion 122, the second heat exchange portion 121, and the fourth heat exchange portion 125.

Furthermore, the heat exchange tube is formed by bending a single heat exchange tube. The connection positions between the fourth heat exchange portion 125 and the second heat exchange portion 121, the second heat exchange portion 121 and the third heat exchange portion 122, the third heat exchange portion 122 and the first heat exchange portion 111, and the first heat exchange portion 111 and the third heat exchange segment 13 are all 90° arc bends, and the connection positions between the plurality of first heat exchange portions 111 are all 180° arc bends.

In addition, two ends of the heat exchange tube are respectively formed as a first tube portion and a second tube portion. The first tube portion and the second tube portion serve as a water input segment and a water output segment of the heat exchange flow channel, respectively. One end of the first tube portion is connected to a first flow channel interface 22 of a current collector 20 to form a first inlet/outlet of the heat exchange flow channel, and the other end is bent to be connected to the fourth heat exchange portion 125. One end of the second tube portion is connected to a second flow channel interface 23 of the current collector 20 to form a second inlet/outlet of the heat exchange flow channel, and the other end is bent to be connected to the third heat exchange segment 13.

### Embodiment 2

Referring to FIG. 7, the structure of this embodiment is roughly the same as that of Embodiment 1, where the same components are referred to by the same reference numerals. The only difference is that the heat exchange member 100 described in Embodiment 1 includes only two first heat exchange flow channels 10, while the heat exchange member 100 in Embodiment 2 includes one first heat exchange flow channel 10 and two third heat exchange flow channels 40.

Specifically, the two third heat exchange flow channels 40 have the same structure as the first heat exchange flow channel 10. The first heat exchange flow channel 10 and the two third heat exchange flow channels 40 both include the first heat exchange portion 111, the second heat exchange portion 121, the third heat exchange portion 122, and the fourth heat exchange portion 125. The fourth heat exchange portion 125, the second heat exchange portion 121, and the third heat exchange portion 122 of the first heat exchange flow channel 10 and any one of the two third heat exchange flow channels 40 are sequentially bent to be connected to form the U-shaped region 120 with the opening facing the side away from the origin of coordinates in the X1 direction; a plurality of first heat exchange portions 111 are included, the plurality of first heat exchange portions 111 are arranged in the U-shaped region 120, and the plurality of first heat exchange portions 111 extend along a straight line in the X1 direction, and spaced apart from each other in the Y1 direction and sequentially bent to be connected; and the second heat exchange portion 121 extends in the Y1 direction, and the third heat exchange portion 122 and the fourth heat exchange portion 125 both extend in the X1 direction.

The third heat exchange portion 122 of the first heat exchange flow channel 10 is located on the side of the plurality of first heat exchange portions 111 away from the origin of coordinates in the Y1 direction, and connected to the first heat exchange portion 111 furthest from the origin of coordinates in the Y1 direction. The fourth heat exchange portion 125 is located on the side of the plurality of first heat exchange portions 111 close to the origin of coordinates in the Y1 direction.

The third heat exchange portion 122 of one third heat exchange flow channel 40 is located on the side of the plurality of first heat exchange portions 111 away from the origin of coordinates in the Y1 direction, and connected to the first heat exchange portion 111 furthest from the origin of coordinates in the Y1 direction. The third heat exchange portion 122 of the third heat exchange flow channel 40 and the first heat exchange portion 111, furthest from the origin of coordinates in the Y1 direction, of the third heat exchange flow channel 40 are located between the third heat exchange portion 122 of the first heat exchange flow channel 10 and the plurality of first heat exchange portions 111 of the first heat exchange flow channel 10. The plurality of first heat exchange portions 111 of the first heat exchange flow channel 10 are located between the first heat exchange portion 111, furthest from the origin of coordinates in the Y1 direction, of the third heat exchange flow channel 40 and the second first heat exchange portion 111 on the side, away from the origin of coordinates in the Y1 direction, of the third heat exchange flow channel 40.

The other third heat exchange flow channel 40 is located between the fourth heat exchange portion 125 of the adjacent third heat exchange flow channel 40 and the plurality of first heat exchange portions 111 of the adjacent third heat exchange flow channel 40, and the fourth heat exchange portion 125 of the third heat exchange flow channel 40 is located on the side of the plurality of first heat exchange portions 111 of the third heat exchange flow channel 40 away from the origin of coordinates in the Y1 direction. The third heat exchange portion 122 of the third heat exchange flow channel 40 is connected to the first heat exchange portion 111, closest to the origin of coordinates in the Y1 direction, of the third heat exchange flow channel 40.

In addition, the first heat exchange flow channel 10 and the two third heat exchange flow channels 40 each include the first input/output segment 15 and the second input/output segment 17, where the first input/output segment 15 and the second input/output segment 17 are respectively connected to the fourth heat exchange portion 125 and the first heat exchange portion 111.

### Embodiment 3

Referring to FIG. 8, the structure of this embodiment is roughly the same as that of Embodiment 1, where the same components are referred to by the same reference numerals. The only difference is that the heat exchange member 100 described in Embodiment 1 includes only two first heat exchange flow channels 10, while the heat exchange member 100 in Embodiment 3 includes one first heat exchange flow channel 10 and one third heat exchange flow channel 40.

Specifically, both the first heat exchange flow channel 10 and the third heat exchange flow channel 40 include the first heat exchange portion 111, the second heat exchange portion 121, the third heat exchange portion 122, and the fourth heat exchange portion 125. The plurality of first heat exchange portions 111, the third heat exchange portion 122, and the fourth heat exchange portion 125 of the first heat exchange flow channel 10 and the third heat exchange flow channel 40 all extend in the X1 direction, and the second heat exchange portion 121 extends in the Y1 direction. The fourth heat exchange portion 125, the second heat exchange portion 121, and the third heat exchange portion 122 are sequentially bent to be connected to form the U-shaped region 120 with the opening facing the side away from the origin of coordinates in the X1 direction. The plurality of first heat exchange portions 111 are included, and the plurality of first heat exchange portions 111 are arranged in the U-shaped region 120, spaced apart from each other in the X1 direction, and sequentially bent to be connected.

The third heat exchange portion 122 of the first heat exchange flow channel 10 is arranged on the side of the plurality of first heat exchange portions 111 away from the origin of coordinates in the Y1 direction, and the fourth heat exchange portion 125 is arranged on the side of the plurality of first heat exchange portions 111 close to the origin of coordinates in the Y1 direction. The third heat exchange flow channel 40 is connected to the first heat exchange portion 111 furthest from the origin of coordinates in the Y1 direction. The third heat exchange portion 122 of the third heat exchange flow channel 40 is arranged on the side of the plurality of first heat exchange portions 111 close to the origin of coordinates in the Y1 direction, and the fourth heat exchange portion 125 is arranged on the side of the plurality of first heat exchange portions 111 away from the origin of coordinates in the Y1 direction. The third heat exchange portion 122 of the third heat exchange flow channel 40 is connected to the first heat exchange portion 111 closest to the origin of coordinates in the Y1 direction. The third heat exchange flow channel 40 is arranged between the fourth heat exchange portion 125 and the plurality of first heat exchange portions 111 of the first heat exchange flow channel 10.

In addition, the first heat exchange flow channel 10 and the third heat exchange flow channel 40 also include the first input/output segment 15 and the second input/output segment 17. The first input/output segment 15 of the first heat exchange flow channel 10 is connected to the fourth heat exchange portion 125, and the second input/output segment 17 is connected to the first heat exchange portion 111 closest to the origin of coordinates in the Y1 direction. The first input/output segment 15 of the third heat exchange flow channel 40 is connected to the first heat exchange portion 111 furthest from the origin of coordinates in the Y1 direction, and the second input/output segment 17 is connected to the fourth heat exchange portion 125.

### Embodiment 4

Referring to FIG. 13, the structure of this embodiment is roughly the same as that of Embodiment 1, where the same components are referred to by the same reference numerals. The only difference is that the heat exchange member 100 described in Embodiment 1 includes only two first heat exchange flow channels 10, while the heat exchange member 100 in Embodiment 4 includes two first heat exchange flow channels 10 and one second heat exchange flow channel 30.

Specifically, the second heat exchange flow channel 30 is disposed between the two first heat exchange flow channels 10, and the structure of the second heat exchange flow channel 30 is different from the structure of the first heat exchange flow channel 10. The second heat exchange flow channel 30 includes two fourth heat exchange segments 31 extending linearly in the X1 direction, and the two fourth heat exchange segments 31 are spaced apart from each other in the Y1 direction and bent to be connected to form the U-shaped heat exchange flow channel.

In the description of the specification, the explanation with reference to the terms such as "some embodiments", "optionally", "furthermore", or "some examples" means that specific features, structures, materials, or characteristics described in combination with the embodiment(s) or example(s) are included in at least one embodiment or example of the present application. In the specification, the illustrative expressions of the above terms do not necessarily refer to the same embodiment or example. Moreover, the specific features, structures, materials, or characteristics described herein may be combined in any one or more embodiments or examples in a suitable manner.

Although the embodiments of the present application have been shown and described, those of ordinary skill in the art will understand that various changes, modifications, substitutions and modifications can be made to these embodiments without departing from the principles and purposes of the present application. The scope of the present application is defined by the claims and their equivalents.

## Claims

1. A battery, comprising:
a box, wherein the box comprises a box body, the box body is provided with an accommodating cavity, and a groove is formed in a wall body of the box body;
a battery cell, wherein the battery cell is disposed in the accommodating cavity; and
a heat exchange member, wherein at least part of the heat exchange member is embedded in the groove and attached to the wall body for heat exchange with the battery cell.

2. The battery according to claim 1, wherein the heat exchange member is completely accommodated in the groove, and an upper surface of the heat exchange member in a thickness direction is flush with an opening of the groove.

3. The battery according to claim 1, wherein the box body comprises a box main body, the box main body is defined, in an enclosing mode, by a plurality of box walls, at least one of the plurality of box walls forms the groove, the groove is located on an inner side of the box wall close to the accommodating cavity and/or on an outer side thereof away from the accommodating cavity, and when the groove is located on the inner side, the groove is in communication with the accommodating cavity.

4. The battery according to claim 3, wherein the box main body comprises a bottom plate and a plurality of side plates arranged around a periphery of the bottom plate and connected end to end in sequence, the groove is formed in the bottom plate, and the box main body is an integrally stamped part; or, the plurality of side plates are all profile frames, and the bottom plate is an integrally stamped part.

5. The battery according to claim 1, wherein the box body comprises:
a box main body, which is in a semi-closed structure with an opening at one end; and
a cover plate, which is connected to the box main body and closes the opening, the groove is formed in the cover plate, and the groove is located on an inner side of the cover plate close to the accommodating cavity or on an outer side thereof away from the accommodating cavity; and when the groove is located on the inner side, the groove is in communication with the accommodating cavity.

6. The battery according to claim 5, wherein the cover plate is an integrally stamped part.

7. The battery according to claim 3 or 5, wherein the box main body comprises a bottom plate and a plurality of side plates arranged around a periphery of the bottom plate and connected end to end in sequence, and the side plate and the bottom plate are made of a same material and are separately formed and matched by welding.

8. The battery according to any one of claims 1 to 7, wherein the heat exchange member comprises at least one heat exchange tube, and when a plurality of heat exchange tubes are disposed, each heat exchange tube defines a heat exchange flow channel on an inner side thereof.

9. The battery according to claim 8, wherein the heat exchange tube is formed by bending a single tube, and optionally, the heat exchange tube is bent in an arc at a bending position.

10. The battery according to claim 8, wherein the groove is in clearance fit with the heat exchange tube and extends in a length direction of the heat exchange tube.

11. The battery according to claim 8, wherein the heat exchange tube is a flat tube or a harmonica-shaped tube.

12. The battery according to claim 8, wherein the box further comprises a beam body, the beam body is disposed in the box body, and a channel allowing the heat exchange tube to pass through is constructed between the beam body and the box body.

13. The battery according to claim 12, wherein the beam body is provided with a first recess, and/or the box body is provided with a second recess, and the first recess and/or the second recess are/is constructed as the channel.

14. The battery according to claim 13, wherein the beam body is a hollow beam, and part of the beam body protrudes to an inner side of the hollow beam to form the first recess.

15. The battery according to claim 12, wherein the beam body is an expansion beam, the expansion beam can expand or contract in a second direction, or the beam body is a non-metallic beam body.

16. The battery according to any one of claims 1 to 15, wherein the heat exchange member comprises a first heat exchange flow channel, and the first heat exchange flow channel comprises a first heat exchange segment and a second heat exchange segment; and the second heat exchange segment is bent to form a U-shaped region, and the first heat exchange segment is bent to be disposed in the U-shaped region, and bent to be connected to the second heat exchange segment.

17. The battery according to claim 16, wherein the second heat exchange segment is located on an outermost side of the first heat exchange flow channel in a circumferential direction.

18. The battery according to claim 16, wherein the first heat exchange segment and the second heat exchange segment are bent in a same plane.

19. The battery according to any one of claims 16 to 18, wherein the first heat exchange segment is connected downstream of the second heat exchange segment in a fluid flow direction; or, the heat exchange member is configured such that: when a battery assembly of the battery is heated, the first heat exchange segment is connected downstream of the second heat exchange segment in the fluid flow direction; and when the battery assembly of the battery is cooled, the first heat exchange segment is connected upstream of the second heat exchange segment in the fluid flow direction.

20. The battery according to claim 16, wherein the heat exchange member is provided with one or more heat exchange flow channels, when a plurality of heat exchange flow channels are disposed, the plurality of heat exchange flow channels are spaced apart from each other in a first direction or arranged around each other, at least one of the heat exchange flow channels is formed as the first heat exchange flow channel, and the plurality of heat exchange flow channels are arranged in parallel.

21. The battery according to claim 20, wherein the plurality of heat exchange flow channels are spaced apart from each other in the first direction, and two heat exchange flow channels located at two ends in the first direction are both the first heat exchange flow channel; and the two first heat exchange flow channels are arranged symmetrically about a centerline of the heat exchange member in a second direction, wherein the second direction and the first direction are arranged at an angle.

22. The battery according to claim 20, wherein the plurality of heat exchange flow channels are arranged symmetrically about the centerline of the heat exchange member in the second direction.

23. The battery according to claim 20, wherein the plurality of heat exchange flow channels further comprise at least one second heat exchange flow channel, and the second heat exchange flow channel is disposed between the two first heat exchange flow channels, wherein a structure of any second heat exchange flow channel is same as or different from a structure of the first heat exchange flow channel.

24. The battery according to claim 21, wherein the second heat exchange flow channel comprises a plurality of fourth heat exchange segments, and the plurality of fourth heat exchange segments are connected in sequence, wherein the fourth heat exchange segment extends in the second direction, and the plurality of fourth heat exchange segments are spaced apart from each other in the first direction.

25. The battery according to claim 20, wherein the heat exchange member is provided with a plurality of heat exchange flow channels, and the plurality of heat exchange flow channels comprise one first heat exchange flow channel and at least one third heat exchange flow channel; the third heat exchange flow channel is bent to be disposed in the U-shaped region of the first heat exchange flow channel, and the first heat exchange flow channel and the third heat exchange flow channel are bent in a same plane; and bending structures of the first heat exchange flow channel and the third heat exchange flow channel are same or different.

26. The battery according to claim 25, wherein the third heat exchange flow channel comprises a U-shaped region structurally identical to the first heat exchange flow channel, and at least part of the first heat exchange segment of the first heat exchange flow channel is disposed in the U-shaped region of the third heat exchange flow channel.

27. The battery according to claim 25, wherein the U-shaped region of the first heat exchange flow channel is located in a circumferential direction of an outermost side of the heat exchange member.

28. An electrical device, comprising: the battery according to any one of claims 1 to 27.
